(19) Europäisches Patentamt
European Patent Office
Office européen des brevets

(11) EP 2 450 388 B1

# (12) EUROPEAN PATENT SPECIFICATION

(45) Date of publication and mention of the grant of the patent:
**11.01.2017 Bulletin 2017/02**

(21) Application number: **10794172.6**

(22) Date of filing: **30.06.2010**

(51) Int Cl.:
***C08G 18/42*** (2006.01) ***C08K 5/00*** (2006.01)
***C08L 75/00*** (2006.01) ***C08L 101/16*** (2006.01)
***C08G 63/91*** (2006.01) ***C08G 18/73*** (2006.01)
***C08G 18/75*** (2006.01) ***C08L 67/04*** (2006.01)
***C08L 75/06*** (2006.01)

(86) International application number:
**PCT/JP2010/061116**

(87) International publication number:
**WO 2011/002004 (06.01.2011 Gazette 2011/01)**

## (54) POLYLACTIC ACID RESIN, METHOD FOR PRODUCING POLYLACTIC ACID RESIN, POLYLACTIC ACID RESIN COMPOSITION, STEREOCOMPLEX POLYLACTIC ACID RESIN COMPOSITION, AND METHOD FOR PRODUCING STEREOCOMPLEX POLYLACTIC ACID RESIN COMPOSITION

POLYMILCHSÄUREHARZ, VERFAHREN ZUR HERSTELLUNG EINES POLYMILCHSÄUREHARZES, POLYMILCHSÄUREHARZZUSAMMENSETZUNG, POLYMILCHSÄUREHARZ-STEREOKOMPLEX-ZUSAMMENSETZUNG UND VERFAHREN ZUR HERSTELLUNG EINER POLYMILCHSÄUREHARZ-STEREOKOMPLEX-ZUSAMMENSETZUNG

RÉSINE D'ACIDE POLYLACTIQUE, PROCÉDÉ DE PRODUCTION D'UNE RÉSINE D'ACIDE POLYLACTIQUE, COMPOSITION DE RÉSINE D'ACIDE POLYLACTIQUE, COMPOSITION DE RÉSINE D'ACIDE POLYLACTIQUE STÉRÉOCOMPLEXE, ET PROCÉDÉ DE PRODUCTION D'UNE COMPOSITION DE RÉSINE D'ACIDE POLYLACTIQUE STÉRÉOCOMPLEXE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.06.2009 JP 2009156063**
**05.11.2009 JP 2009254431**

(43) Date of publication of application:
**09.05.2012 Bulletin 2012/19**

(73) Proprietor: **Mitsui Chemicals, Inc.**
**Tokyo 105-7117 (JP)**

(72) Inventors:
- **OGAWA, Ryohei**
**Sodegaura-shi**
**Chiba 299-0265 (JP)**
- **USUGI, Shinichi**
**Sodegaura-shi**
**Chiba 299-0265 (JP)**
- **MIZUMA, Hirokazu**
**Sodegaura-shi**
**Chiba 299-0265 (JP)**
- **TOTANI, Yoshiyuki**
**Sodegaura-shi**
**Chiba 299-0265 (JP)**
- **TSUJI, Masashi**
**Sodegaura-shi**
**Chiba 299-0265 (JP)**
- **HASEGAWA, Akira**
**Sodegaura-shi**
**Chiba 299-0265 (JP)**
- **HORI, Hideshi**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(56) References cited:
**WO-A1-2008/120807** **WO-A1-2008/123565**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

WO-A1-2009/045881
WO-A1-2009/110472
JP-A- 9 012 688
JP-A- 9 095 603
JP-A- 2002 356 543

## Description

TECHNICAL FIELD

The invention [1] relates to a polylactic acid-based resin, a production process thereof and uses thereof.

The present invention [2] relates to a polylactic acid resin composition having improved stereocomplex formation capability and molded articles formed from the composition. More specifically, it relates to molded articles obtainable by molding a specific polylactic acid resin blend, and having excellent heat resistance and mechanical properties.

The present invention [3] relates to a stereocomplex polylactic acid resin composition (Z) having a high weight average molecular weight (Mw) and satisfying both of a high stereo crystal rate (S) and high heat stability simultaneously, and excellent heat resistance, heat stability and mechanical properties, and also relates to a production process thereof with excellent productivity and operating characteristics.

TECHNICAL BACKGROUND

Recently, a concern for ecology has been increased. This is indicated by promoting the purchase of materials easy on the environment by the Law on Promoting Green Purchasing, and promoting the recycle of plastic materials and the recycle of electrical appliances by the Container and Packaging Recycling Law and the Home Appliance Recycling Law. In such a series of flows, the demand for biodegradable polymers having a low environmental load has been increased day by day.

Furthermore, in recent years, biodegradable polymers which are decomposed in the environment by a function of microorganisms present in the earth or water have been noticed from the viewpoint of global environmental preservation and various biodegradable polymers have been developed. Of various biodegradable polymers, known examples of a biodegradable polymer capable of being melt molded are polyhydroxy butyrate polycaprolactone, an aliphatic polyester formed from an aliphatic dicarboxylic acid component such as succinic acid or adipic acid and a glycol component such as ethylene glycol and butane diol, and a polylactic acid resin.

A polylactic acid which is one of biodegradable polymers has high transparency, toughness and a property such that it is easily hydrolyzed in the presence of water. In the case of using as a versatile resin, the polylactic acid is easy on the environment because it decomposes without contaminating the environment after disposal thereof. In the case of keeping the polylactic acid in a living body as a material for medical treatment, since it is decomposed and absorbed in a living body without affecting toxicity in a living body after the object thereof has been attained as a material for medical treatment, it is easy on a living body. However, from the viewpoint of heat resistance, it is difficulty said that the use of the polylactic acid is sufficient as a versatile resin although it has a relatively high glass transition temperature and a high melting point among biodegradable polymers. Therefore, the advent of a material having both of biodegradable properties and heat resistance has been earnestly desired.

It is conventionally known that poly(L-lactic acid) and poly(D-lactic acid) are blended to form an aggregate which is called as a "stereocomplex". This stereocomplex has a melting point of about 230°C which is about 50°C higher than the melting point of a polylactic acid homopolymer. (Patent document 1, Patent document 2, Non-patent document 1 and Patent document 3). It is known that the polylactic acid resin stereocomplex shows a high melting point and high crystallinity, and prepares molded articles useful as fibers, films and resin molded articles.

According to Non-patent document 1, when the heat resistance tends to be improved by blending poly(L-lactic acid) and poly (D-lactic acid), the blend proportion of poly (L-lactic acid) and poly(D-lactic acid) is limited to be in a narrow range of, for example, from 60 : 40 to 40 : 60, preferably 50 : 50.

As long as the blend proportion is in the above range, even if the melting point derived from the stereocomplex is expressed, the melting point derived from the poly(L-lactic acid) [or poly(D-lactic acid)] homopolymer is not quenched and the heat resistance is not improved substantially. In consideration of acquisition of a raw material of D-lactic acid which material is not produced in an industrial scale, it is preferred that the amount of the D-lactic acid used is decreased. In order to favorably apply to versatile uses such as fibers and containers, the polymer blending method that the amount of the poly(D-lactic acid) used is large is not necessarily good. Moreover, even if the poly(L-lactic acid) having a high molecular weight and the poly(D-lactic acid) having a high molecular weight are blended even in the blend proportion of 50 : 50, the melting point of the polylactic acid homopolymer is not quenched. Accordingly, it is difficult to prepare a material having improved heat resistance and sufficient mechanical strength by the above blend system. Non-patent document 2 discloses a block copolymer of poly (L-lactic acid) and poly(D-lactic acid). It discloses that L-lactide and D-lactide are subjected to living ring-opening polymerization using aluminum triisopropoxide as an initiator to synthesize a diblock copolymer of poly(L-lactic acid) and poly(D-lactic acid) formed of a L-lactic acid sequence and a D-lactic acid sequence.

Specifically, L-lactide is polymerized in a toluene solution in the presence of aluminum triisopropoxide at 90°C and after the completion of the polymerization, D-lactide dissolved in toluene is dropped and further the polymerization

is continued to prepare a block copolymer. The composition of the block copolymer is varied in accordance with the reaction conditions and the ratio of the monomer to the initiator. The block copolymer having a composition of L-lactic acid and D-lactic acid of 83/17 to 33/67 (% by weight) is synthesized. These block copolymers have a weight average molecular weight (Mw), determined from the GPC results, of about 16,000 to 24,000 and a melting point, determined by DSC, of about 205°C. As described above, since these copolymers have too low Mw and thereby the mechanical strength is low even if the heat resistance is improved, they cannot apply to versatile uses such as fibers and containers.

In order to solve the above problems, there have been some high molecular weight polylactic acid block copolymers made of a poly (L-lactic acid) segment and a poly (D-lactic acid) segment. For example, Patent document 4 and Patent document 5 disclose a process for producing a high molecular weight block copolymer by mixing poly (L-lactic acid) and poly (D-lactic acid) and then solid phase polymerized. However, it is difficultly said that the solid phase polymerization is useful from the viewpoint of productivity because it needs a long period of time to carry out the solid phase polymerization. Furthermore, Patent document 6 discloses a process for increasing the molecular weight by bonding, with a polyfunctional compound, a block copolymer formed of a poly (L-lactic acid) segment having diols derived from polylactic acid at both ends and a poly(D-lactic acid) segment. This specification discloses that diisocyanate is used in the example and the bonding of diols at the both ends and diisocyanate form a urethane bonding with low heat stability.

In order to prepare a polylactic acid resin stereocomplex, it is necessary to mix poly (L-lactic acid) and poly (D-lactic acid) in a solution state or in a molten state (Patent document 1, Patent document 2, Non-patent document 1 and Non-patent document 3).

It is preferred to use a high molecular weight polylactic acid in order to attain the practical strength as molded articles. However, Non-patent document 1 discloses that it is difficult to prepare a stereocomplex polylactic acid from the combination of poly(L-lactic acid) and poly(D-lactic acid) each having a high molecular weight, particularly the combination of polylactic acids each having a high molecular weight of not less than 100,000.

In order to prepare a stereocomplex polylactic acid having a high stereocomplex proportion, namely, having a high stereo crystal rate (S) from the combination of high molecular weight polylactic acids, it is necessary to keep the mixed solution in a solution state for a long period of time in the case of mixing them in a solution state, or it is necessary to knead for a long period of time in the case of mixing them in a molten state. However, these procedures cause a problem such that the molecular weights are decreased and thereby the molecular weights of the poly(L-lactic acid) and poly(D-lactic acid), which are raw materials, cannot be kept.

Furthermore, Patent document 7 discloses a method of heat treating a mixture of poly (L-lactic acid) and poly (D-lactic acid) at a high temperature of 260°C to 300°C but the method needs high energy and has the following possibilities that the molecular weight is lowered by thermal decomposition of the polylactic acids and further mechanical properties may be lowered or coloring may be induced.

As described above, the molecular weight and the stereo crystal rate (S) are in a trade-off relation. The advent of a stereocomplex polylactic acid having both of a high molecular weight and a high stereo crystal rate (S) simultaneously has been particularly desired from the viewpoints of heat resistance, heat stability and mechanical properties.

In measurement with a differential scanning calorimeter (DSC), two peaks are measured. One peak is a melting peak of a low melting point crystal having a peak temperature of not higher than 190°C corresponding to melting of a homogeneous phase crystal and the other peak is a melting peak of a high melting point crystal having a peak temperature of not lower than 190°C corresponding to melting of stereocomplex phase crystals. The fact that the peak area of melting of crystals having a low melting point is larger than that of melting of crystals having a high melting point indicates a low stereo crystal rate (S). The presence of the homogenous crystal is a factor in inhibiting the high heat resistance inherent in the stereocomplex. Meanwhile, it is known that the high stereo crystal rate (S) is a factor in high heat resistance of the polylactic acid and has a merit of improving the transparency and surface gloss properties which are properties inherent in the polylactic acid.

For preparing the stereocomplex polylactic acid having a high molecular weight, there is a process of subjecting poly (L-lactic acid) and poly (D-lactic acid) each having a weight average molecular weight of about several ten thousand to solid phase polymerization and thereby performing stereo-blocking (Patent document 8). The stereocomplex polylactic acid prepared in the example has a weight average molecular weight of about one hundred and several ten thousand, and further the increase of molecular weight is desired from the viewpoint of mechanical properties. In Patent document 8 does not provide the specific description on the stereo crystal rate (S).

Meanwhile, for preparing a stereocomplex polylactic acid having a high molecular weight and a high stereo crystal rate, Patent document 9 discloses a process for preparing from a mixture of a homo poly(L-lactic acid) (PLLA) and a diblock copolymer (PLLA-block-PDLA), or from a mixture of a homo poly (D-lactic acid) (PDLA) and a diblock copolymer (PLLA-block-PDLA).

In the example of Patent document 9, a stereocomplex polylactic acid having a weight average molecular weight of 219,000 is prepared, but a resultant composition is allowed to stand at 180°C in a hot air circulating dryer for 1 hour. It is expected that the stereo crystal rate (S) will be improved by the heat treatment while the molecular weight will be decreased by this heat treatment.

For improving the stereo crystal rate (S), namely enhancing the generation of a stereocomplex crystal phase, Patent document 10 discloses application of a crystallization nucleating agent and Patent document 11 discloses application of a crystallization accelerating agent. The application with these additives has a factor in decreasing the weight average molecular weight at the time of melting and decreasing the transparency and surface gloss properties which are merits inherent in polylactic acids. Since the cost is increased using these additives, a stereocomplex polylactic acid having a high stereo crystal rate (S) prepared without using the additives has been desired.

For the usable form of the stereocomplex polylactic acid, there are molded articles prepared by melting with heating. Through the step, it is considered that the stereo crystal rate (S) is increased after molding processing, but there is a fear that the molecular weight is decreased or the mechanical properties are decreased by melting with heating.

Under the circumstances, for improving heat stability, there are known application of a phosphorus-based catalyst quencher (Patent document 12), application of an inorganic filler or an organic filler (Patent document 13) and application of a crystal nucleating agent such as talc, etc (Patent document 14). The mixing of various additives, which are foreign matters for the polylactic acid, sometimes decreases the mechanical properties and impairs the transparency or the surface gloss properties which are merits inherent in the polylactic acids. Since the cost is increased using these additives, a stereocomplex polylactic acid having a high heat stability prepared without using the additives has been desired.

The present inventors disclose a polyester resin having a practically sufficient high molecular weight and a high degree of crystallinity which is prepared by reaction of a polylactic acid and a polyisocyanate compound in the presence of an amidation catalyst, and which is favorably used in the field that biodegradable properties are required, such as films and the like (Patent document 15).

PRIOR ART

PATENT DOCUMENT

Patent document 1: JP-A-S61(1986)-36321
Patent document 2: JP-A-S63(1988)-241024
Patent document 3: JP-A-2000-17163
Patent document 4: JP-A-2003-238672
Patent document 5: JP-A-2006-28336
Patent document 6: JP-A-2002-356543
Patent document 7: JP-A-2007-191548
Patent document 8: JP-A-2009-40997
Patent document 9: JP-A-2008-248022
Patent document 10: JP-A-2003-192884
Patent document 11: JP-A-2007-191630
Patent document 12: JP-A-2009-249518
Patent document 13: JP-A-2006-265486
Patent document 14: JP-B-3410075
Patent document 15: WO2009/11047


NON-PATENT DOCUMENT

Non-patent document 1: Macromolecules 1991, 24, 5651.
Non-patent document 2: Makromol. Chem. 1990, 191, 481.


SUMMARY OF THE INVENTION

SUBJECT TO BE SOLVED BY THE INVENTION

As the results of testing the examples of Patent document 6 by the present inventors, it is found that in a high molding temperature region higher than the melting point of the stereocomplex, thermal decomposition which will be decomposition of a urethane bond is caused to decrease the molecular weight.

It is an object of the invention [1] to provide a polylactic acid-based resin (I) having a high molecular weight,

high heat resistance and an amide bond in its molecular chain, a production process thereof and its uses.

It is an object of the present invention [2] to provide a polylactic acid resin composition (C) having high stereocomplex forming capability, and a molded article, formed from the composition (C), having excellent heat resistance and mechanical properties.

It is an object of the present invention [3] to provide a stereocomplex polylactic acid resin composition (Z) satisfying a high weight average molecular weight (Mw), a high stereo crystal rate (S) and high heat stability simultaneously and also having excellent heat resistance, heat stability and mechanical properties, and a production process thereof with excellent productivity and operability.

MEANS FOR SOLVING THE SUBJECT

The present inventors have been earnestly studied and found that a polylactic acid-based resin (I) having an amide bond in its molecular chain is obtainable through a specific reaction step and has a high molecular weight, a high melting point and high heat stability. Thus, the invention [1] has been accomplished. Furthermore, they found that a polylactic acid resin having a high molecular weight and excellent heat stability can be produced through a specific reaction step at a small cost. The invention [1] has been accomplished.

That is to say, the invention [1] provides the following subjects:

[1] A polylactic acid-based resin (I) which is obtainable by allowing a polyisocyanate compound to react with a mixture comprising at least a poly (L-lactic acid) in which the percentage of the terminal functional group which is a carboxyl group exceeds 50 % and a poly(D-lactic acid) in which the percentage of the terminal functional group which is a carboxyl group exceeds 50 %, and which comprises a constituting unit represented by the following formula (1);

[Chemical formula 1]

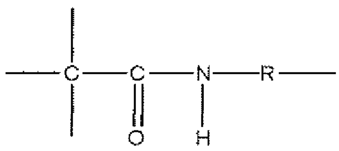

(1)

(In the formula (1), R is a polyisocyanate residue and represents an aliphatic hydrocarbon group having 1 to 20 carbon atoms, a hydrocarbon group having an alicyclic structure and 3 to 20 carbon atoms or a hydrocarbon group having an aromatic ring and 6 to 20 carbon atoms.)

[2] The polylactic acid-based resin (I) as described in [1] characterized in that in each of the poly(L-lactic acid) and poly(D-lactic acid), the percentage of the terminal functional group which is a carboxyl group is not less than 90%;

[2'] The polylactic acid-based resin (I) as described in [1] characterized in that in each of the poly (L-lactic acid) and poly(D-lactic acid), the percentage of the terminal functional group which is a carboxyl group is 85%;

[3] The polylactic acid-based resin (I) as described in [1] or [2] characterized in that the weight average molecular weight is 50,000 to 1,000,000;

[4] The polylactic acid-based resin (I) as described in [1] to [3] characterized in that when the temperature is increased at a rate of 10°C/min in measurement with a differential scanning calorimeter , the melting point (Tm) (peak top of melting peaks) is 180°C ≤ Tm ≤ 230°C;

[5] The polylactic acid-based resin (I) as described in [1] to [4] characterized in that the polylactic acid-based resin (I) comprises 0.001 to 5 parts by weight of a stabilizer based on 100 parts by weight of the polylactic acid-based resin (1);

[6] The polylactic acid-based resin (I) as described in [1] to [5] characterized in that the weight average molecular weight MX of the polylactic acid-based resin and the weight average molecular weight MY of the polylactic acid-based resin prepared after keeping at 240°C for 10 min satisfy the following relation;

$$MY \geqq 0.8 \times MX$$

[7] The polylactic acid-based resin (I) as described in [1] to [6] characterized in that each of the poly(L-lactic acid) and poly (D-lactic acid) has a weight average molecular weight of 5,000 to 100,000, and the resulting polylactic acid-based resin has a weight average molecular weight of 100,000 to 1,000,000 and has weight average molecular

weight of not less than 3 times and not more than 200 times as much as that of each of the poly (L-lactic acid) and the poly(D-lactic acid);

[8] The polylactic acid-based resin (I) as described in [1] to [7] characterized in that the polyisocyanate compound is an aliphatic diisocyanate compound;

[9] A process for producing the polylactic acid-based resin (I) as described in [1] to [8] which process comprises a step of allowing a polyisocyanate compound to react with a mixture comprising at least a poly (L-lactic acid) in which the percentage of the terminal functional group which is a carboxyl group exceeds 50% and a poly(D-lactic acid) in which the percentage of the terminal functional group which is a carboxyl group exceeds 50%;

[10] The process for producing the polylactic acid-based resin (I) as described in [9] characterized in that the polyisocyanate compound is an aliphatic diisocyanate compound;

[11] The process for producing the polylactic acid-based resin (I) as described in [9] or [10] characterized in that the process comprises a step of allowing the polyisocyanate compound to react with the mixture in the presence of an amidation catalyst;

[12] The process for producing the polylactic acid-based resin (I) as described in [11] characterized in that the amidation catalyst comprises at least one metal selected from the group consisting of metals belonging to Groups 1, 2 and 3 in the Periodic Table;

[13] The process for producing the polylactic acid-based resin (I) as described in [11] characterized in that the amidation catalyst comprises magnesium or calcium;

[14] A molded article comprising the polylactic acid-based resin (I) as described in [1] to [8].

The present inventors have been earnestly studied and found that a polylactic acid resin composition characterized in that the composition comprises a polylactic acid resin comprising L-lactic acid as a main component and a polylactic acid resin comprising D-lactic acid as a main component wherein at least one of the polylactic acid resins is obtainable by forming an amide bond using a polyisocyanate compound, the polylactic acid resin composition has high stereocomplex forming capability. Furthermore, they found that using the composition, it is possible to form a stereocomplex and mold in relatively mild conditions, and molded articles having excellent heat resistance and mechanical properties can be prepared. Thus, the invention [2] has been accomplished.

That is to say, the invention [2] provides the following subjects:

[15] A polylactic acid resin composition (C) characterized in that the composition comprises a polylactic acid resin (A-1) comprising L-lactic acid as a main component and a polylactic acid resin (A-2) comprising D-lactic acid as a main component wherein at least one of the lactic acid resins (A-1 or A-2) is a polylactic acid resin (B) having an amide bond and obtainable by allowing a polyisocyanate compound to react with a lactic acid oligomer (a-1) comprising L-lactic acid as a main component or a lactic acid oligomer (a-2) comprising D-lactic acid as a main component;

[16] Each of the polylactic acid resin (A-1) comprising L-lactic acid as a main component and the polylactic acid resin (A-2) comprising D-lactic acid as a main component preferably has a weight average molecular weight of 70,000 to 500,000 from the viewpoint of molding properties;

[17] Each of the lactic acid oligomer (a-1) and the lactic acid oligomer (a-2) preferably has a weight average molecular weight of 5,000 to 100,000 from the viewpoint of improving the melting point of the polylactic acid resin;

[18] The polyisocyanate compound as described in [15] is preferably an aliphatic diisocyanate from the viewpoint of color tone;

[19] The polylactic acid resin composition (C) preferably comprises 0.001 to 5 parts by weight of a phosphorus stabilizer (D) based on 100 parts by weight of the polylactic acid resin composition (C) from the viewpoints of hue and improving the viscosity stability at the time of molding;

[20] The polylactic acid resin composition (C) preferably further comprises 0.001 to 5 parts by weight of a phenol-based stabilizer (E) based on 100 parts by weight of the polylactic acid resin composition (C) from the viewpoints of hue and improving the viscosity stability at the time of molding;

[21] In measurement with a differential scanning calorimeter (DSC), of melting peaks in the process of increasing the temperature, the proportion of melting peaks of not lower than 195°C in the polylactic acid resin is preferably not less than 70% from the viewpoint of improving the heat resistance;

[22] A molded article obtainable from the polylactic acid resin composition (C) as described in [15] to [21].

Moreover, the present inventors have been earnestly studied and found that a stereocomplex polylactic acid resin composition (Z) is obtainable by allowing a polyisocyanate compound to react with a mixture of an oligomer (x'1) in which the main repeating unit is a L-lactic acid and in which the percentage of the terminal functional group which is a carboxyl group exceeds 50% and a polymer (Y1) having D-lactic acid as a main repeating unit and a molecular weight larger than that of the oligomer (x'1) or a mixture of an oligomer (y'1) in which the main repeating unit is a D-lactic acid and in which the percentage of the terminal functional group which is a carboxyl group exceeds 50% and a polymer (X1)

having L-lactic acid as a main repeating unit and a molecular weight larger than that of the oligomer (y'1) and the stereocomplex polylactic acid resin composition (Z) has a high weight average molecular weight (Mw) and a high stereo crystal rate (S), and can inhibit the decrease of the weight average molecular weight (Mw) after heat loading. Furthermore, they found that a stereocomplex polylactic acid satisfying a high molecular weight, a high stereo crystal rate (S) and high heat stability simultaneously can be prepared in a relatively low temperature for a short period of time. Thus, the invention [3] has been accomplished.

As an application form of the stereocomplex polylactic acid, molded articles formed by thermal melting are considered. It is considered that the stereo crystal rate (S) after molding and processing is increased by this step. The stereo crystal rate (S) after heat loading has been conventionally discussed. While, on present showing, the stereo crystal rate (S) before heat loading has not been discussed as long as the present inventors know. The present inventors presumed that the decrease of molecular weight will be able to be inhibited, when the stereo crystal rate (S) before heat loading is high, the stereo crystal rate (S) is further increased (S = 100%) easily without high heat loading.

That is to say, the invention [3] provides the following subjects:

[23] A stereocomplex polylactic acid resin composition (Z) having a weight average molecular weight of 70,000 to 500, 000 and satisfying the following properties (i) to (iv);

(i) the stereo crystallization ratio is not less than 51%, in measurement with a differential scanning calorimeter (DSC) at a retention temperature of 240°C and a retention time of 1 min,
(ii) the stereo crystal rate (S) is not less than 60% in the first heating process,
(iii) the stereo crystal rate (S) is not less than 88% in the second heating process, and
(iv) the retention rate of weight average molecular weight (Mw) is not less than 77% after the second heating process

[24] A stereocomplex polylactic acid resin composition (Z) having a weight average molecular weight of 70, 000 to 500, 000 and satisfying the following properties (i') to (iv');

(i') the stereo crystallization ratio is not less than 51%, in measurement with a differential scanning calorimeter (DSC) at a retention temperature of 240°C and a retention time of 5 min,
(ii') the stereo crystal rate (S) is not less than 60% in the first heating process,
(iii') the stereo crystal rate (S) is not less than 95% in the second heating process, and
(iv') the retention rate of weight average molecular weight (Mw) is not less than 70% after the second heating process

[25] The stereocomplex polylactic acid resin composition (Z) obtainable by allowing a polyisocyanate compound to react with a mixture of an oligomer (x'1) in which the main repeating unit is a L-lactic acid and in which the percentage of the terminal functional group which is a carboxyl group exceeds 50% and a polymer (Y1) having D-lactic acid as a main repeating unit and a molecular weight larger than that of the oligomer (x'1), or a mixture of an oligomer (y'1) in which the main repeating unit is a D-lactic acid and in which the percentage of the terminal functional group which is a carboxyl group exceeds 50% and a polymer (X1) having L-lactic acid as a main repeating unit and a molecular weight larger than that of the oligomer (y'1);

[26] A process for producing a stereocomplex polylactic acid resin composition characterized in that the process comprises a step of allowing a polyisocyanate compound to react with
a mixture of 30 to 300 parts by weight of an oligomer (x'1) in which the main repeating unit is a L-lactic acid and in which the percentage of the terminal functional group which is a carboxyl group exceeds 50% and 100 parts by weight of a polymer (Y1) having D-lactic acid as a main repeating unit and a molecular weight larger than that of the oligomer (x'1) or
a mixture of 30 to 300 parts by weight of an oligomer (y'1) in which the main repeating unit is a D-lactic acid and in which the percentage of the terminal functional group which is a carboxyl group exceeds 50% and 100 parts by weight of a polymer (X1) having L-lactic acid as a main repeating unit and a molecular weight larger than that of the oligomer (y'1);

[27] A molded article comprising the stereocomplex polylactic acid resin composition (Z).

EFFECT OF THE INVENTION

Since the polylactic acid-based resin (I) in the invention [1] has an amide bond in its molecular chain, a practically sufficient high molecular weight, a high melting point and high heat stability, it can be favorably used in uses required to have mechanical properties and heat resistance such as films, sheets, molded articles and fibers.

The composition (C) in the invention [2] has high stereocomplex forming capability in a relatively mild condition. The molded article formed using the polylactic acid resin composition (C) in the invention [2] is prepared by a relatively mild condition, and has good heat resistance, mechanical properties, chemical resistance and resistance to hydrolysis. Additionally, since it can decrease the molding processing temperature, the environmental load is decreased.

The composition (Z) in the invention [3] is a stereocomplex polylactic acid resin composition (Z) satisfying a high weight average molecular weight (Mw), a high stereo crystal rate (S) and high heat stability simultaneously, and further it can be produced at a relatively low temperature for a short period of time. The composition has good heat resistance and heat stability and is obtainable by a production process with excellent productivity and operability.

BRIEF DESCRIPTION OF DRAWING

Fig. 1 shows a change of a GPC chromatogram with time during the production of the stereocomplex polylactic acid resin composition in Examples 3 to 14.

Fig. 2 shows a change of a GPC chromatogram with time during the production of the stereocomplex polylactic acid resin composition in Examples 3 to 59.

EMBODIMENT FOR CARRYING OUT THE INVENTION

Polylactic acid-based resin (I)

The polylactic acid-based resin (I) of the invention [1] characterized in that the resin is obtainable by allowing a polyisocyanate compound to react with a mixture comprising at least a poly (L-lactic acid) in which the percentage of the terminal functional group which is a carboxyl group exceeds 50% and a poly(D-lactic acid) in which the percentage of the terminal functional group which is a carboxyl group exceeds 50%, and the resin comprises a constituting unit represented by the following formula (1);

[Chemical formula 1 ]

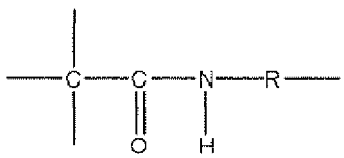

(1)

In the formula (1), R is a polyisocyanate residue and represents an aliphatic hydrocarbon group having 1 to 20 carbon atoms, a hydrocarbon group having an alicyclic structure and 3 to 20 carbon atoms or a hydrocarbon group having an aromatic ring and 6 to 20 carbon atoms.

Examples of the aliphatic hydrocarbon group having 1 to 20 carbon atoms are methylene, ethylene, propylene, methylethylene, butylene, 1-methylpropylene, 2-methylpropylene, 1,2-dimethylpropylene, 1,3-dimethylpropylene, 1-methylbutylene, 2-methylbutylene, 3-methylbutylene, 4-methylbutylene, 2,4-dimethylbutylene, 1,3-dimethylbutylene, pentylene, hexylene, heptylene, octylene, decylene, dodecylene, ethane-1, 1-diyl, propane-2,2-diyl, tridecylene, tetradecylene, pentadecylene, hexadecylene, heptadecylene, octadecylene and nonadecylene. In the aliphatic hydrocarbon groups, any $-CH_2-$ may be substituted by -O-, -CO-, -COO- or $-SiH_2-$.

Examples of the hydrocarbon group having an alicyclic ring structure and 3 to 20 carbon atoms are cyclopropylene, 1,3-cyclobutylene, 1,3-cyclopentylene, 1,4-cyclohexylene, 1,5-cyclooctylene, norbonylene, 1,3-cyclopentylene, 1,2-cyclohexylene, 1,4-dimethylene cyclohexane, 1,3-dimethylene cyclohexane, 1-methyl-2,4-cyclohexylene, 4,4'-methylene-biscyclohexylene and 3-methylene-3,5,5-trimethyl-cyclohexylene.

Examples of the hydrocarbon group having an aromatic ring and 6 to 20 carbon atoms are m-phenylene, p-phenylene, 4,4'-diphenylene, 1,4-naphthalene, 1,5-naphthalene, 4,4'-methylene diphenylene, 2,4-tolylene, 2,6-tolylene, m-xylylene, p-xylylene, m-tetramethyl xylylene, 4,4'-oxydiphenylene and chlorodiphenylene.

Of these functional groups, examples of R are preferably butylene, pentylene, hexylene, dodecylene, 3-methylene-3,5,5-trimethyl-cyclohexylene, 1,3-dimethylene cyclohexane and 4,4'-methylene-biscyclohexylene, more preferably hexylene.

One molecule of the polylactic acid-based resin (I) comprises 1 to 200 units of the constituting unit represented by the formula (1), preferably 1 to 100 units, more preferably 3 to 50 units, furthermore preferably 5 to 30 units.

The constituting unit represented by the formula (1) can be formed by reaction of a carboxyl group present in the terminal group of polylactic acid and an isocyanate group, and it is possible to convert carboxyl group into amide group efficiently using the amidation catalyst as described later.

The proportion of carboxyl group present in the terminal groups of the polylactic acid can be calculated by measurement of the carboxylic acid value and NMR of the polylactic acid-based resin.

Poly(L-lactic acid) and poly (D-lactic acid)

The terminal groups of the poly(L-lactic acid) and poly (D-lactic acid) used in the invention [1] are carboxyl groups in a proportion of over 50%. The proportion of carboxyl groups present in the terminal group is preferably not less than 85%, more preferably not less than 90%, furthermore preferably not less than 95%. When the proportion of carboxyl group present in the terminal groups is not more than 50%, the proportion of urethane bond in the polylactic acid-based resin is increased. In the case of melting the polylactic acid-based resin, the molecular weight is easily decreased and the melting viscosity is decreased at the time of molding and thereby it is difficult to carrying out processing and molding stably.

In the invention [1], the poly(L-lactic acid) and poly (D-lactic acid) comprise not less than 80% by mol of L-form lactic acid or D-form lactic acid based on all the constituting units, and may comprise less than 20% by mol of other optical isomers or other component units as long as the objects of the invention [1] are accomplished.

In the invention [1], the L-lactic acid and D-lactic acid comprise not less than 80% by mol of L-form lactic acid or D-form lactic acid. The content rate of L-form or D-form is preferably higher, preferably not less than 90% by mol, more preferably not less than 95% by mol, particularly preferably not less than 98% by mol. When the content rate of L-form or D-form is in the above range, a resulting polylactic acid-based resin has high heat resistance.

Examples of the other component units other than the L-lactic acid and the D-lactic acid may include an initiator used in the production process as described later; units derived from polyvalent carboxylic acids, polyvalent alcohols, polyvalent amines, hydroxy carboxylic acids and lactones; and units derived from these various constituting components such as polyesters, polyethers, polyamides, polycarbonates. They may be used singly or two or more may be mixed for use. Specific examples thereof are polycarboxylic acids or their derivatives such as succinic acid, adipic acid, sebacic acid, fumaric acid, phthalic acid, terephthalic acid, isophthalic acid, 2,6-naphthalene dicarboxylic acid, 5-sodium sulfoisophthalic acid, 5-tetrabutylphosphonium sulfoisophthalic acid, maleic acid, tetrabromophthalic acid and tetrahydrophthalic acid;

Polyvalent alcohols or their derivatives such as ethylene glycol, propylene glycol, butane diol, hexane diol, octane diol, neopentyl glycol, glycerin, trimethylol propane, pentaerythritol, dipentaerythritol, tripentaerythritol, sorbitol, poly(vinyl alcohol), poly(hydroxyethyl methacrylate), poly(hydroxypropyl methacrylate), aromatic polyvalent alcohols obtainable by addition reaction of bisphenol with ethylene oxide, diethylene glycol, triethylene glycol, polyethylene glycol and polypropylene glycol;

polyvalent amines or their derivatives such as ethylene diamine, propylene diamine, butylene diamine, pentylene diamine, hexylene diamine, heptylene diamine, diethylene triamine and melamine;

hydroxycarboxylic acids such as glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyllactic acid, 2-hydroxycaproic acid, 2-cyclohexyl-2-hydroxyacetic acid, mandelic acid, 4-hydroxyvaleric acid and 6-hydroxycaproic acid; and

lactones such as glycolide, ε-caprolactone glycolide, ε-caprolactone, β-propiolactone, δ-butylolactone, β- or γ-butylolactone, pivalolactone and δ-valerolactone.

Weight ratio

The polylactic acid resin of the invention [1] has a weight ratio of poly (L-lactic acid) and poly (D-lactic acid) of preferably 10 : 90 to 90 : 10, more preferably 30 : 70 to 70 : 30. When the weight ratio is in this range, the melting point is increased and the heat resistance is apt to be excellent.

A process for preparing poly (L-lactic acid) or poly (D-lactic acid) in which the percentage of the terminal functional group which is a carboxyl group exceeds 50%

The process for preparing the poly(L-lactic acid) and poly(D-lactic acid) in the invention [1] is not particularly limited as long as the objects of the invention [1] are accomplished. Examples of the process are a direct polycondensation process of directly dehydrating and condensing a lactic acid, a process of ring-opening polymerization of ring-opening polymerizing lactide and a process of combining either of these processes with solid phase polymerization.

Direct polycondensation method

As the process for preparing the poly(L-lactic acid) or poly(D-lactic acid) in which the percentage of the terminal functional group which is a carboxyl group exceeds 50% with a direct polycondensation method, there is, for example, a process that L-lactic acid or D-lactic acid as a raw material is heated in an inert gas atmosphere, and subjected to polycondensation reaction with decreasing the pressure and finally subjected to polycondensation reaction at a prescribed temperature under a prescribed pressure to prepare the poly(L-lactic acid) or poly(D-lactic acid). In the reaction, together with the lactic acid as a raw material, polycarboxylic acid or acid anhydride is added in the beginning of the polymerization, on the way or in the latter half of the polymerization to prepare the poly (L-lactic acid) in which the percentage of the terminal functional group which is a carboxyl group exceeds 50% or poly(D-lactic acid) in which the percentage of the terminal functional group which is a carboxyl group exceeds 50%.

As the polycarboxylic acid component, a dicarboxylic acid is preferred. Examples of the dicarboxylic acid component are succinic acid, phthalic acid, maleic acid, tetrabromophthalic acid, tetrahydrophthalic acid, trimellitic acid and dodecyl succinic acid. Succinic acid is more preferred from the viewpoint of cost. Examples of the acid anhydride are succinic acid anhydride, phthalic anhydride, maleic anhydride, tetrabromophthalic anhydride, tetrahydrophthalic anhydride, trimellitic anhydride and dodecyl succinic anhydride. Succinic anhydride is particularly preferred.

When the polycarboxylic acid or acid anhydride is added in the latter half of the polymerization, the amount of the polycarboxylic acid or acid anhydride is preferably 0.1 to 10 parts by weight, further preferably 0.5 to 8 parts by weight, particularly preferably 0.5 to 5 parts by weight based on 100 parts by weight of the poly (L-lactic acid) or poly (D-lactic acid) before added. When the polycarboxylic acid or acid anhydride is added during the polymerization or in the latter half of the polymerization, it may be added in accordance with the desired molecular weight as described below of the poly(L-lactic acid) or poly(D-lactic acid). Specifically, the amount of the polycarboxylic acid or acid anhydride is preferably 0.001 to 5 parts by weight, further preferably 0.01 to 3 parts by weight based on 100 parts by weight of the L-lactic acid or D-lactic acid used. When the polycarboxylic acid or acid anhydride is added during the polymerization or in the beginning of the polymerization, it may be added in accordance with the desired molecular weight as described below of the poly (L-lactic acid) or poly (D-lactic acid). Specifically, the amount of the polycarboxylic acid or acid anhydride is preferably 0.19 to 3.8 parts by weight, further preferably 0.24 to 1.9 parts by weight, more preferably 0.38 to 1.9 parts by weight based on 100 parts by weight of the L-lactic acid or D-lactic acid used.

When the addition amount of the polycarboxylic acid or acid anhydride is in the above range, the molecular weight can be controlled in the desired range by polymerization without a long period of time.

The polycondensation reaction may be carried out in the presence of a catalyst in order to shorten the polycondensation time, to enhance the reactivity of the polycarboxylic acid or acid anhydride or to shorten the reaction time.

Examples of the catalyst may include Groups 2, 12, 13, 14 and 15 metals in the Periodic Table, oxides thereof and salts thereof. Specific examples are metals such as zinc dust, tin dust, aluminum and magnesium;
metal oxides such as antimony oxide, zinc oxide, tin oxide, aluminum oxide, magnesium oxide and titanium oxide;
metal halides such as tin(II) chloride, tin(IV) chloride, tin(II) bromide, tin(IV)bromide, antimony fluoride, zinc chloride, magnesium chloride and aluminum chloride;
carbonates such as magnesium carbonate and zinc carbonate;
organic carboxylates such as tin acetate, tin 2-ethyl hexanoate, tin lactate, zinc acetate and aluminum acetate; and organic sulfonates such as tin trifluoromethane sulfonate, zinc trifluoromethane sulfonate, magnesium trifluoromethane sulfonate, tin methane sulfonate and tin p-toluene sulfonate. Other examples thereof may include organic metal oxides of the above metals such as dibutyl tin oxide and the like; metal alkoxides of the above metals such as titanium isopropoxide and the like; alkyl metals of the above metals such as diethyl zinc and the like; ion exchange resins such as Dowex and Amberlite; protonic acids such as sulfuric acid, methane sulfonic acid and p-toluene sulfonic acid. Preferable examples include metal such as tin or zinc and their metal compounds from the view point of high polymerization rate and preparing a polymer having a high molecular weight. Furthermore, it is particularly preferred to use metal tin, or tin compounds such as tin oxide and tin chloride from the viewpoints of hue and catalyst activity. The addition amount of the catalyst, which is not particularly limited, is preferably 0.001 to 2 parts by weight, more preferably 0.001 to 1 part by weight based on 100 parts by weight of the L-lactic acid or D-lactic acid used. Moreover, the molar amount is preferably from 0.01 to 2 mol, more preferably 0.1 to 1 mol, based on 100 mol of the L-lactic acid or D-lactic acid used.

Although the catalyst is not an essential component in the invention [1], when the catalyst amount is less than 0.001 part by weight, the catalyst effect capable of shortening the polymerization time is sometimes not sufficiently exerted. When the catalyst is added in an amount of over 2 parts by weight, it is sometimes to need a step of removing the catalyst residue separately in order to inhibit the decrease of molecular weight and thermal decomposition caused by the influence of the catalyst residue at the time of molding and processing the polylactic acid-based resin.

Ring opening polymerization method

As the process for preparing the poly(L-lactic acid) in which the percentage of the terminal functional group which is a carboxyl group exceeds 50% and the poly (D-lactic acid) in which the percentage of the terminal functional group which is a carboxyl group exceeds 50% with a ring opening polymerization method, there is a process that L-lactide and D-lactide, which are lactic acid cyclic dimers, are subjected to ring opening polymerization using an initiator such as a compound having two or more hydroxyl groups or amino groups in one molecule, a hydroxy carboxylic acid, water and the like, and then an acid anhydride is added. Examples of the compound having two or more hydroxyl groups or amino groups in one molecule may include polyvalent alcohols such as ethylene glycol, propylene glycol, butane diol, hexane diol, octane diol, neopentyl glycol, diethylene glycol, triethylene glycol, polyethylene glycol, polypropylene glycol, glycerin, trimethylol propane, pentaerythritol, dipentaerythritol, tripentaerythritol, sorbitol, poly(vinylalcohol), poly(hydroxyethylmethacrylate) and poly (hydroxypropyl methacrylate) ; and polyvalent amines such as ethylene diamine, propane diamine, butane diamine, pentane diamine, hexane diamine, heptanes diamine, diethylene triamine and melamine. Although the addition amount of the initiator is not particularly limited, it is preferably from 0.001 to 5 parts by weight, more preferably 0.01 to 3 parts by weight based on 100 parts by weight of the lactide (L-lactide or D-lactide). Moreover, it is preferably 0.38 to 7.7. mol, more preferably 0.48 to 3.84 mol, furthermore preferably 0.77 to 3.84 mol based on 100 mol of the lactide (L-lactide or D-lactide) used.

When the amount of the polymerization initiator is in the above range, the molecular weight can be controlled in the desired range.

Examples of the acid anhydride are same compounds as those of the acid anhydride which can be used in the direct polycondensation method, and succinic anhydride is preferred. The addition amount of the acid anhydride is 0.1 to 10 parts by weight, preferably 0.5 to 8 parts by weight, furthermore preferably 0.5 to 5 parts by weight based on 100 parts by weight of the poly (L-lactic acid) or poly (D-lactic acid) prepared before the addition.

The ring-opening polymerization may be carried out in the presence of a catalyst in order to shorten the polymerization time, enhance the reaction rate with the acid anhydride and shorten the reaction time.

Examples of the catalyst are metals such as tin, zinc, lead, titanium, bismuth, zirconium, germanium, antimony and aluminum, and their derivatives. Preferable examples of the derivatives are metal alkoxides, carboxylates, carbonates, oxides and halides. Specific examples are tin chloride, 2-ethyl hexanoic acid tin, zinc chloride, zinc acetate, lead oxide, lead carbonate, titanium chloride, alkoxy titanium, germanium oxide and zirconium oxide. Among them, a tin compound is preferred and tin octylate is more preferred. Although the addition amount of the catalyst is not particularly limited, the amount is preferably 0.001 to 2 parts by weight, more preferably 0.001 to 1 part by weight based on 100 parts by weight of the L-lactide or D-lactide used. Furthermore, the molar amount is preferably 0.01 to 2 mol, more preferably 0.1 to 1 mol, based on 100 mol of the L-lactide or D-lactide used.

In the invention [1], the catalyst is not an essential component, but when the catalyst amount is less than 0.001 part by weight, the catalyst effect capable of shortening the polymerization time, sometimes, is not exerted sufficiently. When it is over 2 parts by weight, a step of removing the catalyst residue is sometimes required separately in order to inhibit the decrease of molecular weight or thermal decomposition caused by the influence of the catalyst residue at the time of molding and processing the polylactic acid-based resin.

Solid phase polymerization

As the method of combining the direct polymerization method or the ring opening polymerization method with the solid phase polymerization method, it is possible to use methods as described in JP-A-2000-302852 and JP-A-2001-122954.

Weight average molecular weights <Mw> of poly(L-lactic acid) and poly(D-lactic acid)

The weight average molecular weight of each of the poly(L-lactic acid) and the poly(D-lactic acid) is preferably 5,000 to 100,000, more preferably 10,000 to 80,000, furthermore preferably 10,000 to 50, 000. The weight average molecular weight of each of the poly(L-lactic acid) and poly(D-lactic acid) is preferably in the above range because the polymerization time is short and the processing time can be shortened.

In the invention [1], the weight average molecular weight (hereinafter sometimes referred to "Mw") is determined by the measuring method in the example described later.

Amount of catalyst residues in poly(L-lactic acid) or poly(D-lactic acid)

The content of a (heavy) metal derived from the catalyst in each of the poly(L-lactic acid) and the poly(D-lactic acid) is preferably not more than 300 ppm, more preferably not more than 100 ppm, furthermore preferably not more

than 30 ppm. The lower limit of the content is not particularly limited. When the content of the (heavy) metal derived from the catalyst in each of the poly(L-lactic acid) and the poly (D-lactic acid) is in the above range, the polylactic acid-based resin [1] having a high molecular weight is obtained and the heat stability thereof is apt to be high.

Among the (heavy)metals, the Sn content is preferably not more than 300 ppm, more preferably not more than 100 ppm, furthermore preferably not more than 30 ppm. The lower limit of the Sn content is not particularly limited. When the Sn content is regulated to be in the above range, the polylactic acid-based resin [1] having a high molecular weight can be obtained and the heat stability is apt to be high. As the method of removing Sn contained in the poly (L-lactic acid) and the poly (D-lactic acid), it is possible to use a known method such as a method of treating with hydrochloric acid/2-propanol. The method of measuring the content of the (heavy)metal such as Sn and the like is as follows.

A sample is wet digested with sulfuric acid and hydrogen peroxide. The digested product in a volume of 1 ml is diluted forty times with hydrochloric acid to give a test solution. The test solution is analyzed with an ICP emission spectrometer (ICPS-8100 manufactured by Shimadzu Corporation) to determine the contents of heavy metals such as Sn. In the determination of the contents of heavy metals such as Sn by this method, the detection limit is 4 ppm.

<u>Copolymerization component</u>

The mixture comprising at least the poly(L-lactic acid) in which the percentage of the terminal functional group which is a carboxyl group exceeds 50% and the poly (D-lactic acid) in which the percentage of the terminal functional group which is a carboxyl group exceeds 50% according to the invention [1] may comprise copolymerization components other than the poly(L-lactic acid) and the poly(D-lactic acid).

The copolymerization components are not particularly limited as long as the objects of the invention [1] are accomplished, and can be used in accordance with the objects such as improvement of physical properties. For example, it is possible to use polyhydroxy carboxylic acid, polyester, polyamide and polycarbonate other than polylactic acids.

The content of the copolymerization components is not particularly limited as long as the objects of the invention [1] are accomplished. They are used in an amount of 0 to 40 parts by weight, preferably 5 to 20 parts by weight, more preferably 5 to 10 parts by weight based on 100 parts by weight of the mixture of the poly (L-lactic acid) in which the percentage of the terminal functional group which is a carboxyl group exceeds 50% and the poly(D-lactic acid) in which the percentage of the terminal functional group which is a carboxyl group exceeds 50%.

Examples of the polyhydroxy carboxylic acid are polyglycolic acid, poly(3-hydroxy butyric acid), poly(4-hydroxy butyric acid), poly(2-hydroxy-n-butyric acid), poly(2-hydroxy-3,3-dimethyl butyric acid), poly(2-hydroxy-3-methyl butyric acid), poly(2-methyl lactic acid), poly(2-hydroxy caproic acid), poly(2-hydroxy-3-methylbutyric acid), poly(2-cyclohexyl-2-hydroxy acetic acid), poly(mandelic acid) and polycaprolactone, and their copolymers and mixtures.

Examples of the polyester are polyesters comprising a repeating unit as represented by a glycol component and a dicarboxylic acid component as a main component, and further may be a copolymer of 3 or more components and may comprise a copolymer other than the glycol component and the dicarboxylic acid component. Examples of the glycol component are ethylene glycol, 1, 3-propylene glycol, 1,4-butanediol, heptane diol, hexane diol, octane diol, nonane diol, decane diol, 1, 4-cyclohexane dimethanol, neopentyl glycol, glycerin, pentaerythritol, bisphenol A, polyethylene glycol, polypropylene glycol and polytetramethylene glycol. These may be used singly or two or more may be combined for use.

Examples of the dicarboxylic acid component are dicarboxylic acids such as succinic acid, oxalic acid, adipic acid, sebacic acid, azelaic acid, dodecane dioic acid, malonic acid, glutaric acid, cyclohexane dicarboxylic acid, terephthalic acid, isophthalic acid, phthalic acid, naphthalene dicarboxylic acid, bis(p-carboxyphenyl)methane, anthracene dicarboxylic acid, 4,4'-diphenylether dicarboxylic acid, 5-sodium sulfoisophthalic acid and 5-tetrabutyl phosphonium isophthalic acid, and their dimethyl esters. They may be used singly or two or more may be combined for use.

Examples of the other copolymerization components are hydroxy carboxylic acids such as glycolic acid, lactic acid, hydroxy propionic acid, hydroxy butyric acid, hydroxy valeric acid, hydroxy caproic acid and hydroxy benzoic acid.

Typical examples of polyesters are polyethylene terephthalate, polybutylene terephthalate, polypropylene terephthalate, polycyclohexylene dimethylene terephthalate, polyethylene isophthalate, polybutylene isophthalate, polypropylene isophthalate, polyethylene naphthalate, polybutylene naphthalate, polypropylene naphthalate, polybutylene terephthalate, bisphenol A terephthalate, bisphenol A isophthalate, polycyclohexane dimethylene terephthalate, polycyclohexane dimethylene isophthalate, polyethylene sulfoisophthalate, polybutylene sulfoisophthalate, polypropylene sulfoisophthalate, polybutylene sebacate, polypropylene sebacate, polyethylene sebacate, poly-ε-caprolactone, polyethylene oxalate, polypropylene oxalate, polybutylene oxalate, polyneopentyl glycol oxalate, polyethylene succinate, polypropylene succinate, polybutylene succinate, polybutylene adipate, polypropylene adipate and polyethylene adipate.

The polyamide is a polymer or a copolymer, which comprises amino acid, lactam or diamine and dicarboxylic acid as a main component. Examples of the amino acid are 6-aminocaproic acid, 11-aminoundecanoic acid, 12-aminododecanoic acid and para-aminomethyl benzoic acid. Examples of the lactam are ε -caprolactam and ω-laurolactam.

Examples of the diamine are tetramethylene diamine, hexamethylene diamine, undecamethylene diamine,

dodecamethylene diamine, 2,2,4-trimethylhexamethylene diamine, 2,4,4-trimethylhexamethylene diamine, 5-methylnonamethylene diamine, 2,4-dimethyl octamethylene diamine, methaxylene diamine, paraxylene diamine, 1,3-bis(aminomethyl)cyclohexane, 1-amino-3-aminomethyl-3,5,5-trimethyl cyclohexane, 3,8-bis(aminomethyl)tricyclodecane, bis(4-aminocyclohexyl)methane, bis(3-methyl-4-aminocyclohexyl)methane, 2,2-bis(4-aminocyclohexyl)propane, bis(aminopropyl)piperazine and aminoethylpiperazine.

Examples of dicarboxylic acid are succinic acid, adipic acid, suberic acid, azelaic acid, sebacic acid, dodecanoic diacid, terephthalic acid, isophthalic acid, naphthalene dicarboxylic acid, 2-chloroterephthalic acid, 2-methylterephthalic acid, 5-methylisophthalic acid, 5-sodium sulfoisophthalic acid, hexahydrophthalic acid, hexahydroisophthalic acid and diglycolic acid.

It is possible to use a homopolymer or copolymer derived from these raw materials.

Examples of the polyamide are polycaproamide, polyhexamethylene adipamide, polytetramethylene adipamide, polyhexamethylene sebacamide, polyhexamethylene dodecamide, polyundecane amide, polydodecane amide, polycaproamide/ polyhexamethylene terephthalamide copolymer, polyhexamethylene adipamide/polyhexamethylene terephthalamide copolymer, polyhexamethylene adipamide/polyhexamethylene isophthalamide copolymer, polyhexamethylene adipamide/polyhexamethylene isophthalamide/polycaproamide copolymer, polyhexamethylene terephthalamide/polyhexamethylene isophthalamide copolymer, polyhexamethylene terephthalamide/polydodecane amide copolymer, polyhexamethylene adipamide/polyhexamethylene terephthalamide/polyhexamethylene isophthalamide copolymer, polyxylene adipamide, polyhexamethylene terephthalamide/ poly-2-methylpentamethylene terephthalamide copolymer.

The polycarbonate is a resin having a carbonate bond and a polymer or a copolymer obtainable by allowing an aromatic hydroxy compound or an aromatic hydroxy compound and a small amount of a polyhydroxy compound to react with a carbonate precursor.

Examples of the aromatic hydroxy compound are

2, 2-bis (4-hydroxyphenyl) propane (commonly known as bisphenol A),
2,2-bis(4-hydroxyphenyl)methane,
1,1-bis(4-hydroxyphenyl)ethane,
1,1-bis(4-hydroxyphenyl)cyclohexane,
2,2-bis(4-hydroxy-3,5-dimethylphenyl)propane,
2,2-bis(4-hydroxy-3,5-dibromophenyl)propane,
2,2-bis(hydroxy-3-methylphenyl)propane,
bis(4-hydroxyphenyl)sulfide, bis(4-hydroxyphenyl) sulfone, hydroquinone, resorcinol,
4,6-dimethyl-2,4,6-tri(4-hydroxyphenyl)heptene,
2,4,6-dimethyl-2,4,6-tri(4-hydroxyphenyl)heptane,
2,6-dimethyl-2,4,6-tri(4-hydroxyphenyl)heptene,
1,3,5-tri(4-hydroxyphenyl)benzene,
1,1,1-tri(4-hydroxyphenyl)ethane, 3,3-bis(4-hydroxyaryl) oxyindole, 5-chloro-3,3-bis(4-hydroxyaryl)oxyindole,
5,7-dichloro-3,3-bis(4-hydroxyaryl)oxyindole and
5-bromo-3,3-bis(4-hydroxyaryl)oxyindole. These may be used singly or two or more may be combined for use.

As the carbonate precursor, carbonyl halide, carbonate ester, haloformate or the like is used. Specific examples thereof are phosgene, diphenyl carbonate.

The terminal functional group in the copolymerization component is not particularly limited, and is preferably converted to a carboxyl group.

Process for producing polylactic acid-based resin (I)

The process for producing the polylactic acid-based resin (I) comprises a step of allowing the mixture comprising at least the poly(L-lactic acid) having a carboxyl group in over 50 % of the terminal functional groups and the poly(D-lactic acid) in which the percentage of the terminal functional group which is a carboxyl group exceeds 50% to react with the polyisocyanate compound. In this reaction, it is preferred to use an amidation catalyst. As the step, there is the following process which is not limited as long as the objects of the invention [1] are accomplished.

Firstly, the mixture of the poly(L-lactic acid) and the poly(D-lactic acid) and a solvent are mixed and heated to a predetermined temperature under normal pressure in a nitrogen atmosphere. Next, the catalyst is optionally added to the mixture and then the polyisocyanate compound is added and reacted at a predetermined temperature. Finally, the resultant reaction product is subjected to decarboxylation to prepare the polylactic acid-based resin (I). The polyisocyanate compound is preferably a diisocyanate compound.

The polylactic acid-based resin (I) of the invention [1] is preferably a polylactic acid resin comprising a constituting

unit selected from a combination of the following formulas (2) and (3), and a combination of the following formulas (4) and (5) as a main component.

The expression "comprising as a main component" means that in 100 % by weight of the polylactic acid-based resin (1), the constituting unit represented by anyone selected from the group consisting of the combination of the formulas (2) and (3), and the combination of the formulas (4) and (5) is contained in an amount of not less than 60 % by weight, more preferably not less than 90 % by weight.

[Chemical formula 3]

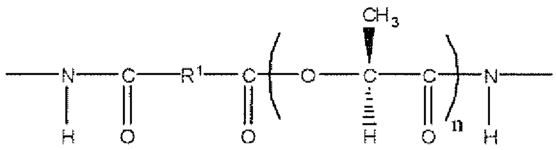

(2)

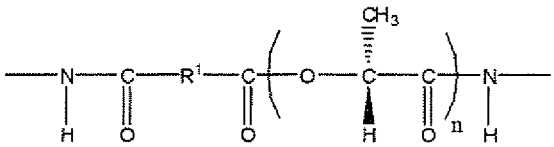

(3)

In the formulas (2) and (3), each of $R^1_s$ is a substituted or unsubstituted aliphatic hydrocarbon group having 1 to 20 carbon atoms, an unsaturated hydrocarbon group having 2 to 20 carbon atoms or an aromatic hydrocarbon group, n is an integer of 20 to 1500, preferably 25 to 1500, more preferably 30 to 1500. The substituted or unsubstituted aliphatic hydrocarbon group having 1 to 20 carbon atoms is a residue of the dicarboxylic acid or acid anhydride, and includes such as ethylene and the like. The unsaturated hydrocarbon group having 2 to 20 carbon atoms is a residue of the dicarboxylic acid or acid anhydride, and includes such as vinylene and the like. The aromatic hydrocarbon group is a residue of the dicarboxylic acid or acid anhydride, and includes such as 1,2-phenylene and the like.

In the formulas (2) and (3), less than 20 mol% of the unit derived from lactic acid in the parenthesis ( ) may be substituted by another optical isomer lactic acid, a component unit other than lactic acid or a unit derived from the initiator.

[Chemical formula 4]

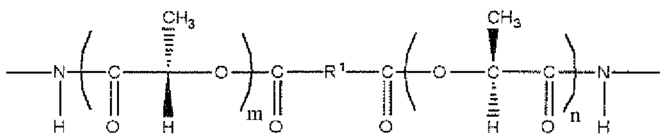

(4)

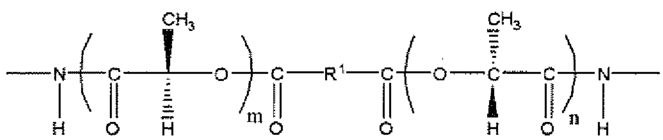

(5)

In the formulas (4) and (5), each of $R^1_s$ has the same meaning as $R^1$ in the formulas (2) and (3), and n and m have independently the same meaning as n in the formulas (2) and (3).

In the formulas (4) and (5), less than 20 mol% of the unit derived from lactic acid in the a parenthesis ( ) may be substituted by another optical isomer lactic acid, a component unit other than lactic acid or a unit derived from the initiator.

The polylactic acid-based resin comprising, as a main component, a constituting unit represented by selected from the group consisting of the combination of the formulas (2) and (3) and the combination of the formulas (4) and (5) can be produced by allowing the mixture comprising at least the poly(L-lactic acid) in which the percentage of the terminal functional group which is a carboxyl group exceeds 50% and the poly(D-lactic acid) in which the percentage of the terminal functional group which is a carboxyl group exceeds 50% to react with the polyisocyanate compound by the process as described above. Furthermore, it is preferred to use the amidation catalyst. Since using the amidation catalyst, the amidation reaction can be carried out in a mild condition and the side reaction can be inhibited, the high purity objective polylactic acid-based resin can be produced.

Each of the poly (L-lactic acid) and the poly (D-lactic acid) has a weight average molecular weight of preferably 5,000 to 100,000, more preferably 10,000 to 80, 000, furthermore preferably 10,000 to 50,000. Each of the poly(L-lactic acid) and the poly(D-lactic acid) preferably has a weight average molecular weight in the above range from the viewpoint of the processing time, and from the viewpoint of heat resistance because the resulting polylactic acid-based resin gets higher melting point. Moreover, the mixture comprises the above copolymerization components.

The polylactic acid-based resin (I) according to the invention [1] preferably has a weight average molecular weight of 50,000 to 1,000,000. The lower limit of the weight average molecular weight is more preferably not less than 70,000, furthermore preferably not less than 100,000. The upper limit thereof is more preferably not more than 700,000, furthermore preferably not more than 500,000. Specifically, the weight average molecular weight is preferably 100,000 to 1,000,000, more preferably 100,000 to 700,000, furthermore preferably 100,000 to 500, 000. The polylactic acid-based resin preferably has a weight average molecular weight in the above range from the viewpoints of molding properties and mechanical strength. The weight average molecular weight of the polylactic acid-based resin is in the above range and is not less than 3 times and not more than 200 times, more preferably not less than 4 times and not more than 100 times, particularly preferably not less than 5 times and not more than 50 times as much as the weight average molecular weight of each of the poly(L-lactic acid) and the poly(D-lactic acid). The weight average molecular weight is preferably in the above range from the viewpoint of resin properties, such as mechanical properties because the molecular weight of the polylactic acid-based resin can be increased.

One example of the process for producing the polylactic acid-based resin having a constituting unit represented by the combination of the formulas (2) and (3) as a main component is described below.

[Chemical formula 5]

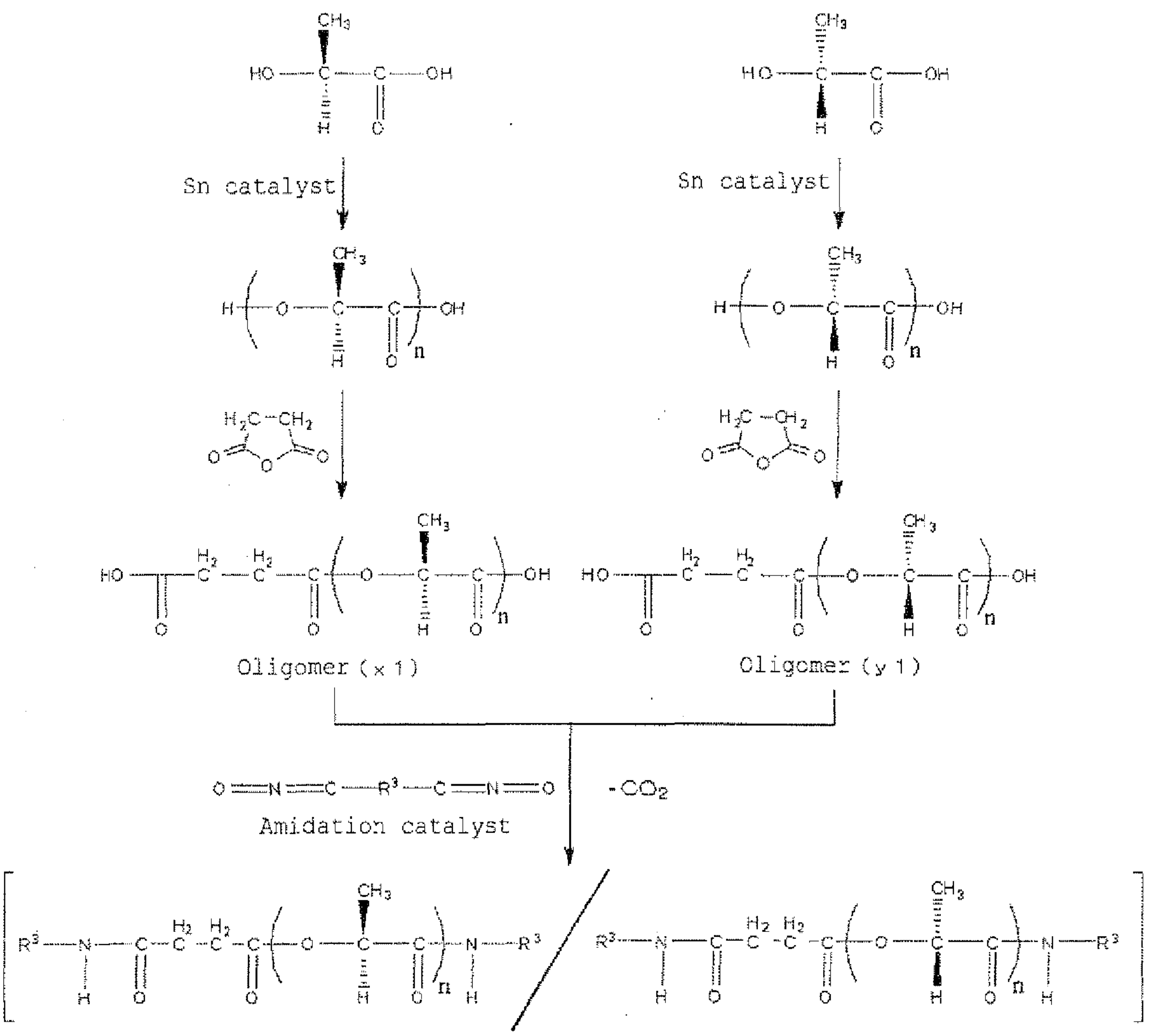


In the formula, $R^3$ has the same meaning as that of R in the formula (1) and n has the same meaning as n in the formulas (2) and (3).

One example of the process for producing the polylactic acid-based resin having a constituting unit represented by the formulas (4) and (5) as a main component is described below.

[Chemical formula 6]

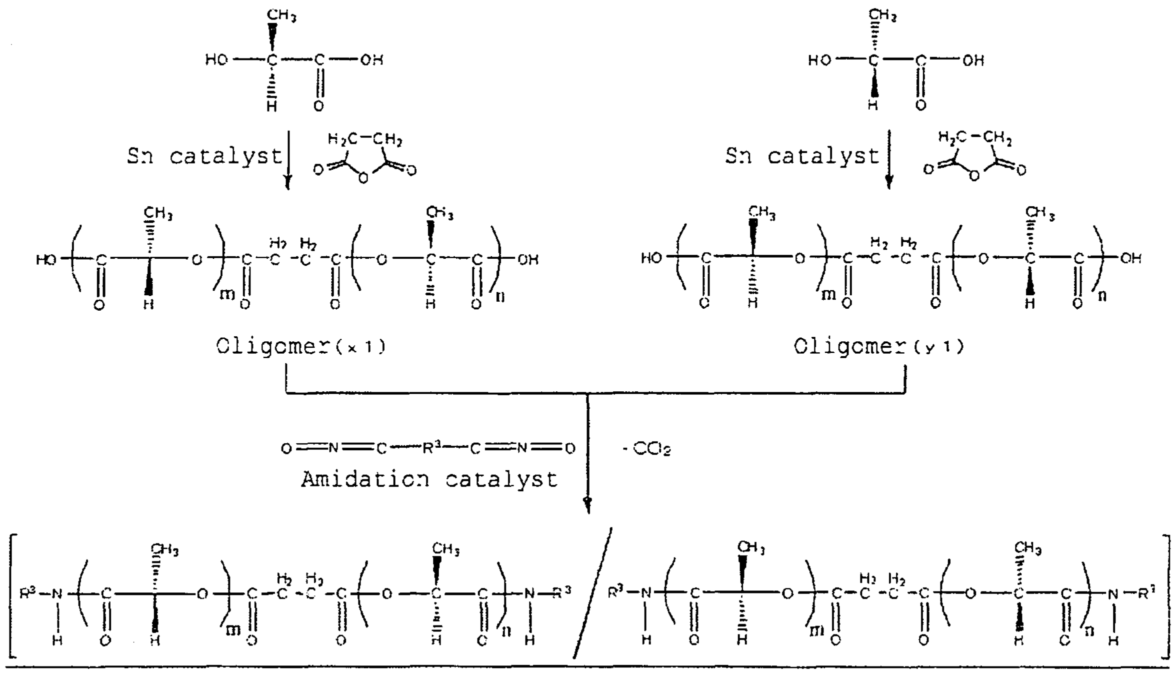


In the formula, $R^3$ has the same meaning as that of R in the formula (1), and n and m have the same meanings as those in the formulas (4) and (5).

Reaction temperature

The reaction temperature in the process is preferably 40 to 230°C, more preferably 60 to 200°C, particularly preferably 80 to 180°C. The reaction temperature in the process is preferably in the above range because the reaction rate is high and gelation is difficult to occur. When the reaction temperature in the process is over the above upper limit, the crosslinking reaction proceeds and gelation is apt to occur easily. When it is less than the lower limit, the reaction rate is decreased and thereby it sometimes takes much time to increase the molecular weight.

Reaction solvent

As the solvent used in the process, there are an aromatic-based hydrocarbon, a halogen-based hydrocarbon and an aromatic ether.
Examples of the aromatic-based hydrocarbon are toluene, m-xylene, p-xylene, xylene (isomer mixture), ethyl benzene, mesitylene, tetralin, m-diisopropyl benzene, p-diisopropyl benzene and diisopropyl benzene (isomer mixture).
Examples of the halogen-based hydrocarbon are methylene chloride, chloroform, 1,2-dichloroethane and 1,2-dichlorobenzene.
Examples of the aromatic-based ether are diphenyl ether and the like. Among them, tetralin, m-diisopropyl benzene, p-diisopropyl benzene, diisopropyl benzene (isomer mixture), 1,2-dichlorobenzene and diphenyl ether are preferred from the viewpoints of solubility and general-purpose properties.
These may be used singly or two or more may be combined for use.

Solvent--free reaction

In the process, the viscosity increases rapidly with increase of the molecular weight of the reactant. On this account, in addition to the process of reaction in the form of the solution with stirring, a process of kneading and reacting without a solvent, and extruding a product by an extruder, particularly a twin axial kneading extruder is effective because

the solvent is unnecessary and the post treatment of the product is simple.

Polyisocyanate compound

The polyisocyanate compound used in the process is a compound having at least two isocyanate groups, and it is not particularly limited as long as the objects of the invention [1] are accomplished. Examples of the polyisocyanate compound having three or more isocyanate groups are triisocyanates such as 1,6,11-undecane triisocyanate, etc., and polyisocyanate substituted compounds such as polyphenyl methane polyisocyanate, etc. The polyisocyanate compound is preferably a diisocyanate compound.

Examples of the diisocyanate compound are 2,4-tolylene diisocyanate, a mixture of 2,4-tolylene diisocyanate and 2,6-tolylene diisocyanate, diphenylmethane diisocyanate, 1,5-naphthylene diisocyanate, xylene diisocyanate, tetramethylene diisocyanate, pentamethylene diisocyanate, hexamethylene diisocyanate, dodecamethylene diisocyanate, isophorone diisocyanate, 1,3-(bisisocyanatomethyl)cyclohexane, 1,4-bis(isocyanatomethyl)cyclohexane, bis(isocyanatomethyl)bicycle-[2,2,1]-heptane and bis(4-isocyanatocyclohexyl)methane. More preferable examples thereof are 1, 3-xylene diisocyanate, tetramethylene diisocyanate, pentamethylene diisocyanate, hexamethylene diisocyanate, dodecamethylene diisocyanate, isophorone diisocyanate, 1,3-(bisisocyanatomethyl)cyclohexane, 1,4-bis(isocyanatomethyl)cyclohexane, bis(isocyanatomethyl)bicycle-[2,2,1]-heptane and bis(4-isocyanatocyclohexyl)methane.

Among them, at least one compound selected from the group consisting of tetramethylene diisocyanate, pentamethylene diisocyanate, hexamethylene diisocyanate, dodecamethylene diisocyanate, isophorone diisocyanate, 1,3-(bisisocyanatomethyl)cyclohexane, bis(isocyanatomethyl)bicycle-[2,2,1]-heptane and bis(4-isocyanatncyclahexyl)methane is preferred, or an aliphthalic diisocyanate compound is preferred. It is particularly preferably hexamethylene diisocyanate. The polyisocyanate compound is preferably the above compound from the viewpoint of the color tone of the resulting polylactic acid-based resin (I).

Addition amount of Polyisocyanat

The addition amount of the polyisocyanate compound is determined by the mole number calculated from the number of all of the terminal functional groups of the mixture comprising at least the poly(L-lactic acid) and the poly (D-lactic acid). The method of determining the number of the terminal functional groups in the poly(L-lactic acid) and the poly(D-lactic acid) is calculated from NMR and the carboxylic acid value. The NMR and carboxylic acid value are measured by the methods as described in the example.

The addition amount of the polyisocyanate compound is preferably from 0.8 to 2.0 times mol, more preferably 0.8 to 1.5 times mol, particularly preferably 0.8 to 1.3 times mol based on the mol number of the terminal functional groups of the mixture comprising at least the poly (L-lactic acid) and the poly (D-lactic acid). The "times mol" is a unit of a value calculated by dividing the number of isocyanate groups (mol) by the number of terminal functional groups (mol).

When the addition amount of the polyisocyanate compound is less than the lower limit, the effect of adding the polyisocyanate compound is small and thereby it is sometimes difficult to prepare the polylactic acid-based resin (I) having a high molecular weight. While, when it is over the upper limit, the side reaction such as crosslinking reaction or the like is caused by isocyanate to occasionally generate the polylactic acid-based resin (I) in a gel state.

Amidation catalyst

The amidation catalyst in the invention [1] is a catalyst capable of forming an amide bond by preferentially allowing the terminal carboxyl group parts of the poly (L-lactic acid) and the poly(D-lactic acid) to react with the polyisocyanate compound.

The amidation catalyst which may be used in the process preferably comprises at least one metal selected from the group consisting of metals in Groups 1, 2 and 3 in the Periodic Table, more preferably at least one metal selected from the group consisting of potassium, magnesium, calcium and ytterbium, particularly preferably magnesium or calcium. The amidation catalyst preferably comprises such a metal from the viewpoints of the catalyst effect and the color tone of the polylactic acid-based resin (I).

Examples of the amidation catalyst comprising the metals in Group 1 in the Periodic Table are an organic metal compound such as an organic acid salt, a metal alkoxide and a metal complex (for example, acetylacetonato) of lithium, sodium, potassium, rubidium and cesium; and an inorganic metal compound such as a metal oxide, a metal hydroxide, a carbonate, a phosphate, a sulfate, a nitrate, a chloride and a fluoride. Examples of the amidation catalyst comprising the metal in Group 2 in the Periodic Table are an organic metal compound such as an organic acid salt, a metal alkoxide and a metal complex (for example, acetylacetonato) of beryllium, magnesium, calcium, strontium and barium; and an inorganic metal compound such as a metal oxide, a metal hydroxide, a carbonate, a phosphate, a sulfate, a nitrate, a chloride and a fluoride. Examples of the amidation catalyst comprising the metal in Group 3 in the Periodic Table are

an organic metal compound such as an organic acid salt, a metal alkoxide and a metal complex (for example, acetylacetonato) of scandium, ytterbium, yttrium and other rare earthes; and an inorganic metal compound such as a metal oxide, a metal hydroxide, a carbonate, a phosphate, a sulfate, a nitrate, a chloride and a fluoride. These may be used singly or combined for use. Among the metal compound catalysts, bis(acetylacetonato)magnesium, magnesium stearate, calcium stearate, magnesium chloride and ytterbium trifulate are preferred. Furthermore, a magnesium compound is preferred. Particularly, bis(acetylacetonato)magnesium and magnesium stearate are preferred. Two or more of these catalysts may be used simultaneously.

Addition amount of amidation catalyst

The addition amount of the amidation catalyst is preferably 0.01 to 2 parts by weight, more preferably 0.01 to 1 part by weight, furthermore preferably 0.01 to 0.5 part by weight based on 100 parts by weight of the mixture comprising at least the poly(L-lactic acid) and the poly(D-lactic acid).

The mixture comprising at least the poly (L-lactic acid) and the poly(D-lactic acid) in the invention [1] in which the percentage of the terminal functional group which is a carboxyl group exceeds 50%. There is a case that the other terminal functional groups are hydroxyl groups. In this case, the hydroxy part reacts with the polyisocyanate compound to form a urethane bond. The polyisocyanate compound is preferably a diisocyanate compound.

Examples of the catalyst capable of forming such a urethane bond are dibutyl tin dilauryrate, dibutyl tin dichloride, dibutyl tin oxide, dibutyl tin dibromide, dibutyl tin dimaleate, dibutyl tin diacetate, dibutyl tin sulfide, tributyl tin sulf ide, tributyl tin oxide, tributyl tin acetate, triethyl tin ethoxide, tributyl tin ethoxide, dioctyl tin oxide, tributyl tin chloride, tributyl tin trichloroacetate, 2-ethylhexanoic acid tin, a titanium type catalyst such as dibutyl titanium dichloride, tetrabutyl titanate and butoxytitanium trichloride;

a lead type catalyst such as lead oleate, lead 2-ethylhexanoate, lead benzoate, lead naphthenate;

a iron type catalyst such as iron 2-ethylhexanoate and iron acetylacetonato;

a cobalt type catalyst such as cobalt benzoate and cobalt 2-ethylhexanoate;

a zinc type catalyst such as zinc naphthenate and zinc 2-ethylhexanoate; zirconium naphthenate, triethylamine, triethylene diamine, N,N-dimethyl benzylamine, N-methyl morpholine and diazabicycloundecene (DBU). The addition amount of the catalyst capable of forming a urethane bond is preferably 0.01 to 2 parts by weight, more preferably0. 01 to 1 part by weight, furthermore preferably 0.01 to 0.5 part by weight based on 100 parts by weight of the mixture comprising at least the poly(L-lactic acid) and the poly(D-lactic acid).

Melting point (Tm) of polylactic acid-based resin (I)

In the polylactic acid-based resin (I) in the invention [1] the melting point (hereinafter referred to as "Tm") a peak top of melting peaks in increasing the temperature at a rate of 10°C /min by measurement with a differential scanning calorimeter is preferably 180°C ≤ Tm ≤ 230°C, more preferably 190°C ≤ Tm ≤ 230°C, furthermore preferably 200°C Tm ≤ 230°C. The Tm of the polylactic acid-based resin (I) is preferably in the above range from the viewpoint of heat resistance.

The value of Tm is a value determined by the measuring method as described in the example.

Stabilizer

The polylactic acid-based resin (I) may comprise a stabilizer. The stabilizer is contained in an amount of preferably 0.001 to 5 parts by weight, more preferably 0.001 to 2.5 parts by weight, furthermore preferably 0.001 to 1 part by weight, moreover preferably 0.005 to 1 part by weight, particularly preferably 0.01 to 3 parts by weight, especially preferably 0.01 to 1 part by weight based on 100 parts by weight of the polylactic acid-based resin (I). The stabilizer is preferably contained in an amount of the above range from the viewpoints of coat and resin appearance.

Examples of the stabilizer are a phenol-based compound (hindered phenol-based compound), a thioether-based compound, a vitamin-based compound, a triazole-based compound, a polyvalent amine-based compound, a hydrazine derivative-based compound and a phosphorus-based compound, and a combination thereof. Among them, the stabilizer preferably comprises at least one of the phosphorus-based compounds, more preferably a phosphate-based compound and a phosphite-based compound. Preferable examples thereof are "ADEKASTAB" AX-71 (dioctadecyl phosphate), PEP-8 (distearyl pentaerythritol diphosphite) and PEP-36 (cyclic neopentanetetrayl bis(2,6-t-butyl-4-methylphenyl) phosphite) manufactured by ADEKA. It is considered that the phosphorus-based stabilizer acts as a quencher for the amidation catalyst described later and/or acts as a quencher for the catalyst used in preparation of the poly(L-lactic acid) and the poly(D-lactic acid). It is effective to use the phosphorus-based stabilizer as a method of removing the catalyst in the production of the polylactic acid-based resin (I) according to the invention [1].

Specific examples of the phenol-based compounds (hindered phenol-based compound) are

n-octadecyl-3-(3',5'-di-t-butyl-4'-hydroxyphenyl)- propionate,
n-octadecyl-3-(3'-methyl-5'-t-butyl-4'-hydroxyphenyl)-propionate,
n-tetradecyl-3-(3',5'-di-t-butyl-4'-hydroxyphenyl)-propionate,
1,6-hexanediol-bis-[3-(3,5-di-t-butyl-4-hydroxyphenyl)-propionate],
1,4-butanediol-bis-[3-(3,5-di-t-butyl-4-hydroxyphenyl)-propionate],
2,2'-methylenebis-(4-methyl-t-butylphenol),
triethylene glycol-bis-[3-(3-t-butyl-5-methyl-4-hydroxyphenyl)-propionate],
tetrakis[methylene-3-(3',5'-di-t-butyl-4'-hydroxyphenyl) propionate]methane,
3,9-bis[2-{3-(3-t-butyl-4-hydroxy-5-methylphenyl)propionyloxy }-1,1-dimethylethyl]2,4,8,10-tetraoxaspiro(5,5)undecane,
N,N'-bis-3-(3',5'-di-t-butyl-4'-hydroxyphenyl)propionyl hexamethylene diamine,
N,N'-tetramethylene-bis-3-(3'-methyl-5'-t-butyl-4'-hydroxy phenol)propionyl diamine,
N,N'-bis-[3-(3,5-di-t-butyl-4-hydroxyphenol)propionyl] hydrazine,
N-salicyloyl-N'-salicylidene hydrazine,
3-(N-salicyloyl)amino-1,2,4-triazole,
N,N'-bis[2-{3-(3,5-di-t-butyl-4-hydroxyphenyl)propionyloxy} ethyl]oxyamide,
pentaerythrytyl-tetrakis[3-(3,5-di-t-butyl-4-hydroxyphenyl) propionate] and
N,N'-hexamethylene bis-(3,5-di-t-butyl-4-hydroxyhydrocinnamide.

Preferable examples are triethylene glycol-bis-[3-(3-t-butyl-5-methyl--4-hydroxyphenyl)-propionate],
tetrakis[methylene-3-(3',5'-di-t-butyl-4'-hydroxyphenyl) propionate]methane,
1,6-hexanediol-bis-[3-(3,5-di-t-butyl-4-hydroxyphenyl)-propionate],
pentaerythrytyl-tetrakis[3-(3,5-di-t-butyl-4-hydrxyphenyl) propionate],
N,N'-hexamethylene bis-(3,5-di-t-butyl-4-hydroxyhydrocinnamide).

Specific trade names of the phenol-based compounds (hindered phenol-based compounds) are "ADKASTAB" AO-20, AO-30, AO-40, AO-50, AO-60, AO-70, AO-80 and AO-330 manufactured by ADEKA, "IRGANOX" 245, 259, 565, 1010, 1035, 1076, 1098, 1222, 1330, 1425, 1520, 3114 and 5057 manufactured by Ciba Specialty Chemical, "SUMILIZER" BHT-R, MDP-S, BBM-S, WX-R, NW, BP-76, BP-101, GA-80, GM and GS manufactured by Sumitomo Chemical Industry, "CYANOX" CY-1790 manufactured by Cyanamide and the like.

Specific examples of the thioether-based compounds are dilauryl thiodipropionate, ditridecyl thiodipropionate, dimyristyl thiodipropionate, distearyl thiodipropionate, pentaerythritol-tetrakis(3-lauryl thiopropionate), pentaerythritol-tetrakis(3-dodecyl thiopropionate), pentaerythritol-tetrakis(3-octadecyl thiopropionate), pentaerythritol-tetrakis(3-myristyl thiopropionate) and pentaerythritol-tetrakis(3-stearyl thiopropionate).

Specific trade names of the thioether-based compounds are "ADKASTAB" AO-23, AO-412S and AO-503A manufactured by ADEKA, "IRGANOX" PS802 manufactured by Ciba Specialty Chemical, "SUMILIZER" TPL-R, TPM, TPS and TP-D manufactured by Sumitomo Chemical Industry, DSTP, DLTP, DLTOIB and DMTP manufactured by API corporation, "SEENOX" 412S manufactured by Shipro Kasei, "CYANOX" 1212 manufactured by Cyanamide and the like.

Specific examples of the vitamin-based compounds are natural compounds such as acetic acid d-$\alpha$-tocopherol, succinic acid d-$\alpha$-tocopherol, d-$\alpha$-tocopherol, d-$\beta$-tocopherol, d-$\gamma$-tocopherol, d-$\delta$-tocopherol, d-$\alpha$-tocotrienol, d-$\beta$-tocotrienol, d-$\gamma$-tocotrienol and d-$\delta$-tocotrienol; and synthetic compounds such as dl-$\alpha$-tocopherol, acetic acid dl-$\alpha$-tocopherol, succinic acid dl-$\alpha$-tocopherol calcium and nicotinic acid dl-$\alpha$-tocopherol.

Specific trade names of the vitamin-based compounds are "Tocopherol" manufactured by Eisai, "IRGANOX" E201 manufactured by Ciba Specialty Chemical and the like.

Specific examples of the triazole-based compounds are benzotriazole and 3-(N-salicyloyl)amino-1,2,4-triazole.

Specific examples of the polyvalent amine-based compounds are
3,9-bis[2-(3,5-diamino-2,4,6-triazaphenyl)ethyl]-2,4,8,10-tet raoxaspiro[5,5]undecane, ethylenediamine-tetraacetic acid and an alkali metal salts (Li, Na and K) salt of
ethylenediamine-tetraacetic acid, N,N'-disalicylidene-ethylene diamine, N,N'-disalicylidene-1,2-propylene diamine,
N,N''-disalicylidene-N'-methyl-dipropylene triamine and 3-salicyloyl amino-1,2,4-triazole.

Specific examples of the hydrazine derivative-based compounds are decamethylene dicarboxylic acid-bis(N'-salicyloyl hydrazide),isophthalic acid bis (2-phenoxypropionyl hydrazide), N-formyl-N'-salicyloyl hydrazine, 2,2-oxamido bis-[ethyl-3-(3,5-di-t-butyl-4-hydroxyphenyl)propionate], oxalyl-bis-benzylidene-hydrazide,
nickel-bis(1-phenyl-3-methyl-4-decanoyl-5-pyrazolate), 2-ethoxy-2'-ethyloxanilide,
5-t-butyl-2-ethoxy-2'-ethyloxanilide,
N,N-diethyl-N',N'-diphenyloxamide,
N,N'-diethyl-N,N'-diphenyloxamide, oxalic acid-bis(benzylidene hydrazide), thiodipropionic acid-bis(benzylidene hydrazide), bis(salicyloyl hydrazine), N-salicylidene-N'-salicyloyl hydrazone,
N,N'-bis[3-(3,5-da.-t-butyl-4-hydroxyphenyl)propionyl] hydrazine,

N,N'-bi-s[2-[3-(3,5-di-t-butyl-4-hydroxyphenyl)propionyloxyl ethyl[oxamide.

Examples of the phosphorus-based compounds are a phosphite-based compound and a phosphate-based compound. Specific examples of the phosphite-based compounds are tetrakis[2-t-butyl-4-thio(2'-methyl-4'-hydroxy-5'-t-butyl phenyl)-5-methylphenyl]-1,6-hexamethylene-bis (N-hydroxyethyl-N-methyl semicarbazide)-diphosphite, tetrakis[2-t-butyl-4-thio(2'-methyl-4'-hydroxy-5'-t-butyl phenyl)-5-methylphenyl]-1,10-decamethylene-di-carboxylic acid-di-hydroxyethyl carbonyl hydrazide)-diphosphite, tetrakis[2-t-butyl-4-thio(2'-methyl-4'-hydroxy-5'-t-butyl phenyl)-5-methylphenyl]-1,10-decamethylene-di-carboxylic acid-di-salicyloyl hydrazide-diphosphite, tetrakis[2-t-butyl-4-thio(2'-methyl-4'-hydroxy-5'-t-butyl phenyl)-5-methylphenyl]-di(hydroxyethylcarbonyl) hydrazide-diphosphite, tetrakis[2-t-butyl-4-thio(2'-methyl-4'-hydroxy-5'-t-butyl phenyl)-5-methylphenyl]-N,N'-bis(hydroxyethyl)oxamido-diphosphite,
distearyl pentaerythritol diphosphite, and cyclic neopentanetetraylbis(2,6-t-butyl-4-methylphenyl)phosphite.

Furthermore, a compound, which at least one P-O bond is bonded to an aromatic group, is more preferred. Specific examples thereof are

tris(2,4,-di-t-butylphenyl)phosphite,
tetrakis(2,4-di-t-butylphenyl)-4,4'-biphenylene phosphonite,
bis(2,4-di-t-butylphenyl)pentaerythritol-di-phosphite,
bis(2,6-di-t-butyl-4-methylphenyl)pentaerythritol-di-phosphite, 2,2-methylenebis(4,6-di-t-butylphenyl)octyl phosphite, 4,4'-butylidene-bis(3-methyl-6-t-butylphenyl-di-tridecyl) phosphite, 1,1,3-tris(2-methyl-4-ditridecyl phosphite-5-t-butyl--phenyl)butane, tris(mixed mono and
di-nonylphenyl)phosphite, tris(nonylphenyl)phosphite and
4,4'-isopropylidene bis(phenyl-dialkyl phosphite).

Furthermore, it is preferred to use tris(2,4,-di-t-butylphenyl) phosphite, 2,2-methylenebis(4,6-di-t-butylphenyl)octyl phosphite, bis(2,6-di-t-butyl-4-methylphenyl) pentaerythritol-di-phosphite and tetrakis(2,4-di-t-butylphenyl)-4,4'-biphenylene phosphonite.

Specific trade names of the phosphate-based compounds are "ADEKASTAB" C, PEP-4C, PEP-8, PEP-11C, PEP-24G, PEP-36, HP-10, 2112, 260, 522A, 329A, 1178, 1500, C, 135A, 3010 and TPP manufactured by ADEKA, "IRGAFOS" 168 manufactured by Ciba Specialty Chemical, "SUMILIZER" P-16 manufactured by Sumitomo Chemical, "SANDOSTAB" PEPQ manufactured by Clariant, "WESTON" 618,619G and 624 manufactured by GE and the like.

Specific examples of the phosphate-based compound are monostearyl acid phosphate, distearyl acid phosphate, methyl acid phosphate, isopropyl acid phosphate, butyl acid phosphate, octyl acid phosphate, isodecyl acid phosphate and dioctadecyl phosphate. Among them, monostearyl acid phosphate and distearyl acid phosphate are preferred. Specific trade names of the phosphate-based compound are "IRGANOX" MD1024 manufactured by Ciba Specialty Chemical, "INHIBITOR" OABH manufactured by Eastman Kodak, "ADEKASTAB" CDA-1, CDA-6 and AX-71 manufactured by ADEKA and the like.

Decrease in molecular weight of polylactic acid-based resin (I)

The polylactic acid-based resin (I) in the invention [1] preferably satisfies the following formula $MY \geqq 0.8 \times MX$, more preferably $MY \geqq 0.9 \times MX$ wherein MX is the weight average molecular weight of the polylactic acid-based resin and My is the weight average molecular weight of the polylactic acid-based resin after keeping at 240°C for 10 min. When the polylactic acid-based resin (I) has the relation of MX and MY in the above range, a decrease in melt viscosity is difficult to occur at the time of molding and stable processing and molding can be performed.

Additive

To the polylactic acid-based resin (I), normal conventional additive can be added as long as the objects of the invention [1] are accomplished. Examples of the additives are:

fillers (glass fiber, carbon fiber, metal fiber, natural fiber, organic fiber, glass flake, glass bead, ceramic fiber, ceramic bead, asbestos, wollastonite, talc, clay, mica, sericite, zeolite, bentonite, montmorillonite, synthetic mica, dolomite, kaolin, silicic acid fine powder, feldspar powder, potassium titanate, shirasu balloon, calcium carbonate, magnesium carbonate, barium sulfate, calcium oxide, aluminum oxide, titanium oxide, aluminum silicate, silicone oxide, gypsum, novaculite, dawsonite, white clay or the like);
ultraviolet ray absorbents (resorcinol, salicylate, benzotriazole, benzophenone and the like);
heat stabilizers (for example, hindered phenol, hydroquinone and phosphites, and their substituents);
lubricants and mold-releasing agents (montanic acid, a salt thereof, an ester thereof and a half ester thereof, stearyl alcohol, stearamide, polyethylene wax and the like);

coloring agents such as a dye (nigrosine, etc) and a pigment (cadmium sulfide, phthalocyanine and the like);
anti-coloring agents (phosphate, hypophosphite and the like);
flame retardants (for example, red phosphorus, phosphoric acid ester, brominated polystyrene, brominated polyphenylene ether, brominated polycarbonate, magnesium hydroxide, melamine and cyanuric acid or its salt);
conductive agents and coloring agents (carbon black, etc.) ;
sliding improvers (graphite, fluororesin and the like);
crystal nucleating agents (an inorganic nucleating agent such as talc, an organic amide-based compound such as ethylene bis-lauric acid amide, ethylene-bis-12-dihydroxystearic acid amide and trimesic acid tricyclohexyl amide, a pigment type nucleating agent such as copper phthalocyanine and pigment yellow 110, an organic carboxylic acid metal salt, and zinc phenyl phosphonate and the like) ; and antistatic agents. It is possible to add one or two or more of the additives.

Blend

The polylactic acid-based resin (I) may further comprise at least one of other thermoplastic resins and thermosetting resins as long as the objects of the invention [1] are accomplished. Examples of the thermoplastic resin are a polyolefin such as polyethylene and polypropylene, an acryl resin, a polyamide, a polyphenylene sulfide resin, a polyether ether ketone resin, a polyester, a polysulfone, a polyphenylene oxide, a polyacetal, a polyimide, a polyether imide, a polylactic acid resin other than the polylactic acid-based resin (I) of the invention [1], a soft thermoplastic resin (for example, ethylene/glycidyl methacrylate copolymer, polyester elastomer, polyamide elastomer, ethylene/propylene terpolymer and ethylene/butene-1 copolymer). Examples of the thermosetting resin are a phenol resin, a melamine resin, a polyester resin, a silicone resin and an epoxy resin.
The content of the other thermoplastic resin or the thermosetting resin is not particularly limited as long as the objects of the invention [1] are accomplished, and it is preferably 0 to 50 parts by weight based on 100 parts by weight of the polylactic acid-based resin (I).

Method of molding and processing polylactic acid-based resin (I) and Use

The method of molding and processing the polylactic acid-based resin (I) is not particularly limited. Examples of the method are injection molding, extrusion molding, inflation molding, extrusion blow molding, foam molding, calender molding, blow molding, balloon molding, vacuum molding and spinning. Among them, it is preferred to employ the injection molding, foaming molding and spinning, which take advantage of the characteristics of the polylactic acid-based resin (I).
The polylactic acid-based resin (I) is also preferably used by the proper molding and processing to, for example, members of writing goods such as a ballpoint pen, a mechanical pencil and a pencil; members of stationeries; golf tees; members for smoke golf balls for opening pitch ceremony; capsules for oral medicines; carriers for anal and vaginal suppositories; carriers for skin and mucous plasters; capsules for agrichemicals; capsules for fertilizers; capsules for seed and seedling; composts; reels for fishing lines; floats for fishing, artificial flies for fishery; lures; buoy for fishery; decoys for hunting; shotgun capsules for hunting; camping outfits such as table wares; nails; piles; bundle materials; slip stoppers for mud and snowy load; blocks; lunch boxes; table wares; containers for lunches and prepared foods; chopsticks; disposable chopsticks; forks; spoons; skewers; tooth picks; cups for instant noodles; cups used in vending machines of drinks; containers or trays for eatables such as fresh fishes, dressed meats, vegetables and fruits, soybean curds and prepared foods; boxes used in fresh fish markets; bottles for milk products such as milks, yoghurts and lactic acid bacteria beverages; bottles for soft drinks such as carbonated drinks and cold drinks; bottles for alcoholic drinks such as beer and whiskeys; bottles with or without pump for shampoos or liquid soaps; tubes for tooth powder; cosmetic containers; detergent containers; bleach containers; cool boxes; flowerpots; casings for water--purifying cartridges; casings of artificial livers or artificial kidneys; members of injection syringes; cushioning materials for using in transporting electric home appliances such as televisions and stereos; cushioning materials for using in transporting precision instruments such as computers, printers and clocks; and cushioning materials for using in transporting ceramic materials such as glasses and chinaware. Utilizing high heat resistance and gas barrier properties, it can suitably be used to applications of containers for microwave ovens etc., fibers, films and the like. It is also preferably used to automobile material parts such as front doors, hubcaps in need of heat resistance and impact resistance, automobile interior parts such as car sheets and the like, home appliance material parts and OA equipment material parts, for example, chassis parts of products such as personal computers, headphone stereo, cellular phones, electric or electronic material parts such as reflectve material films and sheets, and polarizing films and sheets. Polylactic acid resin composition (C)
The polylactic acid resin composition of the invention [2] characterized in that the composition comprises a polylactic acid resin (A-1) comprising L-lactic acid as a main component and a polylactic acid resin (A-2) comprising D-lactic acid as a main component wherein at least one of the lactic acid resin (A-1) or (A-2) is a polylactic acid resin (B)

having an amide bond which can be obtained by allowing a polyisocyanate compound to react with a lactic acid oligomer (a-1) comprising L-lactic acid as a main component or a lactic acid oligomer (a-2) comprising D-lactic acid as a main component.

Polylactic acid resin (A-1) comprising L-lactic acid as a main component

The polylactic acid resin (A-1) comprises L-lactic acid as a main component.

In the invention [2], the expression "comprising L-lactic acid as a main component" means that a polymer comprises a constituting unit derived from L-lactic acid in an amount of not less than 60% by weight, preferably not less than 80 % by weight, more preferably not less than 90 % by weight.

The polylactic acid resin (A-1) has a weight average molecular weight of 50,000 to 1,000,000. The lower limit of the weight average molecular weight is more preferably not less than 70,000, furthermore preferably not less than 80,000. The upper limit is more preferably not more than 700,000, furthermore preferably not more than 500,000, moreover preferably not more than 300,000, particularly preferably not more than 200,000. In more detail, the weight average molecular weight is preferably from 70,000 to 500,000, more preferably 80,000 to 300,000, furthermore preferably 80,000 to 250,000. From the viewpoints of molding properties and mechanical strength, it is particularly preferably from 80,000 to 200,000. The weight average molecular weight is a value of a weight average molecular weight in terms of standard polystyrene by gel permeation chromatography (GPC) measurement using chloroform as the eluent.

The polylactic acid resin (A-1) is a polylactic acid resin which comprises a L-lactic acid unit represented by the following formula as a basic component.

[Chemical formula 7]

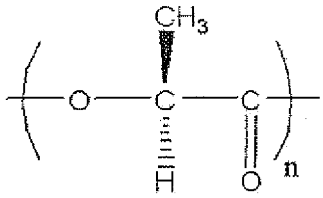

(In the formula, n is a natural number of from 1 to 2000.

The polylactic acid resin (A-1) is preferably a polylactic acid resin which comprises 90 to 100 % by mol of the L-lactic acid unit and 0 to 10 % by mol of the D-lactic acid unit and/or a component unit other than the lactic acids.

Examples of the component unit other than the lactic acids are a component unit derived from such as a monoalcohol or a monoamine, a dicarboxylic acid having a functional group capable of forming at least two ester bonds, a polyvalent alcohol, a polyvalent amine, a hydroxy carboxylic acid and lactone, and a component unit derived from various polyesters, various polyethers, various polyamide and various polycarbonates comprising these various component units. A further example thereof may be the following polylactic acid resin (B-a-1) having an amide bond which can be obtained by allowing the lactic acid oligomer (a-1) comprising L-lactic acid as a main component to react with a polyisocyanate.

Examples of the monoalcohol are butanol, pentanol, lauryl alcohol, benzyl alcohol and phenethyl alcohol. Examples of the monoamine are butyl amine, amyl amine, benzyl amine and phenethyl amine.

Examples of the dicarboxylic acid are succinic acid, phthalic acid, maleic acid, tetrabromo phthalic acid, tetrahydrophthalic acid and dodecyl succinic acid. Examples of the polyvalent alcohol are ethylene glycol, propylene glycol, butane diol, hexane diol, octane diol, neopentyl glycol, diethylene glycol, triethylene glycol, polyethylene glycol, polypropylene glycol, glycerin, trimethylol propane, pentaerythritol, dipentaerythritol, tripentaerythritol, sorbitol, poly(vinyl alcohol), poly(hydroxyethyl methacrylate) and poly(hydroxypropyl methacrylate). Examples of the polyvant amine are ethylene diamine, propylene diamine, butylene diamine, pentylene diamine, hexylene diamine, heptylene diamine, diethylene triamine and melamine. Examples of the hydroxy carboxylic acid are glycolic acid, 3-hydroxy butyric acid, 4-hydroxy butyric acid, 2-hydroxy-n-butyric acid, 2-hydroxy-3,3-dimethyl butyric acid, 2-hydroxy-3-methyl butyric acid, 2-methyl lactic acid, 2-hydroxy caproic acid, 2-cyclohexyl-2-hydroxy acetic acid and mandelic acid. Examples of the lactone are glycolide, ε-caprolactone glycolide, ε-caprolactone, β-propiolactone, δ-butylolactone, β-or γ-butylolactone, pivalolactone and δ-valerolactone.

The process for producing polylactic acid resin (A-1)

The polylactic acid resin (A-1) can be produced by a known polymerization process for a polylactic acid resin,

for example, ring opening polymerization of lactide, dehydration condensation of lactic acid and a process of combining either of these processes with solid phase polymerization. Furthermore, it can be produced by the process of producing the polylactic acid resin (B) as described later.

Direct polycondensation method

As a specific example of the method for producing the polylactic acid resin (A-1) by the direct polycondensation method, there is a method for producing the polylactic acid resin (A-1) which method comprises heating L-lactic acid as a raw material in an inert gas atmosphere, subjecting to polycondensation reaction by decreasing the pressure and finally carrying out polycondensation reaction at a prescribed temperature under a prescribed pressure.

The polycondensation reaction may be carried out in the presence of a catalyst in order to shorten the polycondensation time. Examples of the catalyst are Groups 2, 12, 13, 14 and 15 metals in the Periodic Table, oxides thereof and salts thereof. Specific examples are metals such as zinc dust, tin dust, aluminum and magnesium;
metal oxides such as antimony oxide, zinc oxide, tin oxide, aluminum oxide, magnesium oxide and titanium oxide;
metal halides such as tin(II) chloride, tin(IV) chloride, tin(II) bromide, tin(IV)bromide, antimony fluoride, zinc chloride, magnesium chloride and aluminum chloride;
carbonates such as magnesium carbonate and zinc carbonate;
organic carboxylates such as tin acetate, tin octanoate, tin lactate, zinc acetate and aluminum acetate; and organic sulfonates such as tin trifluoromethane sulfonate, zinc trifluoromethane sulfonate, magnesium trifluoromethane sulfonate, tin methane sulfonate and tin p-toluene sulfonate. Other examples thereof may include organic metal oxides of the above metals such as dibutyl tin oxide and the like; metal alkoxides of the above metals such as titanium isopropoxide and the like; alkyl metals of the above metals such as diethyl zinc and the like; ion exchange resins such as Dowex and Amberlite; protonic acids such as sulfuric acid, methane sulfonic acid and p-toluene sulfonic acid and the like. Preferable examples include metal such as tin or zinc and their metal compounds from the view point of high polymerization rate and can prepare a polymer having a high molecular weight. Furthermore, it is particularly preferred to use metal tin, or tin compounds such as tin oxide and tin chloride from the viewpoints of hue and catalyst activity. The addition amount of the catalyst, which is not particularly limited, is preferably 0.001 to 2 parts by weight, more preferably 0.001 to 1 part by weight based on 100 parts by weight of the L-lactic acid used.

Although the catalyst is not an essential component in the invention [2], when the catalyst amount is less than 0.001 part by weight, the catalyst effect capable of shortening the polymerization time is sometimes not sufficiently exerted. When the catalyst is added in an amount of over 2 parts by weight, it is sometimes to need a step of removing the catalyst residue separately in order to inhibit the decrease of molecular weight and thermal decomposition caused by the influence of the catalyst residue at the time of molding and processing the polylactic acid-based resin.

Ring Opening polymerization method

As an example of the process for producing the polylactic acid resin (A-1) by the ring opening polymerization method, there is a method that L-lactide which is a lactic acid cyclic dimer is subjected to ring opening polymerization using an initiator such as a compound having one or more hydroxyl groups or amino groups in one molecule, a hydroxy carboxylic acid, water and the like.

Examples of the compound having one hydroxyl group or amino group in one molecule may include monoalcohols such as butanol, pentanol, lauryl alcohol, benzyl alcohol, phenethyl alcohol; and monoamines such as butyl amine, amyl amine, benzyl amine and phenethyl amine.

Examples of the compound having one or more hydroxyl groups or amino groups in one molecule may include polyvalent alcohols such as ethylene glycol, propylene glycol, butane diol, hexane diol, octane diol, neopentyl glycol, diethylene glycol, triethylene glycol, polyethylene glycol, polypropylene glycol, glycerin, trimethylol propane, pentaerythritol, dipentaerythritol, tripentaerythritol, sorbitol, poly(vinylalcohol), poly(hydroxyethylmethacrylate) and poly(hydroxypropyl methacrylate); and polyvalent amines such as ethylene diamine, propylene diamine, butylene diamine, pentylene diamine, hexylene diamine, heptylene diamine, diethylene triamine and melamine.

Although the addition amount of the initiator is not particularly limited, it is preferably from 0.001 to 5 parts by weight, more preferably 0.01 to 3 parts by weight based on 100 parts by weight of the L-lactide used.

When the amount of the polymerization initiator is in the above range, the molecular weight can be controlled in the desired range.

The ring-opening polymerization may be carried out in the presence of a catalyst in order to shorten the polymerization time.

Examples of the catalyst are metals such as tin, zinc, lead, titanium, bismuth, zirconium, germanium, antimony and aluminum, and their derivatives. Preferable examples of the derivatives are metal alkoxides, carboxylates, carbonates, oxides and halides. Specific examples are tin chloride, tin octylate, zinc chloride, zinc acetate, lead oxide, lead

carbonate, titanium chloride, alkoxy titanium, germanium oxide and zirconium oxide. Among them, a tin compound is preferred and tin 2-ethylhexanoate is more preferred. Although the addition amount of the catalyst is not particularly limited, the amount is preferably from 0.001 to 2 parts by weight, more preferably 0.001 to 1 part by weight based on 100 parts by weight of the L-lactide used.

In the invention [2], the catalyst is not an essential component, but when the catalyst amount is less than 0.001 part by weight, the catalyst effect capable of shortening the polymerization time, sometimes, is not exerted sufficiently. When it is over 2 parts by weight, a step of removing the catalyst residue is sometimes required separately in order to inhibit the decrease of molecular weight or thermal decomposition caused by the influence of the catalyst residue at the time of molding and processing the polylactic acid-based resin.

Solid phase polymerization

As the method of combining the direct polymerization method or the ring opening polymerization method with the solid phase polymerization method, it is possible to use methods as described in JP-A-2000-302852 and JP-A-2001-122954.

Polylactic acid resin (A-2) comprising D-lactic acid as a main component

The "main component" means that the polymer comprises the specified constituting unit in an amount of not less than 60 % by weight, preferably not less than 80% by weight, more preferably not less than 90% by weight.

The polylactic acid resin (A-2) has a weight average molecular weight of preferably from 50,000 to 1,000,000. The lower limit of the weight average molecular weight is more preferably not less than 70,000, furthermore preferably not less than 80,000. The upper limit is more preferably not more than 700,000, furthermore preferably not more than 500,000, moreover preferably not more than 300, 000, particularly preferably not more than 200,000. Specifically, the weight average molecular weight is preferably from 70,000 to 500,000, more preferably 80,000 to 300,000, furthermore preferably 80,000 to 250,000. It is particularly preferably from 80, 000 to 200, 000 from the viewpoints of molding properties and mechanical strength. The weight average molecular weight is a value of a weight average molecular weight in terms of standard polystyrene by gel permeation chromatography (GPC) measurement using chloroform as an eluent.

The polylactic acid resin (A-2) comprising D-lactic acid as a main component is a polylactic acid resin having a D-lactic acid unit represented by the following formula as a basic component.

[Chemical formula 8]

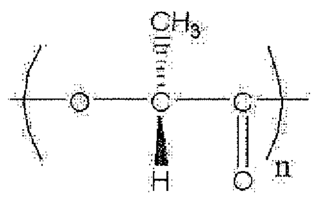

(In the formula, n is a natural number of from 1 to 2000.) The polylactic acid resin (A-2) is preferably a polylactic acid resin which comprises 90 to 100 % by mol of the D-lactic acid unit and 0 to 10 % by mol of the L-lactic acid unit and/or a component unit other than the lactic acids.

Examples of the component unit other than the lactic acids are the compounds inducing the component units other than the lactic acids which may be contained in the polylactic acid resin (A-1), as mentioned above.

As the production process for the polylactic acid resin (A-2), it can be produced by a known polymerization method for the polylactic acid resin. Specifically, the polylactic acid resin (A-2) can be produced by the same production process as the production process for the polylactic acid resin (A-1) except for replacing L-lactic acid to D-lactic acid as a raw material.

Polylactic acid resin (B)

The polylactic acid resin (B) is a polylactic acid resin having an amide bond which can be obtained by allowing a polyisocyanate to react with the lactic acid oligomer (a-1) or (a-2) as described later. It preferably has an amide bond from the viewpoints of heat resistance and improvement in the crystallinity of stereocomplex.

The polylactic acid resin (B) has a weight average molecular weight of preferably from 50,000 to 1,000,000.

The lower limit of the weight average molecular weight is more preferably not less than 70,000, furthermore preferably not less than 80,000. The upper limit is more preferably not more than 700, 000, furthermore preferably not more than 500,000, moreover preferably not more than 300,000, particularly preferably not more than 200,000. Specifically, the weight average molecular weight is preferably from 70,000 to 500,000, more preferably 80,000 to 300,000, furthermore preferably 80,000 to 250,000. It is particularly preferably from 80,000 to 200,000 from the viewpoints of handling properties at the time of production and capability for stereocomplex formation. The weight average molecular weight is a value of a weight average molecular weight in terms of standard polystyrene by gel permeation chromatography (GPC) measurement using chloroform as an eluent.

The weight average molecular weight of the polylactic acid resin (B) is not less than 3 times and not more than 200 times, more preferably not less than 4 times and not more than 100 times, particularly preferably not less than 5 times and not more than 50 times as much as the weight average molecular weight of the lactic acid oligomer (a-1) or (a-2), as described below.

Lactic acid oligomers (a-1) and (a-2)

The lactic acid oligomer (a-1) comprises L-lactic acid as a main component and the lactic acid oligomer (a-2) comprises D-lactic acid as a main component.

The lactic acid oligomer (a-1) and the lactic acid oligomer (a-2) are preferably the following lactic acid oligomer (b-1) and lactic acid oligomer (b-2), respectively.

The lactic acid oligomer (b-1) comprises 90 to 100 % by mol of the L-lactic acid unit and 0 to 10 % by mol of the D-lactic acid unit and/or a component unit other than lactic acids.

The lactic acid oligomer (b-2) comprises 90 to 100 % by mol of the D-lactic acid unit and 0 to 10 % by mol of the L-lactic acid unit and/or a component unit other than lactic acids.

Examples of the component unit other than the lactic acids are the same compounds as those of the component units other than the lactic acids which may be contained in the poly (L-lactic acid) and the poly(D-lactic acid) of the invention [1].

Each of the lactic acid oligomers (a-1) and (a-2) has a weight average molecular weight of preferably from 5,000 to 100,000, more preferably 10, 000 to 80, 000, furthermore preferably 10,000 to 70,000, particularly preferably 10,000 to 50,000. The weight average molecular weight is a value of a weight average molecular weight in terms of standard polystyrene by gel permeation chromatography (GPC) measurement using chloroform as an eluent.

Each of the lactic acid oligomers (a-1) and (a-2) has a carboxyl group in preferably over 50% of the terminal functional groups, more preferably not less than 85% of the terminal functional groups, furthermore preferably not less than 90% of the terminal functional groups, particularly preferably not less than 95% of the terminal functional groups. The lactic acid oligomers (a-1) and (a-2) are also preferably the poly(L-lactic acid) and the poly(D-lactic acid) of the invention [1], respectively.

The proportion of carboxyl group in the terminal functional groups is preferably higher from the viewpoints of heat resistance and crystallinity, because the resulting polylactic acid resin (B) has more amide bonds.

The polylactic acid resin (B) may comprise a copolymerization component other than the lactic acid oligomers (a-1) and (a-2) as long as the objects of the invention [2] are accomplished.

Examples of the copolymerization component are the same components as those that may be contained in the mixture which comprises at least the poly (L-lactic acid) in which the percentage of the terminal functional group which is a carboxyl group exceeds 50% and the poly(D-lactic acid) in which the percentage of the terminal functional group which is a carboxyl group exceeds 50%.

Process for producing lactic acid oligomers (a-1) and (a-2)

The lactic acid oligomers (a-1) and (a-2) can be produced by a known polymerization method for a polylactic acid resin. For example, they can be produced by ring-opening polymerization of lactide, dehydration condensation of lactic acid and a method of combining either of these methods and solid phase polymerization. Specifically, the lactic acid oligomers (a-1) and (a-2) can be produced in the same method as the process for producing the poly(L-lactic acid) and the poly(D-lactic acid) of the invention [1].

Process for producing polylactic acid resin (B)

The process for producing the polylactic acid resin (B) having an amide bond which can be obtained by allowing the lactic acid oligomer (a-1) or (a-2) to react with a polyisocyanate comprises at least a step of allowing the lactic acid oligomer (a-1) or (a-2) to react with a polyisocyanate compound. In the reaction, a carboxyl group which is a terminal functional group is reacted with polyisocyanate to form an amide bond. The reaction is also preferably carried out using

an amidation catalyst. An example of the step may include the following method, but the invention [2] is not limited thereby as long as the objects of the invention [2] are accomplished.

At first, the lactic acid oligomer (a-1) or (a-2) and a solvent are mixed and the mixture is heated to a prescribed temperature under normal pressure in a nitrogen atmosphere. Next, the catalyst is optionally added to the mixture and the polyisocyanate compound is further added thereto and reacted at a prescribed temperature. Finally, the resulting reaction product is subjected to decarboxylation and thereby the polylactic acid resin (B) can be produced. The polyisocyanate compound is preferably a diisocyanate compound.

In this step, the viscosity of the reactant is rapidly increased together with increase in the molecular weight of the reactant. Therefore, in addition to the method of reaction in the form of the solution with stirring as described above, a method of kneading and reacting in the absence of a solvent and extruding a product using an extruder, particularly a twin axis kneading extruder is effective because the solvent is unnecessary and the post treatment of the product is simple.

<u>Polyisocyanate compound</u>

Examples of the polyisocyanate compound used in the step are the same as those described in the specific examples of the polyisocyanate compound used in the process for producing the polylactic acid-based resin (I) of the invention [1].

The polyisocyanate compound is preferably an aliphatic diisocyanate compound, among them, more preferably a compound selected from the group consisting of tetramethylene diisocyanate, pentamethylene diisocyanate, hexamethylene diisocyanate, dodecamethylene diisocyanate, isophorone diisocyanate, 1,3-(bisisocyanatomethyl)cyclohexane, bis(isocyanatomethyl) bicycle-[2,2,1]-heptane and bis(4-isocyanatocyclohexyl) methane, furthermore preferably hexamethylene diisocyanate. The polyisocyanate compound is preferably an aliphatic diisocyanate from the viewpoint of the color tone of the resulting composition (C).

<u>Addition amount of polyisocyanate</u>

The addition amount of the polyisocyanate compound is determined based on the mole number of the terminal functional groups of the lactic acid oligomer (a-1) or (a-2). The mole number of the terminal functional groups of the lactic acid oligomer (a-1) or (a-2) is calculated from NMR data and the carboxylic acid value by the method described in the example.

The addition amount of the polyisocyanate compound is preferably from 0.8 to 2.0 times mol, more preferably 0.8 to 1.5 times by mol, furthermore preferably 0.8 to 1.3 times mol based on the mole number of the terminal functional groups of the lactic oligomer (a-1) or (a-2). The "times mol" is a unit of vale calculated by dividing the number of isocyanate groups (mol) by the number of terminal functional groups (mol).

When the addition amount of the polyisocyanate compound is less than the lower limit, the effect of adding the polyisocyanate compound is small and thereby it is sometimes difficult to prepare the polylactic acid resin (B) having a high molecular weight. While, when it is over the upper limit, the side reaction such as crosslinking reaction or the like is caused by isocyanate to occasionally generate the polylactic acid resin (B) in a gel state.

<u>Amidation catalyst</u>

The amidation catalyst which may be used in the above step is a catalyst capable of forming an amide bond by allowing the terminal carboxyl group parts of the lactic acid oligomer (a-1) or (a-2) to react with the polyisocyanate compound.

The amidation catalyst preferably comprises at least one metal selected from the group consisting of Group 1, 2 and 3 metals in the Periodic Table, more preferably at least one metal selected from the group consisting of potassium, magnesium, calcium and ytterbium, particularly preferably magnesium or calcium. The amidation catalyst preferably comprises these metals because the catalyst having excellent reactivity can be prepared and the composition (C) having good color tone can be prepared.

Examples of the amidation catalyst comprising at least one metal selected from the group consisting of Group 1, 2 and 3 metals in the Periodic Table are the same as those of the amidation catalyst used in the process for producing the polylactic acid-based resin (I) of the invention [1]. These metals may be used singly or two or more may be used simultaneously. Among them, bis(acetylacetonato)magnesium, magnesium stearate, calcium stearate, magnesium chloride and ytterbium trifulate are preferred, magnesium compounds, particularly preferably bis(acetylacetonato) magnesium and magnesium stearate are more preferred. It is possible to use two or more of these catalysts.

The addition amount of the amidation catalyst is from 0.01 to 2 parts by weight, preferably 0.01 to 1 part by weight, more preferably 0.01 to 0.5 part by weight based on 100 parts by weight of the lactic acid oligomer (a-1) or (a-2).

The lactic acid oligomer (a-1) or (a-2) of the invention [2] optionally contains a hydroxyl group. In this case, the hydroxyl group part reacts with the above polyisocyanate compound to form a urethane bond.

Examples of the catalyst capable of forming such a urethane bond are the same as those used in the process for producing the polylactic acid-based resin (I) of the invention [1]. The addition amount of the catalyst capable of forming the urethane bond is from 0.01 to 2 parts by weight, preferably 0.01 to 1 part by weight, more preferably 0.01 to 0.5 parts by weight based on 100 parts by weight of the lactic acid oligomers (a-1) and (a-2).

Polylactic acid resin composition (C)

The mixing weight ratio of the polylactic acid resin (A-1) comprising L-lactic acid as a main component and the polylactic acid resin (A-2) comprising D-lactic acid as a main component is preferably from 90:10 to 10:90, more preferably 70:30 to 30:70, furthermore preferably 75:25 to 25:75, particularly preferably 60:40 to 40:60.

The composition is molten at a temperature not lower than the melting point thereof and then cooled to form a stereocomplex polylactic acid.

The polylactic acid resin composition (C) preferably comprises the polylactic acid resin (A-1) other than the polylactic acid resin (B) and a polylactic acid resin (B-a-2) from the viewpoints of the capability of forming the stereocomplex polylactic acid and the cost.

A non-limiting example of the process for producing the polylactic acid resin composition (C) is a process of melting and kneading the polylactic acid resin (A-1) and the polylactic acid resin (A-2) using a mixing device. In the process, the order of introducing the compounds to the mixing device is not limited. Therefore, the two components may be introduced into the mixing device simultaneously, or the polylactic acid resin (A-1) and the polylactic acid resin (A-2) may be previously mixed and then introduced into the mixing device followed by mixing. Each component may be in a powdery, granular or pelletized form. Examples of the mixing device are a mill roll, a mixer and mono-axial or bi-axial extruder. The kneading temperature is preferably not lower than 160°C and not higher than 250°C, more preferably not lower than 170°C and not higher than 230°C.

Moreover, there is a process for preparing the polylactic acid resin composition (C) by mixing the polylactic acid resin (A-1) and the polylactic acid resin (A-2) in a solvent and removing the solvent. As the solvent, a solvent capable of dissolving all of the polymers such as chloroform is used. The mixing temperature range is not particularly limited as long as all of the polymers are molten and the solvent does not vaporize. The method of removing the solvent is not particularly limited. For example, it is possible to use a method of vaporizing the solvent at room temperature and a method of vaporizing the solvent at a temperature higher than the boiling point of the solvent under reduced pressure.

The polylactic acid resin composition (C) has a proportion of melting peaks at 195°C or higher of preferably not less than 70%, more preferably not less than 80%, furthermore preferably not less than 90%, particularly preferably not less than 95% in melting peaks derived from the polylactic acid resin in the heating process of a differential scanning calorimeter (DSC) measurement. The larger the proportion of the melting peaks having 195°C or higher is, the higher the resistance to hydrolysis of a molded article is.

The polylactic acid resin composition (C) has a melting point of preferably from 190 to 250°C, more preferably 195 to 220°C. The melting enthalpy is preferably not less than 20 J/g, more preferably not less than 30 J/g.

The lactic oligomer (a-1) or (a-2) has a weight average molecular weight of from 5,000 to 100,000 so that the polylactic acid resin composition (C) having the melting point in the above range can be prepared. The oligomer has a weight average molecular weight of more preferably from 10,000 to 70,000, furthermore preferably 10,000 to 50,000.

The weight average molecular weight is a value of a weight average molecular weight value in terms of standard polystyrene determined by gel permeation chromatography (GPC) measurement using chloroform as an eluent.

Stabilizer

The polylactic acid resin composition (C) of the invention [2] further may comprise a stabilizer. The amount of the stabilizer is preferably from 0.001 to 5 parts by weight, more preferably 0.001 to 2.5 parts by weight, furthermore preferably 0.001 to 1 part by weight, moreover preferably 0.005 to 1 part by weight, further preferably 0.01 to 3 parts by weight, particularly preferably 0.01 to 1 part by weight based on 100 parts by weight of the polylactic acid resin composition (C).

Examples of the stabilizer are a phosphorus-based stabilizer, a phenol-based stabilizer and other stabilizers.

Phosphorus-based stabilizer

The phosphorus-based stabilizer functions as a quencher for the amidation catalyst in the production process of the polylactic acid resin (B) and/or a quencher for the catalyst used in the preparation of the polylactic acid resin (A-1) or the polylactic acid resin (A-2) and the lactic acid oligomers (a-1 and a-2). It is effective for good hue and for

improvement on the viscosity stability at a high temperature of the composition (C).

Examples of the phosphorus-based stabilizer are a phosphite-based compound and a phosphate-based compound, and specific examples thereof may include the same compounds as described in the phosphorus-based compound which may be contained in the polylactic acid-based resin (I) of the invention [1].

Phenol-based stabilizer

The phenol-based stabilizer used in the invention [2] has the function of preventing a molecular chain from breaking at a high temperature and it is effective for good hue and for improvement on the viscosity stability at a high temperature of the composition (C).

Examples of the phenol-based stabilizer may include the same compounds as those of the phenol compound which may be contained in the polylactic acid-based resin (I) of the invention [1].

Preferable examples are "IRGANOX" 245 (triethylene glycol-bis-[3-(3-t-butyl-5-methyl-4-hydroxyphenyl)-propionate]) and 1010 (tetrakis[methylene-3-(3',5'-di-t-butyl-4'-hydroxyphenyl) propionate]methane) manufactured by Ciba Specialty Chemical.

Other stabilizer

The polylactic acid resin composition (C) preferably comprises other stabilizers other than the phosphorus-based stabilizer and the phenol-based stabilizer in order to have good hue and stable fluidity. Examples of the other stabilizers are a thioether-based compound, a vitamin-based compound, a triazole-based compound, a polyvalent amine-based compound and a hydrazine derivative-based compound. These stabilizers may be used simultaneously.

Specific examples of the thioether-based compound, the vitamin-based compound, the triazole-based compound, the polyvalent amine-based compound and the hydrazine derivative-based compound may include the same compounds as described in the thioether-based compound, the vitamin-basted compound, the triazole-based compound, the polyvalent amine-based compound and the hydrazine derivative-based compound usable in the invention [1].

Other components

To the polylactic acid resin composition (C) of the invention [2], it is allowable to add a crystal nucleating agent, an inorganic filler, a flame retardant, a stabilizer except for the phosphorus-based stabilizer and phenol-based stabilizer, an elastic polymer, an end capping agent and other additives.

Crystal nucleating agent

As the crystal nucleating agent, it is possible to use known compounds usually used as a nucleating agent to crystalline resins, such as a polylactic acid resin and an aromatic polyester.

Examples thereof are mineral fine particles such as talc, silica, graphite, carbon powder, pyroferrite, gypsum and neutral clay, metal oxides such as magnesium oxide, aluminum oxide and titanium dioxide, sulfate, phosphate, phosphonate, silicate, oxalate, stearate, benzoate, salicylate, tartrate, sulfonate, montan wax salt, montan wax ester salt, terephthalate, benzoate and carboxylate.

Among the compounds used as the crystal nucleating agent, talc is very effective. The talc used herein has an average particle diameter of not more than 20 $\mu$m, more preferably not more than 5 $\mu$m.

Although the addition amount of these nucleating agents is not defined evenly because the amount capable of exerting the effect differs according to the kind and shape of the nucleating agent, it is from 0.01 to 5 parts by weight, preferably 0.05 to 3 parts by weight, more preferably 0.1 to 2 parts by weight based on 100 parts by weight of the polylactic acid resin composition (C). When the addition amount of the nucleating agent is too small, the nucleating agent sometimes cannot exert the effect, while when it is too large, the effect of the nucleating agent is not increased and the mechanical properties and other properties of the composition (C) are sometimes deteriorated.

The method of blending the nucleating agent used in the invention [2] is not particularly restricted. If necessary the other component is added to the composition (C), it is preferred to use a method of adding the nucleating agent together with the other components to the composition (C) because the effect of exerting the stereocomplex formation is small.

Inorganic filler

Further blending the inorganic filler to the polylactic acid resin composition (C) of the invention [2], it is possible to prepare a molded article having excellent mechanical properties, dimension properties and the like.

Examples of the inorganic filler are known various inorganic fillers such as glass fiber, carbon fiber, glass flake, wollastonite, kaolin clay, mica, talc and various whiskers (such as potassium titanate whisker and aluminum borate whisker). The form of the inorganic filler is freely selected from fiber, flake, spherical and hollow forms. The inorganic filler having a fiber or flake form is favorable in order to improve the strength and impact resistance of the resin composition.

The inorganic filler is preferably made from a ground product of natural mineral, more preferably made from a ground product of natural mineral silicate. Furthermore, mica, talc and wollastonite are preferable from the viewpoint of the form.

These inorganic fillers are non-oil resource materials having a lower environmental load as compared with oil resource materials such as carbon fiber. The use of such inorganic fillers is same as use of lower environmental load materials and gets an effect of enhancing the meanings of using the crystal nucleating agent and the inorganic filler having a low environmental load. Furthermore, the more preferable inorganic filler has a favorable effect of exerting the good flame retardant of the composition (C) as compared with the use of carbon fiber.

The average particle diameter of mica usable in the invention [2] is a number average particle diameter determined by observing with a scanning electron microscope, extracting 1000 particles having a size of not less than 1 $\mu$m and calculating the number average. The number average particle diameter is preferably from 10 to 500 $\mu$m, more preferably 30 to 400 $\mu$m, furthermore preferably 30 to 200 $\mu$m, particularly preferably 35 to 80 $\mu$m. When the number average particle diameter is less than 10 $\mu$m, the impact strength of a molded article is lowered occasionally. When it is over 500 $\mu$m, the impact strength of a molded article is improved but the appearance is easily deteriorated.

The usable mica has a thickness, as determined by observation with an electron microscope, of 0.01 to 10 $\mu$m, preferably 0.1 to 5 $\mu$m. The usable mica has an aspect ratio of 5 to 200, preferably 10 to 100. Furthermore, the mica is preferably a muscovite mica having a Mohs' hardness of about 3. The use of the muscovite mica can attain higher rigidity and higher strength as compared with other micas such as phlogopite and can provide more favorable exterior parts for electron devices.

In order to prepare the mica having such an average particle diameter, thickness and aspect ratio, commercially available mica may be ground by the following grinding method.

Examples of the method of grinding the mica are a dry type grinding method of grinding a mica raw stone by a dry type grinding machine and a wet type grinding method of roughly grinding a mica raw stone by a dry type grinding machine, adding a grinding aid such as water and the like, carrying out main grinding in a slurry state by a wet type grinding machine followed by dehydrating and drying. The mica used in the invention may be produced by any of the grinding methods, but the drying type grinding method is usually employed and low cost. The wet type grinding method takes the cost although it is effective to grind the mica thinly and finely. The mica may be surface treated with various surface-treating agents, such as a silane coupling agent, a higher aliphatic acid ester and a wax. Furthermore, it may be in a granule state by granulating the mica with a sizing agent such as various resins, a higher aliphatic acid ester and wax.

The usable talc is scale-like particles having a layered structure and is in terms of a chemical composition, a water-containing magnesium silicate, and generally represented by the chemical formula $4SiO_2$•$3MgO$•$_2H_2O$. It usually comprises 56 to 65 % by weight of $SiO_2$, 28 to 35 % by weight of MgO and about 5% by weight of $H_2O$. The talc comprises small amounts of other components, for example, $Fe_2O_3$ (0.03 to 1.2 % by weight), $Al_2O_3$ (0.05 to 1.5 % by weight), CaO (0.05 to 1.2 % by weight), $K_2O$ (not more than 0.2% by weight) and $Na_2O$ (not more than 0. 2% by weight), and has a specific gravity of about 2.7 and a Mohs' hardness of 1.

The talc has an average particle diameter of preferably 0.5 to 30 $\mu$m. The average particle diameter is a particle diameter at an integrating weight of 50% determined by measuring in accordance with JIS M8016 from a particle size distribution measured with an Andreasen pipette method. The talc has a particle diameter of more preferably 2 to 30 $\mu$m, furthermore preferably 5 to 20 $\mu$m, especially preferably 10 to 20 $\mu$m. When the talc has an average particle diameter in the above range, a molded article can have good surface appearance and flame retardant in addition to rigidity and low anisotropy.

In order to prepare the talc having such an average particle diameter, commercially available talc may be ground in the following manner.

The method of preparing the talc by grinding the mica raw stone is not particularly limited, and it is possible to employ such as an axial flow milling method, an annular milling method, a roll milling method, a ball milling method, a jet milling method or a container rotating compression shear milling method. Further, the talc after grinding having uniform particle diameters prepared through the classification treatment by various classifiers is preferred. Examples of the classifiers, which are particularly not limited, are an impactor type inertia force classifier (variable impactor, etc.), a Coanda effect-use inertia force classifier (elbow jet, etc.) and a centrifugal classifier (multi-stage cyclone, micro-plex, dispersion separator, acucut, turbo classifier, turboplex, micron separator and super separator).

The talc is further preferably in an aggregated form from the viewpoint of handling properties and the like. Examples of the preparation method thereof are a method of deaeration compressing and a method of compressing using a sizing agent. Particularly, the method of deaeration compressing is preferred because it is simple and unnecessary

sizing agent resin components are not contained in the polylactic acid resin composition (C) of the invention [2].

The wollastonite usable in the invention [2] is substantially represented by the chemical formula $CaSiO_3$, and usually comprises about not less than 50% by weight of $SiO_2$ about not less than 47% by weight of CaO and other $Fe_2O_3$, $Al_2O_3$ and the like. The wollastonite is in a white needle like powdery form prepared by grinding a wollastonite raw stone and classifying, and has a Mohs' hardness of about 4.5. The usable wollastonite has an average fiber diameter of preferably 0.5 to 20 μm, more preferably 0.5 to 10 μm, furthermore preferably 1 to 5 μm. The average fiber diameter is determined by observing with a scanning electron microscope, extracting 1000 fibers having a diameter of not less than 0.1 μm and calculating the number average.

Some of these inorganic fillers function as the crystal nucleating agent. The addition amount thereof is preferably from 0.3 to 200 parts by weight, more preferably 1.0 to 100 parts by weight, furthermore preferably 3 to 50 parts by weight based on 100 parts by weight of the polylactic acid resin composition (C) . When the addition amount is less than 0. 3 part by weight, the molded article of the invention [2] has sometimes an insufficient effect of improving the mechanical properties, while when it is over 200 parts by weight, the molding processability of the composition (C) is deteriorated or the hue of the molded article is deteriorated occasionally.

In the case of using a fibrous inorganic filler or a flake-like inorganic filler for the polylactic acid resin composition (C), it may contain a breaking inhibitor in order to inhibit breaking of them. The breaking inhibitor hinders adhesion between the matrix resin and the inorganic filler, decreases the stress, which acts on the inorganic filler at a time of melt-kneading and thereby inhibits breaking of the inorganic filler. The effects of the breaking inhibitor may include (1) improvement in rigidity (the aspect ratio of the inorganic filler is large), (2) improvement in toughness and (3) improvement in conductivity (in the case of the conductive inorganic filler). Specifically the breaking inhibitor is a compound having a structure such that the affinity with a resin is low, and is a compound having a functional group capable of reacting with the surface of the inorganic filler. In this manner, it is possible to obtain a compound that the surface of the inorganic filler is directly coated with the compound having a low affinity with a resin.

Representative examples of the compound having low affinity with a resin may include various lubricants. Examples of the lubricants are a mineral oil, a synthetic oil, a higher aliphatic acid ester, a higher aliphatic acid amide, a polyorganosiloxane (such as silicone oil and silicone rubber), an olefin-based wax (such as paraffin wax and polyolefin wax), a polyalkylene glycol, and a fluorine oil such as fluorinated aliphatic acid ester, trifluorochloroethylene and polyhexafluoropropylene glycol.

As a method of directly covering the surfaces of the inorganic filler with the compound having low affinity with resins, there are (1) a method of immersing the inorganic filler in the compound directly in a solution state of the compound or in an emulsion state of the compound, (2) a method of passing the inorganic filler through the compound in a vapor state or in a powdery state, (3) a method of irradiating the powdery compound and the like on the inorganic filler at a high rate, (4) a mechanochemical method of rubbing the compound on the inorganic filler and the like.

Examples of the compound having a structure of low affinity with resins and having a functional group capable of reacting with the surfaces of the inorganic filler may include the above-described lubricants modified with various functional groups. Examples of the functional group are a carboxyl group, a carboxylic acid anhydride group, an epoxy group, an oxazoline group, an isocyanate group, an ester group, an amino group and an alkoxysilyl group.

One of the preferable breaking inhibitors is an alkoxysilane compound which alkyl group having 5 or more carbon atoms is bonded to a silicone atom. The alkyl group bonded to a silicone atom has a carbon number of preferably 5 to 60, more preferably 5 to 20, furthermore preferably 6 to 18, especially preferably 8 to 16. The number of the alkyl group bonded to a silicone atom is preferably 1 or 2, more preferably 1. Preferable examples of the alkoxy group are methoxy group and ethoxy group. The alkoxysilane compound is preferable because of having high reactivity to the inorganic filler surfaces and a high efficiency of covering the surfaces. Therefore, the alkoxysilane compound is favorable for the fine inorganic filler.

One of the preferable breaking inhibitors is a polyolefin wax having at least one functional group selected from the group consisting of a carboxyl group and a carboxylic acid anhydride group. The polyolefin wax has a molecular weight, i.e. a weight average molecular weight of preferably 500 to 20,000, more preferably 1,000 to 15,000. In the polyolefin wax, the amounts of the carboxyl group and carboxylic acid anhydride group are preferably 0.05 to 10 meq/g, more preferably 0.1 to 6 meq/g, furthermore preferably 0.5 to 4 meq/g per 1 g of the lubricant having at least one functional group selected from the group consisting of the carboxyl group and the carboxylic acid anhydride group. In the breaking inhibitor, the proportion of functional groups other than the carboxyl group and the carboxylic acid anhydride group is preferably as same as that of the carboxyl group and the carboxylic acid anhydride group as described above.

A more preferable example of the breaking inhibitor is a copolymer of a α-olefin and anhydrous maleic acid. The copolymer can be produced by a melt polymerization or bulk polymerization method in the presence of a radical catalyst in ordinary manner. Examples of the α-olefin are those having an average carbon number of preferably 10 to 60, more preferably 16 to 60 and furthermore preferably 25 to 55.

The addition amount of the breaking inhibitor is preferably 0.01 to 2 parts by weight, more preferably 0.05 to 1.5 parts by weight, furthermore preferably 0.1 to 0.8 part by weight based on 100 parts by weight of the polylactic acid

resin composition (C).

Flame retardant

To the polylactic acid resin composition (C), the flame retardant may be blended. Examples of the flame retardant are a halogen-based flame retardant such as brominated epoxy resin, brominated polystyrene, brominated polycarbonate, brominated polyacrylate and chlorinated polyethylene; a phosphate-based flame retardant such as monophosphate compound and phosphate oligomer compound; an organic phosphorus-based flame retardant other than the phosphate-based flame retardant such as phosphonate oligomer compound, phosphonitrile oligomer compound and phosphonic acid amide compound; an organic metal salt-based flame retardant such as organic sulfonic acid alkali (earth) metal salt, boric acid metal salt-based flame retardant and stannic acid metal salt-based flame retardant; and a silicone-based flame retardant. Moreover, a flame retardant aid (such as sodium antimonate, and antimony trioxide), a dropping inhibitor (such as polytetrafluoroethylene having an ability of forming fibril) and the like may be blended and used together with the flame retardant.

Among the above flame retardants, the compounds free from a chlorine atom and a bromine atom are favorable as the flame retardant for a molded article having a characteristic of decreasing the environmental load according to the invention [2] because the generation of halogenated compounds is decreased in disposing with burning or thermal recycling.

The phosphate-based flame retardant is preferable especially because having an effect of enhancing the molding processability of the composition (C) and capable of preparing a molded article having good hue. Examples of the phosphate-based flame retardant are at least one or two or more phosphate compounds represented by the following formula.

[Chemical formula 9]

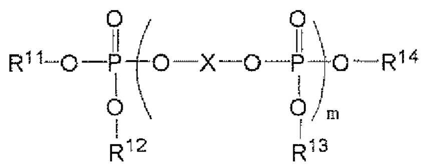

(In the formula, X include a group derived from hydroquinone, resorcinol, bis(4-hydroxydiphenyl)methane, bisphenol A, dihydroxydiphenyl, dihydroxy naphthalene, bis(4-hydroxyphenyl)sulfone, bis(4-hydroxyphenyl)ketone and bis (4-hydroxyphenyl) sulfide. m is an integer of 0 to 5, or in the case of a mixture of phosphates having different numbers of m, m is an average of 0 to 5. Each of $R^{11}$, $R^{12}$, $R^{13}$ and $R^{14}$ is independently a group which at least one halogen atom is substituted, or a group which halogen atom is not substituted and is derived from phenol, cresol, xylenol, isopropylphenol, butylphenol and p-cumylphenol.)

Furthermore, it is preferred that X in the formula is a group derived from hydroquinone, resorcinol, bisphenol A and dihydroxydiphenyl, m is an integer of 1 to 3, or in the case of a mixture of phosphates having different numbers of m, m is the average, each of $R^{11}$, $R^{12}$, $R^{13}$ and $R^{14}$ is independently a group which at least one halogen atom is substituted, more preferably a group which halogen atom is not substituted and is derived from phenol, cresol and xylenol.

Among the organic phosphate-based flame retardants, it is preferred to use triphenylphosphate and, as the phosphate oligomer, resorcinol bis(dixylyl phosphate) and bisphenol A bis(diphenyl phosphate) because a molded article has excellent resistance to hydrolysis and the like. It is more preferred to use resorcinol bis(dixylyl phosphate) and bisphenol A bis(diphenyl phosphate) from the viewpoint of heat resistance. Since these flame retardants have good heat resistance, bad effects caused by them such as thermal degradation and volatilization are not occurred.

In the case of adding these flame retardants to the polylactic acid resin composition (C), the amount thereof is preferably from 0.05 to 50 parts by weight based on 100 parts by weight of the polylactic acid resin composition (C). When the amount is less than 0.05 part by weight, the sufficient flame retardance of a molded article is sometimes not exhibited, while when it is over 50 parts by weight, the strength and heat resistance of a molded article are sometimes damaged.

Impact modifier

It is possible to use an elastic polymer as an impact modifier for the polylactic acid resin composition (C). Examples of the elastic polymer are a graft copolymer obtainable by copolymerizing a rubber component having a glass transition temperature of not higher than 10 °C with one or two or more monomers selected from an aromatic vinyl, a

vinylcyanide, an acrylate, a methacrylate and vinyl compounds capable of copolymerizing with them. More preferable examples of the elastic polymer are a core-shell type graft copolymer in which at least one or two or more shells of the monomer are graft copolymerized at the core of the rubber component.

Moreover, examples thereof are a block copolymer of the rubber component and the monomer. Specific examples of the block copolymer are thermoplastic elastomers such as styrene·ethylenepropylene·styrene elastomer (hydrogenated styrene·isoprene·styrene elastomer), and hydrogenated styrene·butadiene·styrene elastomer. Furthermore, it is possible to use known various elastic polymers as other thermoplastic elastomers, for example, polyurethane elastomer, polyester elastomer and polyether amide elastomer.

A preferable example of the impact modifier is a core-shell type graft copolymer. The core-shell type graft copolymer has a core particle diameter, i.e. a weight average particle diameter of preferably 0.05 to 0.8 μm, more preferably 0.1 to 0.6 μm, furthermore preferably 0.1 to 0.5 μm. When the particle diameter is in the range of 0.05 to 0.8 μm, the better impact resistance is attained.

The elastic polymer contains the rubber component in an amount of preferably not less than 40%, more preferably not less than 60%.

Examples of the rubber component are butadiene rubber, butadiene-acryl composite rubber, acryl rubber, acryl-silicone composite rubber, isobutylene-silicone composite rubber, isoprene rubber, styrene-butadiene rubber, chloroprene rubber, ethylene-propylene rubber, nitrile rubber, ethylene-acryl rubber, silicone rubber, epichlorohydrin rubber, fluorine rubber and rubbers obtainable by adding hydrogen to the unsaturated bond part of these rubbers. It is preferred from the viewpoint of the environmental load to use the rubber components free from halogen atom because there is no occurrence of harmful substances at the time of burning a molded article.

The rubber component has a glass transition temperature of preferably not higher than -10°C, more preferably not higher than -30°C. Preferable examples of the rubber component are butadiene rubber, butadiene-acryl composite rubber, acryl rubber and acryl-silicone composite rubber. The composite rubber is a rubber obtainable by copolymerizing two rubber components or a polymerized rubber having an IPN structure such that two rubber components are inseparably connected with each other.

Examples of the aromatic vinyl in the vinyl compound for copolymerization with the rubber component are styrene, α-methylstyrene, p-methylstyrene, alkoxystyrene and halogenated styrene, particularly preferably styrene. Examples of the acrylate are methyl acrylate, ethyl acrylate, butyl acrylate, cyclohexyl acrylate and octyl acrylate. Examples of the methacrylate are methyl methacrylate, ethyl methacrylate, butyl methacrylate, cyclohexyl methacrylate and octyl methacrylate, particularly preferably methyl methacrylate. Among them, the elastic polymer preferably comprises a methacrylate such as methyl methacrylate, etc. as an essential component. Specifically, the methacrylate is contained in an amount of preferably not less than 10% by weight, more preferably not less than 15 % by weight based on 100 % by weight of the graft component (in the case of the core-shell type polymer, based on 100% by weight of the shell).

The elastic polymer containing the rubber component having a glass transition temperature of not higher than 10°C may be produced by any one polymerization method of bulk polymerization, solution polymerization, suspension polymerization and emulsion polymerization. The copolymerization system may be one step graft or multi step graft. The elastic polymer may be a mixture of copolymers, which comprise only graft components by-produced in the production. Examples of the polymerization method are the usual emulsion polymerization method, and also a soap-free polymerization method of using an initiator such as potassiumpersulfate, a seed polymerization method and a two step swelling polymerization method. Furthermore, it is possible to employ a method of keeping an aqueous phase and a monomer phase separately, feeding both of them accurately into a continuous dispersing machine and controlling the particle diameter by the rotation number of the dispersing machine in the suspension polymerization method and a method of passing a monomer phase through an orifice having a fine diameter of several to several ten μm or a porous filter to an aqueous solution having dispersing ability and thereby feeding it and controlling the particle diameter in the continuous production method. In the case of the core-shell type graft polymer, the reactions of the core and shell may be carried out in one step or multi steps.

The elastic polymer is on the market and is easily available. For example, examples of the elastic polymer which mainly comprise butadiene rubber, acryl rubber or butadiene-acryl composite rubber as the rubber components are Kaneace B series (such as B-56) manufactured by Kanegafuchi Chemical Industries Co., Metablen C series (such as C-223A) and W series (such as W-450A) manufactured by Mitsubishi Rayon Co., Ltd., Paraloid EXL series(such as EXL-2602), HIA series (such as HIA-15), BTA series (such as BTA-III) and KCA series manufactured by Kureha Chemical Industry Co., Ltd., Paranoid EXL series and KM series (such as KM-336P and KM-357P) manufactured by Rohm and Haas Co., Ltd., and UCL modifier-resin series manufactured by Ube Saicon Co., Ltd.(UMG AXS resin series manufactured by UMG ABS Co., Ltd.). Examples of the elastic polymer which mainly comprises acryl-silicone composite rubber as the rubber component are Metablen S-2001 and SRK-200 manufactured by Mitsubishi Rayon Co., Ltd.

The impact modifier is contained in an amount of preferably 0.2 to 50 parts by weight, more preferably 1 to 30 parts by weight, furthermore preferably 1.5 to 20 parts by weight based on 100 parts by weight of the polylactic acid resin composition (C). When the composition contains the impact modifier in the above amount, the decrease of the

rigidity of a molded article is inhibited and also the molded article can have good impact resistance.

End capping agent

Adding an end capping agent to the polylactic acid resin composition (C) of the invention [2], a molded article having further enhanced resistance to hydrolysis can be prepared.

The end capping agent has a function such that it is reacted with a part or all of the carboxyl group ends of the polylactic acid resins (A-1) and/or (A-2) in the polylactic acid resin composition (C) of the invention [2] to seal the ends. Examples thereof are a condensation reaction type compound such as an aliphatic alcohol and an amide compound, and an addition reaction type compound such as a carbodiimide compound, an epoxy compound, an oxazoline compound, an oxazine compound and an aziridine compound.

Examples of the monocarbodiimide compound contained in the carbodiimide compound are dicyclohexyl carbodiimide, diisopropyl carbodiimide, dimethyl carbodiimide, diisobutyl carbodiimide, dioctyl carbodiimide, t-butylisopropyl carbodiimide, diphenyl carbodiimide, di-t-butyl carbodiimide and di-β-naphthyl carbodiimide. Among them, dicyclohexyl carbodiimide or diisopropyl carbodiimide is preferred especially from the viewpoint of easily available industrially.

As the polycarbodiimide compound contained in the carbodiimide compound, it is possible to use a compound produced by various methods, basically a conventional method of producing a polycarbodiimide (disclosed in the specification of USP 2941956, JP-B-S47(1972)-33279, J. Org. Chem. 28, 2069-2075(1963), Chemical Review 1981 Vol. 81 No. 4, pp 619-621).

Examples of the organic diisocyanate, which is a synthetic raw material in the production of the polycarbodiimide compound are an aromatic diisocyanate, an aliphatic diisocyanate, an alicyclic diisocyanate and mixtures thereof. Specific examples thereof are 1,5-naphthalene diisocyanate, 4,4'-diphenylmethane diisocyanate, 4,4'-diphenyl dimethylmethane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate and 2,6-tolyene diisocyanate, hexamethylene diisocyanate, cyclohexane-1,4-diisocyanate, xylylene diisocyanate, isophorone diisocyanate, dicylohexyl methane-4,4'-diisocyanate, methylcyclohexane diisocyanate, tetramethylxylylene diisocyanate, 2,6-diisopropyl phenylisocyanate and 1,3,5-triisopropyl benzene-2,4-diisocyanate.

The polymerization degree of the polycarbodiimide compound can be controlled adequately using a compound capable of reacting with a terminal isocyanate of the polycarbodiimide compound such as monoisocyanate, etc.

Examples of the monoisocyanate for controlling the polymerization degree by sealing the ends of the polycarbodiimide compound are phenyl isocyanate, tolyl isocyanate, dimethylphenyl isocyanate, cyclohexyl isocyanate, butyl isocyanate and naphthyl isocyanate.

Examples of the epoxy compound are N-glycidyl phthalimide, N-glycidyl-4-methylphthalimide, N-glycidyl-4,5-dimethylphthalimide, N-glycidyl-3-methylphthalimide, N-glycidyl-3,6-dimethyl phthalimide, N-glycidyl-4-ethoxy phthalimide, N-glycidyl-4-chlorophthalimide, N-glycidyl-4,5-dichlorophthalimide, N-glycidyl-3,4,5,6-tetrabromophthalimide, N-glycidyl-4-n-butyl-5-bromophthalimide, N-glycidyl succinimide, N-glycidyl hexahydrophthalimide, N-glycidyl-1,2,3,6-tetrahydrophthalimide, N-glycidyl maleinimide, N-glycidyl-α,β-dimethyl succinimide, N-glycidyl-α-ethyl succinimide, N-glycidyl-α-propyl succinimide, N-glycidyl benzamide, N-glycidyl-p-methyl benzamide, N-glycidylnaphthoamide, N-glycidyl stearamide, N-methyl-4,5-epoxycyclohexane-1,2-dicarboxylic acid imide, N-ethyl-4,5-epoxycyclohexane-1,2-dicarboxylic acid imide, N-phenyl-4,5-epoxycyclohexane-1,2-dicarboxylic acid imide, N-naphthyl-4,5-epoxycyclohexane-1,2-dicarboxylic acid imide, N-tolyl-3-methyl-4,5-epoxycyclohexane-1,2-dicarboxylic acid imide, orthophenyl phenylglycidylether, 2-methyloctyl glycidylether, phenylglycidylether, 3-(2-xenyloxy)-1,2-epoxypropane, allyl glycidylether, butyl glycidylether, lauryl glycidylether, benzyl glycidylether, cyclohexyl glycidylether, α-cresyl glycidylether, p-t-butylphenyl glycidylether, methacrylic acid glycidylether, ethylene oxide, propylene oxide, styrene oxide, octylene oxide, hydroquinone diglycidylether, resorcin diglycidylether, 1,6-hexanediol diglycidylether and hydrogenated bisphenol A-diglycidylether. Further examples thereof are terephthalic acid diglycidyl ester, tetrahydrophthalic acid diglycidyl ester, hexahydrophthalic acid diglycidyl ester, phthalic acid dimethyl diglycidyl ester, phenylene diglycidyl ether, ethylene diglycidylether, trimethylene diglycidyl ether, tetramethylene diglycidyl ether and hexamethylene diglycidyl ether. Selecting one or two or more of these epoxy compounds arbitrarily, the carboxyl ends of the polylactic acid resins (A-1) and/or (A-2) can be sealed. From the viewpoint of reactivity, preferable examples are ethylene oxide, propylene oxide, phenyl glycidylether, orthophenyl phenyl glycidylether, p-t-butylphenyl glycidylether, N-glycidyl phthalimide, hydroquinone diglycidylether, resorcin diglycidylether, 1,6-hexanediol diglycidylether and hydrogenated bisphenol A-diglycidyl ether.

Examples of the oxazoline compound are

2-methoxy-2-oxazoline, 2-ethoxy-2-oxazoline,
2-propoxy-2-oxazoline, 2-buthoxy-2-oxazoline,
2-pentyloxy-2-oxazoline, 2-hexyloxy-2-oxazoline,
2-heptyloxy-2-oxazoline, 2-octyloxy-2-oxazoline,

2-nonyloxy-2-oxazoline, 2-decyloxy-2-oxazoline, 2-cyclopentyloxy-2-oxazoline, 2-cyclohexyloxy-2-oxazoline, 2-allyloxy-2-oxazoline, 2-methaallyloxy-2-oxazoline, 2-crotyloxy-2-oxazoline, 2-phenoxy-2-oxazoline, 2-cresyl-2-oxazoline, 2-o-ethylphenoxy-2-oxazoline, 2-o-propylphenoxy-2-oxazoline, 2-o-phenylphenoxy-2-oxazoline, 2-m-ethylphenoxy-2-oxazoline, 2-m-propyl phenoxy-2-oxazoline, 2-p-phenylphenoxy-2-oxazoline, 2-methyl-2-oxazoline, 2-ethyl-2-oxazoline, 2-propyl-2-oxazoline, 2-butyl-2-oxazoline, 2-pentyl-2-oxazoline, 2-hexyl-2-oxazoline, 2-heptyl-2-oxazoline, 2-octyl-2-axazoline, 2-nonyl-2-oxazoline, 2-decyl-2-oxazoline, 2-cyclopentyl-2-oxazoline, 2-cyclohexyl-2-oxazoline, 2-allyl-2-oxazoline, 2-metha-allyl-2-oxazoline, 2-crotyl-2-oxazoline, 2-phenyl-2-oxazoline, 2-o-ethylphenyl-2-oxazoline, 2-o-propylphenyl-2-oxazoline, 2-o-phenylphenyl-2-oxaoline, 2-m-ethylphenyl-2-oxazoline, 2-m-propylphenyl-2-oxazoline and 2-p-phenylphenyl-2-oxazoline. Furthermore, examples thereof are 2,2'-bis(2-oxazoline), 2,2'-bis(4-methyl-2-oxazoline), 2,2'-bis(4,4'-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-benzyl-2-oxazoline), 2,2'-p-phenylenebis(2-oxazoline), 2,2'-m-phenylenebis(2-oxazoline), 2,2'-o-phenylenebis(2-oxazoline), 2,2'-p-phenylenebis(4-methyl-2-oxazoline), 2,2'-p-phenylenebis(4,4'-dirnethyl-2-axazoline), 2,2'-m-phenylenebis(4-methyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4'-dimethyl-2-oxazoline), 2,2'-9,9'-diphenoxyethanebis(2-oxazoline), 2,2'-cyclohexylenebis(2-oxazoline) and 2,2'-diphenylenebas(2-oxazoline). Moreover, examples thereof are polyoxazoline compounds comprising the above compounds as a monomer unit, such as styrene/2-isopropenyl-2-oxazoline copolymer and the like. Selecting one or two or more of these oxazoline compounds arbitrarily, the carboxyl ends of the polylactic acid resins (A-1) and/or (A-2) can be sealed.

Examples of the oxazine compound are

2-methoxy-5,6-dihydro-4H-1,3-oxazine, 2-ethoxy-5,6-dihydro-4H-1,3-oxazine, 2-propoxy-5,6-dihydro-4H-1,3-oxazine, 2-butoxy-5,6-dihydro-4H-1,3-oxazine, 2-pentyloxy-5,6-dihydro-4H-1,3-oxazine, 2-hexyloxy-5,6-dihydro-4H-1,3-oxazine, 2-heptyloxy-5,6-dihydro-4H-1,3-oxazine, 2-octyloxy-5,6-dihydro-4H-1,3-oxazine,

2-nonyloxy-5,6-dihydro-4H-1,3-oxazine,
2-decyloxy-5,6-dihydro-4H-1,3-oxazine,
2-cyclopentyloxy-5,6-dihydro-4H-1,3-oxazine,
2-cyclohexyloxy-5,6-dihydro-4H-1,3-oxazine,
2-allyloxy-5,6-dihydro-4H-1,3-oxazine,
2-metha-allyloxy-5,6-dihydro-4H-1,3-oxazine and
2-crotyloxy-5,6-dihydro-4H-1,3-oxazine. Furthermore, examples thereof are 2,2'-bis(5,6-dihydro-4H-1,3-oxazine),
2,2'-methylenebis(5,6-dihydro-4H-1,3-oxazine),
2,2'-ethylenebis(5,6-dihydro-4H-1,3-oxazine),
2,2'-prapylerzebis(5,6-dihydro-4H-1,3-oxazine),
2,2'-butylenebis(5,6-dihydro-4H-1,3-oxazine),
2,2'-hexamethylenebis(5,6-dihydxo-4H-1,3-oxazine),
2,2'-p-phenylenebis(5,5-dihydro-4H-1,3-oxazine),
2,2'-m-phenylenebis(5,6-dihydro-4H-1,3-oxazine),
2,2'-naphthylenebis(5,6-dihydro-4H-1,3-oxazine) and
2,2'-p,p'-diphenylenebis(5,6-dihydro-4H-1,3-oxazine).

Moreover, examples thereof are polyoxazine compounds containing the above compounds as a monomer unit. Selecting one or two or more of these oxazine compounds arbitrarily, the carboxyl ends of the polylactic acid resins (A-1) and/or (A-2) can be sealed.

Although one or two or more of the above oxazoline compounds and the above oxazine compounds are arbitrarily selected and used simultaneously and thereby the carboxyl ends of the polylactic acid resin (A-1) and/or (A-2) may be sealed,
2,2'-m-phenylenebis(2-oxazoline) or 2,2'-p-phenylene bis(2-oxazoline) is preferable from the viewpoints of the heat resistance and reactivity of the compound, and the affinity with aliphatic polyesters of the compound.

Among of the end capping agents usable in the invention [2], examples of the aziridine compound are addition reactants of mono, bis or polyisocyanate compound and ethylene imine.

Among the carbodiimide compounds, the epoxy compounds, the oxazoline compounds, the oxazine compounds and the aziridine compounds usable as the end capping agent in the invention [2], two or more compounds can be used simultaneously as the end capping agent.

The method of sealing the end of the carboxyl group of the polylactic acid resin composition (C) in the invention [2] comprises simply reacting the condensation reaction type or addition reaction type end capping agent, for example, the proper amount of the condensation reaction type end capping agent such as an aliphatic alcohol or an amide compound is added to a polymerization system at the time of polymerization and subjected to dehydration condensation reaction under reduced pressure, and thereby the end of the carboxyl group can be sealed. From the viewpoint of attaining the high degree of the polymerization, it is preferred to add the condensation reaction type end capping agent at the time of the completion of the polymerization reaction.

As the method of sealing the end of the carboxyl group by the addition reaction, there is a method of allowing the polylactic acid resin in a molten state to react with the proper amount of the end capping agent such as the carbodiimide compound, the epoxy compound, the oxazoline compound, the oxazine compound and the aziridine compound, and it is possible to add and react the end capping agent after the time of the completion of the polymerization reaction.

The amount of the end capping agent is from 0.01 to 5 parts by weight, preferably 0.05 to 4 parts by weight, more preferably 0.1 to 3 parts by weight based on 100 parts by weight of the polylactic acid resin composition (C).

Other additives

To the polylactic acid resin composition (C), other additives may be added within the limit of not missing the effect of the invention [2]. Examples of the other additives are another thermoplastic resin (e.g., polycarbonate resin, polyalkylene terephthalate resin, polyarylate resin, liquid crystalline polyester resin, polyamide resin, polyimide resin, polyether imide resin, polyurethane resin, silicone resin, polyphenylene ether resin, polyphenylene sulfide resin, polysulfone resin, polyolefin resin such as polyethylene and polypropylene, polystyrene resin, acrylonitrile/styrene copolymer (AS resin), acrylonitrile/butadiene/styrene copolymer (ABS resin), polystyrene resin, high impact polystyrene resin, syndiotactic polystyrene resin, polymethacrylate resin and phenoxy or epoxy resin), ultraviolet ray absorbent (e.g., benzotriazole compound, triazine compound and benzophenone compound), a light stabilizer (HALS, etc.), a mold releasing agent (e.g., saturated aliphatic acid ester, unsaturated aliphatic acid ester, polyolefin-based wax, fluorine compound, paraffin wax and beeswax), a flow modifier (e.g., polycaprolactone, etc), a coloring agent (e.g., carbon black, titanium dioxide, various organic dyes and metallic pigment), a light diffusing agent (e.g., acrylic crosslinked particles and silicone crosslinked particles), a fluorescent brightening agent, a light storing pigment, a fluorescent dye, an antistatic agent,

inorganic and organic antibacterial agents, a photocatalyst-based antifouling agent (e.g., fine particulate titanium oxide and fine particulate zinc oxide), an infrared ray absorbent, a photochromic agent and a ultraviolet absorbent. These additives can be used in a known amount in blending to a thermoplastic resin such as the polylactic acid resin, etc.

Molded article and production process thereof

The polylactic acid resin composition (C) is a suitable material that known and ordinary methods can be applied as a method of molding resins and/or compositions. The resulting molded articles are not particularly limited, for example, extrusion molded articles such as films, sheets and the like, mono filament,multi-filaments such as fiber and nonwoven fabric, injection molded articles, blow molded articles, laminates, foamed articles and thermal molded articles such as vacuum molded articles.

Examples of the method of molding the molded articles from the polylactic acid resin composition (C) may include an injection molding method, a blow molding method (such as injection stretch blow, extrusion stretch blow and direct blow), a balloon method, an inflation molding method, a co-extrusion method, a calendar method, a hot press method, a solvent casting method, a (stretch) extrusion molding method, a method of extrusion lamination method with paper or aluminum, a profile extrusion molding, a thermal molding such as vacuum molding(air pressure molding), a melt spinning (such as mono filament, multi filament, span bonding method, melt blown method and split yarn method), a foaming molding method and a compression molding method.

Particularly, the injection molding, extrusion molding and melt spinning are more preferred because of making the best of the characteristics of the polylactic acid resin composition (C) .

Examples of the molded articles formed from the polylactic acid resin composition (C) include molded articles formed from known and ordinary molding methods. The shape, size, thickness and design thereof are not limited.

Embodiment of use

The molded articles formed from the polylactic acid resin composition (C) of the invention [2] can be favorably used to the uses similar to those formed from the polylactic acid-based resin (I) of the invention [1].

Oligomers (x'1) and (y'1) having a main repeating unit of L-lactic acid or D-lactic acid and a carboxyl group in over 50% of the terminal functional groups

The oligomer (x'1) or (y'1) is a polylactic acid having the following L- lactic acid unit or the following D-lactic acid unit as a basic component, respectively.

[Chemical formula 10]

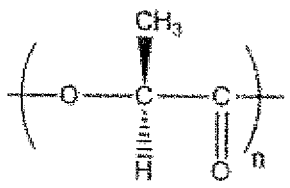

L-lactic acid oligomer

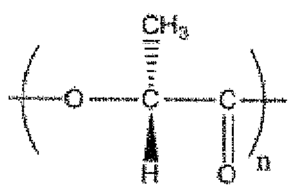

D-lactic acid oligomer

(In the formulas, n is a natural number of 1 to 2000.)

The oligomers (x'1) and (y'1) comprises the following constituting components.

The oligomer (x'1) in which the main repeating unit is a L-lactic acid and in which the percentage of the terminal functional group which is a carboxyl group exceeds 50% is a polylactic acid unit which comprises 90 to 100 % by mol of a L-lactic acid unit and 0 to 10 % by mol of a D-lactic acid unit and/or other copolymerization component units other than the lactic acids.

Or, the oligomer (x'1) in which the main repeating unit is a L-lactic acid and in which the percentage of the terminal functional group which is a carboxyl group exceeds 50% is a polylactic acid which comprises 90 to 99 % by mol of a L-lactic acid unit and/or 1 to 10 % by mol of a D-lactic acid unit and/or other copolymerization component units other than the lactic acids.

The oligomer (y'1) in which the main repeating unit is a D-lactic acid and in which the percentage of the terminal functional group which is a carboxyl group exceeds 50% is a polylactic acid unit which comprises 90 to 100 % by mol

of a D-lactic acid unit and 0 to 10 % by mol of a L-lactic acid unit and/or other copolymerization component units other than the lactic acids.

The oligomer (y'1) in which the main repeating unit is a D-lactic acid and in which the percentage of the terminal functional group which is a carboxyl group exceeds 50% is a polylactic acid unit which comprises 90 to 99 % by mol of a D-lactic acid unit and 1 to 10 % by mol of a L-lactic acid unit and/or other copolymerization component units other than the lactic acids.

Examples of the oligomers (x'1) and (y'1) may include the same compounds as those of the poly(L-lactic acid) and the poly (D-lactic acid) in the invention [1], and the oligomers (x'1) and (y'1) can be produced in the same manner as that of the poly (L-lactic acid) and the poly (D-lactic acid) in the invention [1].

Examples of the copolymerization component other than the lactic acids in the oligomers (x' 1) and (y' 1) may include the same compounds as those the other components other than the lactic acids which may be contained in the poly(L-lactic acid) and the poly(D-lactic acid) of the invention [1].

Each of the oligomers (x'1) and (y'1) has a weight average molecular weight (Mw) of preferably 5,000 to 100,000, more preferably 10,000 to 80,000, furthermore preferably 10,000 to 50,000 from the viewpoint of improving the melting point of the stereocomplex polylactic acid resin composition (Z). Particularly, each has a weight average molecular weight of preferably 20,000 to 50,000 from the viewpoints of productivity and handleability in addition to the improvement of melting point of the stereocomplex polylactic acid resin composition (Z). The weight average molecular weight (Mw) is a weight average molecular weight value in terms of standard polystyrene determined by measurement with gel permeation chromatography (GPC) using chloroform as an eluent.

The oligomer has a carboxyl group in over 50% of the terminal functional groups, preferably not less than 85%, more preferably not less than 90%, furthermore preferably not less than 95%. The proportion of a carboxyl group is preferably increased from the viewpoints of heat resistance and crystallinity because a large amount of the amide bond is formed in the production method as described below.

<u>The production methods of the oligomers (x'1) and (y'1) in which the main repeating unit is a L-lactic acid or D-lactic acid and in which the percentage of the terminal functional group which is a carboxyl group exceeds 50%</u>

The oligomers (x'1) and (y'1) can be produced by any known polymerization method for the polylactic acid resin. For example, they can be produced by the ring-opening polymerization of lactide, lactic acid dehydration condensation or a method of combining either of these methods with solid phase polymerization. Specifically, the oligomers (x'1) and (y'1) can be produced by the same production methods for the poly (L-lactic acid) and poly(D-lactic acid) according to the invention [1].

<u>Polymers (X1) and (Y1)</u>

The polymers (X1) and (Y1) have molecular weights larger than those of the oligomers (y'1) and (x'1), respectively.

Examples of the polymers (X1) and (Y1) may include the same compounds as those of the polylactic acid resins (A-1) and (A-2) in the invention [2] and can be produced in the same method as that of the invention [2].

<u>Weight average molecular weights (Mw) of polymers (X1) and (Y1)</u>

Each of the polymers (X1) and (Y1) has a weight average molecular weight (Mw) of preferably 50,000 to 1,000,000. The lower limit thereof is more preferably not less than 70,000, furthermore preferably not less than 80,000. The upper limit is more preferably not more than 700, 000, furthermore preferably not more than 500,000, moreover preferably not more than 300,000, particularly preferably not more than 200, 000. Specifically, the weight average molecular weight thereof is preferably from 50, 000 to 700,000, 70,000 to 500,000 from the viewpoints of moldability and mechanical strength. The weight average molecular weight (Mw) is a weight average molecular weight (Mw) value in terms of standard polystyrene determined by measurement with gel permeation chromatography (GPC) using chloroform as an eluent.

<u>Stereocomplex polylactic acid resin composition (Z)</u>

The stereocomplex polylactic acid resin composition (Z) of the invention [3] has a weight average molecular weight of 70, 000 to 500,000, and satisfies (i) a stereo crystallization ratio of not less than 51%, in measurement with differential scanning calorimeter (DSC) at a retention temperature of 240°C and a retention time of 1 min, (ii) a stereo crystal rate (S) of not less than 60 % in the first heating process, (iii) a stereo crystal rate (S) of not less than 88 % in the second heating process, and (iv) a retention rate of weight average molecular weight (Mw) of not less than 77%

after the second heating process.

Furthermore, the stereocomplex polylactic acid resin composition (Z) of the invention [3] has a weight average molecular weight of 70,000 to 500,000, and satisfies (i) a stereo crystallization ratio of not less than 51%, in measurement with differential scanning calorimeter (DSC) at a retention temperature of 240°C and a retention time of 5 min, (ii') a stereo crystal rate (S) of not less than 60 % in the first heating process, (iii') a stereo crystal rate (S) of not less than 95 % in the second heating process, and (iv') a retention rate of weight average molecular weight (Mw) of not less than 70% after the second heating process.

Before measurement with differential scanning calorimeter (DSC), the stereocomplex polylactic acid resin composition (Z) of the invention [3] has a weight average molecular weight (Mw) of preferably not less than 200,000, more preferably 200,000 to 1,000,000.

Stereo crystallization ratio of stereocomplex polylactic acid resin composition (Z)

The stereo crystallization ratio (Cr%) of the stereocomplex polylactic acid resin composition (Z) according to the invention [3] is calculated from diffraction profiles of stereocomplex phase crystals and homogeneous phase crystals measurement by a wide-angle X ray diffraction transmission method.

$$Cr[\%] = \{\Sigma I_{SCi} / (\Sigma_{ISCi} + I_{HM})\} \times 100$$

Where,

$\Sigma I_{SCi}$ is the total sum ($I_{SC1} + I_{SC2} + I_{SC3}$) of integral intensities of diffraction peaks derived from stereocomplex crystals, and $I_{SC1}$, $I_{SC2}$ and $I_{SC3}$ are integral intensities of diffraction peaks at near $2\theta$ = 12.0°, 20.7° and 24.0°, respectively.

$I_{HM}$ is an integral intensity of a diffraction peak derived from the homogeneous crystal.

The stereocomplex polylactic acid resin composition (Z) according to the invention [3] has a stereo crystallization ratio of preferably not less than 51%, more preferably not less than 80% from the viewpoints of heat resistance and heat stability. The stereo crystallization ratio used herein is a stereo crystallization ratio of the stereocomplex polylactic acid resin composition (Z) itself. For example, in the case of a molded article formed by heat melting such as injection molding and the like, it is a stereo crystallization ratio of the stereocomplex polylactic acid resin composition (Z) before the molding.

Stereo crystal rate (S) of stereocomplex polylactic acid resin composition (Z)

The stereo crystal rate (S) of the stereocomplex polylactic acid resin composition (Z) of the invention [3] is calculated form the following formula using the heat quantity of each melting peak in measurement with a differential scanning calorimeter (DSC) in increasing the temperature at a temperature increasing rate of 10°C/min.

$$\text{Stereo crystal rate (S) [\%]} = \{\Delta Hms/\Delta Hmh + \Delta Hms\}\} \times 100$$

Where,

> $\Delta$Hms is a heat quantity (J/g) of a melting peak of the stereocomplex phase crystals at a peak temperature of not lower than 190°C, and
> $\Delta$Hmh is a heat quantity (J/g) of a melting peak of the homogenous phase crystals at a peak temperature of not higher than 190°C.

In the stereocomplex polylactic acid resin composition (Z) of the invention [3], the stereo crystal rate (S) in the first heating process in the measurement with a differential scanning calorimeter (DSC) at 240°C and a retention time of 1 min or 5 min is not less than 60% and thereby the stereo crystal rate (S) in the second heating process as described later even in a relatively low thermal load is not less than 88%. The stereo crystal rate (S) in the first heating process in the measurement with a differential scanning calorimeter (DSC) at 240°C and a retention time of 1 min or 5 min is preferably not less than 90% and thereby the stereo crystal rate (S) in the second heating process even in a relatively lowered thermal load can be 100%. Furthermore, it is considered that the decrease of this thermal load is a factor of inhibiting the decrease of the molecular weight.

In the stereocomplex polylactic acid resin composition (Z) of the invention [3], the stereo crystal rate (S) in the

second heating process in the measurement with a differential scanning calorimeter (DSC) at 240°C and a retention time of 1 min is not less than 88%, preferably 100% from the viewpoints of heat resistance and heat stability. Furthermore, in the stereocomplex polylactic acid resin composition (Z) of the invention [3], the stereo crystal rate (S) in the second heating process in the measurement with a differential scanning calorimeter (DSC) at 240°C and a retention time of 5 min is not less than 95%, preferably not less than 100% from the viewpoints of heat resistance and heat stability.

By the way, The stereo crystal rate (S) in the first heating process described herein is an index of thermal properties of the stereocomplex polylactic acid resin composition (Z) before molding in the case of a molded article formed by heat melting such as injection molding and the like.

Also, the stereo crystal rate (S) in the second heating process described herein is an index of thermal properties of a molded article of the stereocomplex polylactic acid resin composition (Z) after molding.

The stereo crystal rate (S) in the first heating process described herein is corresponding to the stereo crystallization ratio (Cr).

The measurement with a differential scanning calorimeter (DSC) in the invention [3] is carried out by increasing the temperature to the melting point (Tm) of the stereocomplex polylactic acid resin composition (Z) or higher, in this case to 240°C at a temperature increasing rate of 10°C/min (first heating process) and maintaining the composition at 240°C for 1 min or 5 min and then rapidly cooling it to 0°C and maintaining for 5 min. Successively, the temperature is increased from 0°C to 240°C at a temperature increasing rate of 10°C /min (second heating process) and then is rapidly cooled to 25°C.

Retention rate of weight average molecular weight (Mw) of the stereocomplex polylactic acid resin composition (Z)

After the second heating process in the measurement with a differential scanning calorimeter (DSC) at 240°C and a retention time of 1 min for the stereocomplex polylactic acid resin composition (Z) of the invention [3], the retention rate of weight average molecular weight is not less than 77%. After the second heating process in the measurement with a differential scanning calorimeter (DSC) at 240°C and a retention time of 5 min for the stereocomplex polylactic acid resin composition (Z), the retention rate of weight average molecular weight is preferably not less than 70%, more preferably not less than 77%. Furthermore, each of these retention rates of the weight average molecular weight is more preferably not less than 80%, furthermore preferably not less than 85%, particularly preferably not less than 90% from the viewpoints of not only mechanical properties but also durability. The retention rate of weight average molecular weight (Mw) described herein is the value determined by dividing the weight average molecular weight ($Mw_{DSC}$ after measurement) after the second heating process in the measurement with a differential scanning calorimeter (DSC) at 240°C and a retention time of 1 min or 5 min by the weight average molecular weight ($Mw_{DSC}$ unmeasured) before the measurement (as determined by the following formula).

$$\text{Mw retention rate (\%)} = (Mw_{DSC}\text{ after measurement} / Mw_{DSC}\text{ unmeasured}) \times 100$$

Where,
In the formula, $Mw_{DSC}$ unmeasured is a weight average molecular weight of the DSC unmeasured stereocomplex polylactic acid resin composition (Z), and $Mw_{DSC}$ after measurement is a weight average molecular weight of the stereocomplex polylactic acid resin composition (Z) after the DSC measurement.

Namely, it is considered that the retention rate of weight average molecular weight (Mw)describe herein is, for example, almost same as that of a molded article is formed from the stereocomplex polylactic acid resin composition (Z) by heat melting such as injection molding through heat history at 240°C for 1 min or 5 min and subjected 240°C again.

Relation between the weight average molecular weights (Mw) of oligomers (x'1) and (y'1) and the weight average molecular weights (Mw) of polymers (X1) and (Y1)

In the stereocomplex polylactic acid resin composition (Z) of the invention [3], since the carboxyl group which is the terminal functional group of the oligomer and the polyisocyanate compound form an amide bond to form a polylactic acid-based resin having the same weight average molecular weight (Mw) as that of the polymer, and thereby the stereocomplex polylactic acid resin composition (Z) having a high molecular weight is formed, the relation between the weight average molecular weights (Mw) of the oligomers and the weight average molecular weights (Mw) of the polymers is as follows. The weight average molecular weight (Mw) of the oligomers at the time of production are not more than the weight average molecular weights (Mw) of the polymers, preferably not more than 1/2, more preferably not more than 1/5, furthermore preferably not more than 1/10, moreover preferably not more than 1/20 from the viewpoint of

easiness for forming of the stereocomplex polylactic acid resin composition (Z).

Production process of stereocomplex polylactic acid resin composition (Z)

The production process of the stereocomplex polylactic acid resin composition of the invention [3] comprises a step of allowing a polyisocyanate compound to react with a mixture of 30 to 300 parts by weight of the oligomer (x' 1) in which the main repeating unit is a L-lactic acid and in which the percentage of the terminal functional group which is a carboxyl group exceeds 50% and 100 parts by weight of the polymer (Y1) having D-lactic acid as a main repeating unit and a molecular weight larger than that of the oligomer (x'1), or a mixture of 30 to 300 parts by weight of the oligomer (y'1) in which the main repeating unit is a D-lactic acid and in which the percentage of the terminal functional group which is a carboxyl group exceeds 50% and 100 parts by weight of the polymer (X1) having L-lactic acid as a main repeating unit and a molecular weight larger than that of the oligomer (y'1).

The stereocomplex polylactic acid resin composition (z) can be also produced by this production process.

The reaction temperature in the above reaction step is the temperature capable of melting the stereocomplex polylactic acid resin composition. In the case of reaction using a solvent, the temperature is preferably not higher than the boiling point of the solvent. In the case of using the solvent, the concentration of the solvent is preferably not less than 20 % by weight, more preferably not less than 40 % by weight, furthermore preferably not less than 50 % by weight from the viewpoint of the compatibility between the oligomer and the polymer.

The reaction time is preferably not more than 120 min, more preferably not more than 60 min, furthermore preferably not more than 40 min.

The stereocomplex polylactic acid resin composition (Z) is preferably prepared by allowing a polyisocyanate compound to react with a mixture of the oligomer (y'1) in which the main repeating unit is a D-lactic acid and in which the percentage of the terminal functional group which is a carboxyl group exceeds 50% and the polymer (X1) having L-lactic acid as a main repeating unit and a molecular weight larger than that of the oligomer (y'1) from the viewpoints of attaining the high molecular weight and simultaneously the formation of the stereocomplex polylactic acid resin composition (Z), and having the capability of forming the stereocomplex polylactic acid resin composition (Z) having a high molecular weight, the cost and the like.

The carboxyl group which is a terminal functional group of the oligomer (x'1) or (y'1) reacts with the polyisocyanate compound to form an amide bond, and thereby the polylactic acid resin is formed and also the stereocomplex polylactic acid-based resin composition (Z) having a high molecular weight is formed together with the polymer (Y1) or (X1).

The reaction is preferably carried out using the amidation catalyst. Examples of the production process for the stereocomplex polylactic acid resin composition (Z) may include the following processes, but it is not limited by them without missing the object of the invention [3].

At first, to the mixture of the oligomers (x'1) and the polymer (Y1) or the mixture of the oligomers (y'1) and the polymer (X1), the catalyst and the solvent are added, and the mixture is heated to a prescribed temperature under normal pressure. Next, to the mixture, a prescribed amount of the polyisocyanate compound is added and subjected to reaction at a prescribed temperature. Finally, the solvent is removed from the resulting reaction product and thereby the stereocomplex polylactic acid resin composition (Z) is prepared. The method of removing the solvent is not particularly limited. For example, there are a method of evaporating the solvent at room temperature, a method of evaporating the solvent by passing through an inert gas at room temperature and a method of evaporating the solvent at room temperature under reduced pressure, at a temperature not higher than the glass transition temperature of the polylactic acid or at a temperature not lower than the boiling point of the solvent.

Mixing weight ratio of oligomer and polymer

For the mixing weight ratio of the oligomer and the polymer in the production of the stereocomplex polylactic acid resin composition (Z) according to the invention [3], the oligomer is mixed in an amount of 30 to 300 parts by weight, more preferably 30 to 200 parts by weight based on 100 parts by weight of the polymer. By the mixing weight ratio, the stereo crystal rate (S) in the first heating process, as determined by the following measurement with a differential scanning calorimeter (DSC), is not less than 60% and thereby the stereo crystal rate (S) in the second heating process at a relatively low thermal load is not less than 88%. Furthermore, based on 100 parts by weight of the polymer, the oligomer is mixed in an amount of more preferably 60 to 140 parts by weight. By the mixing weight ratio, the stereo crystal rate (S) in the first heating process, as determined by the following measurement with a differential scanning calorimeter (DSC), is not less than 90% and thereby the stereo crystal rate (S) in the second heating process at a further low thermal load is 100%.

Polyisocyanate compound

Examples of the polyisocyanate compound used in the process are the same compounds as those of the polyisocyanate compound used in the production process of the polylactic acid-based resin (I) according the invention [1].

Among them, preferable examples are at least one compound selected from the group consisting of tetramethylene diisocyanate, pentamethylene diisocyanate, hexamethylene diisocyanate, dodecamethylene diisocyanate, isophorone diisocyanate, 1,3-(bisisocyanatomethyl)cyclohexane, bis(isocyanatomethyl)bicyclo-[2,2,1]-heptane and bis(4-isocyanatocyclohexyl)methane. Furthermore, an aliphatic diisocyanate compound is preferable and hexamethylene diisocyanate is more preferable. The polyisocyanate compound is preferably an aliphatic diisocyanate from the viewpoint of color tone.

Addition amount of polyisocyanate compound

The addition amount of the polyisocyanate compound is determined based on the mole number of the terminal functional groups of the oligomer (x'1) or (y'1). The mole number of the terminal functional groups of the oligomer is calculated from the NMR data and the carboxylic acid value by the method in the example as described later.

The addition amount of the polyisocyanate compound is preferably 0.8 to 2.0 times mol, more preferably 0.8 to 1.5 times mol, furthermore preferably 0.8 to 1.30 times mol based on the mol number of the terminal functional groups of the oligomer. The "times mol" is a unit of a value calculated by "isocyanate group number (mol) / terminal functional group number (mol)".

When the addition amount of the polyisocyanate compound is less than the above lower limit, the effect of adding the polyisocyanate compound is small and thereby it is occasionally difficult to prepare the stereocomplex polylactic acid resin composition (Z) having a high molecular weight. While when it is over the upper limit, side reaction such as crosslinking reaction or the like is induced to generate the stereocomplex polylactic acid resin composition (Z) in a gel state occasionally.

Solvent

Examples of the solvent usable for the production of the stereocomplex polylactic acid resin composition (Z) may include the same solvents as those usable in the production process of the polylactic acid-based resin (I) according to the invention [1]. Among them, tetralin, m-diisopropyl benzene, p-diisopropyl benzene, diisopropyl benzene (isomer mixture), o-dichlorobenzene and diphenyl ether are preferred from the viewpoints of the solubility and general-purpose properties. Furthermore, these may be used singly or may be combined for use.

Amidation catalyst

The amidation catalyst which may be used in the invention [3] is a catalyst capable of forming an amide bond by allowing the terminal carboxyl group part of the lactic acid oligomer to react with the polyisocyanate compound preferentially.

The amidation catalyst preferably comprises at least one metal selected from the group consisting of metals in Groups 1, 2 and 3 in the Periodic Table, more preferably at least one metal selected from the group consisting of potassium, magnesium, calcium and ytterbium, particularly preferably magnesium or calcium. The amidation catalyst preferably comprises such a metal, because the catalyst having excellent reactivity can be prepared and the stereo complex polylactic acid resin composition (Z) having good color tone can be prepared.

Examples of the amidation catalyst comprising at least one metal selected from the group consisting of Group 1, 2 and 3 metals in the Periodic Table may include the same catalysts as those used in the production process for the polylactic acid-based resin (I) of the invention [1]. Among them, bis(acetylacetonato)magnesium, magnesium stearate, calcium stearate, magnesium chloride, ytterbium trifulate and the like are preferred, furthermore, a magnesium compound is preferred, particularly bis(acetylacetonato)magnesium and magnesium stearate are preferred. These catalysts may be combined for use.

The addition amount of the amidation catalyst is preferably 0.01 to 2 parts by weight, more preferably 0.01 to 1 part by weight, furthermore preferably 0.01 to 0.5 part by weight based on 100 parts by weight of the oligomer (x'1) or (y'1).

There is occasionally the case that the oligomers (x'1) and (y'1) of the invention [3] contain a hydroxyl group. In this case, the hydroxyl part reacts with the polyisocyanate compound to form a urethane bond.

Examples of the catalyst of forming such a urethane bond may include the same catalysts as those which may be used in the production process for polylactic acid-based resin (I) of the invention [1]. The addition amount of the catalyst of forming the urethane bond is preferably 0.01 to 2 parts by weight, more preferably 0.01 to 1 part by weight, furthermore preferably 0.01 to 0.5 part by weight based on 100 parts by weight of the polylactic acid-based resin formed

from the oligomer (x'1) or (y'1) and the polyisocyanate compound.

Other components

The stereocomplex polylactic acid resin composition (Z) of the invention [3] solely has a high stereo crystal rate (S) and high heat resistance. Furthermore, it is possible to add high stereo crystallinity, excellent heat stability and other properties by adding the various components as described below. The other components are added in an amount as long as the objects of the invention [3] are accomplished. Specific examples of the other components may include the following components, and are not limited by them as long as the objects of the invention [3] are accomplished.

Stabilizer

The stereocomplex polylactic acid resin composition (Z) of the invention [3] may further comprise a stabilizer. Based on 100 parts by weight of the stereocomplex polylactic acid resin composition (Z), the amount of the stabilizer is preferably 0.001 to 5 parts by weight, more preferably 0.001 to 2.5 parts by weight, furthermore preferably 0.001 to 1 part by weight, moreover preferably 0.005 to 1 part by weight, still preferably 0.01 to 3 parts by weight, particularly preferably 0.01 to 1 part by weight.

Examples of the stabilizer may include a phosphorus-based stabilizer, a phenol-based stabilizer and other stabilizers.

Phosphorus-based stabilizer

It is considered that the phosphorus-based stabilizer functions as a quencher for the amidation catalyst in the production of the stereocomplex polylactic acid resin composition (Z) and/or as a quencher for the catalyst used in the preparations of the oligomers (x'1) and (y'1), and the polymers (X1) and (Y1). The phosphorus-based stabilizer is effective as a catalyst quencher in the production of the stereocomplex polylactic acid resin composition (Z) in the invention [3].

Examples of the phosphorus-based stabilizer may include a phosphite-based compound and a phosphate-based compound, and may include the same compounds as those of phosphorus-based compound which may be contained in the polylactic acid-based resin (I) in the invention [1]. Among them, a phosphorus-based compound in which at least one P-O bond is bonded to an aromatic group is more preferred. Specific examples thereof are

tris(2,4-di-t-butylphenyl)phosphite,
tetrakis(2,4-di-t-butylphenyl)4,4'-biphenylene phosphonite, bis(2,4-di-t-butylphenyl)pentaerythritol-di-phosphite,
bis(2,6-di-t-butyl-4-methylphenyl)pentaerythritol-diphosphite, 2,2-methylene bis(4,6-di-t-butylphenyl)octyl phosphite,
4,4'-butylidene-bis(3-methyl-6-t-butylphenyl-di-tridecyl) phosphite,
1,1,3-tris(2-methyl-4-ditridecylphosphite-5-t-butyl-phenyl) butane, tris(mixed-mono and di-nonylphenyl)phosphite, tris(nonylphenyl) phosphite and 4,4'-isopropylidene bis(phenyl-dialkylphosphite). It is further preferred to use tris(2,4-di-t-butylphenyl)phosphite, 2,2-methylene bis(4,6-di-t-butylphenyl)octyl phosphite,
bis(2,6-di-t-butyl-4-methylphenyl)pentaerythritol-diphosphite, tetrakis(2,4-di-t-butylphenyl)- 4,4'-biphenylene phosphonite and the like.

Specific trade names of the phosphite-based compounds may include "ADEKASTAB" C, PEP-4C, PEP-8, PEP-11C, PEP-24G, PEP-36, HP-10, 2112, 260, 522A, 329A, 1178, 1500, C, 135A, 3010 and TPP manufactured by ADEKA, "IRGAFOS" 168 manufactured by Ciba Specialty Chemical Co., Ltd., "SUMILIZER" P-16 manufactured by Sumitomo Chemical Co., Ltd., "SANDOSTAB" PEPQ manufactured by Clariant Co., "WESTON" 618, 619G and 624 manufactured by GE and the like.

Among them, more preferable examples thereof are "ADEKASTAB" AX-71 (dioctadecyl phosphate), PEP-8 (distearyl pentaerythritol diphosphite) and PEP-36 (cyclic neopentanetetraylbis(2,6-t-butyl-4-methylphenyl)phosphite manufactured by ADEKA. The phosphorus-based stabilizer may be used singly or two or more may be combined for use.

Phenol-based stabilizer

To the stereocomplex polylactic acid resin composition (Z) of the invention [3], it is also possible to add the phenol-based stabilizer. It is considered that the phenol-based stabilizer prevents the molecular chain from breaking at the time of high temperature, and it is effective for good hue and viscosity stability at the time of high temperature.

Examples of the phenol-based stabilizer may include the same compounds as those of the phenol-based compound which may be contained in the polylactic acid-based resin (I) in the invention [1]. Preferable examples thereof

are triethylene glycol-bis-[3-(3-t-butyl-5-methyl-4-hydroxyphenyl)-propionate], tetrakis[methylene-3-(3,5-di-t-butyl--4-hydroxyphenyl)propionate]methane, 1,6-hexanediol-bis-[3-(3,5-di-t-butyl-4-hydroxyphenyl)-propionate], pentaerythrityl-tetrakis[3-(3,5-di-t-butyl-4-hydroxyphenyl)propionate] and N,N'-hexamethylene bis(3,5-di-t-butyl-4-hydroxy-hydrocinamide.

Specific trade names of the phenol-based compound may include "ADEKASTAB" AO-20, AO-30, AO-40, AO-50, AO-60, AO-70, AO-80 and AO-330 manufactured by ADEKA, "IRGANOX" 245, 259, 565, 1010, 1035, 1076, 1098, 1222, 1330, 1425, 1520, 3114 and 5057 manufactured by Ciba Specialty Chemical Co., Ltd., "SUMILIZER" BHT-R, MDP-S, BBM-S, WX-R, NW, BP-76, BP-101, GA-80, GM and GS manufactured by Sumitomo Chemical Co. , Ltd. , and "CYANOX" CY-1790 manufactured by Cyanamide Co., Ltd.

Among them, more preferable examples thereof are "IRGANOX" 245 (triethylene glycol-bis-[3-(3-t-butyl-5-methyl-4-hydroxyphenyl)-propionate ]) and 1010 (tetrakis[methylene-3-(3',5'-di-t-butyl-4'-hydroxy phenyl)propionate]methane) manufactured by Ciba Specialty Chemical Co., Ltd.

The above phenol stabilizers may be used singly or two or more may be combined for use.

Other stabilizers

The stereocomplex polylactic acid resin composition (Z) of the invention [3], further, may preferably comprise a stabilizer other than the phosphorus-based stabilizer and phenol-type stabilizer in order to have further good hue and stable fluidity. Examples of the other stabilizer may include a thioether-based compound, a vitamin-based compound, a triazole-based compound, a polyvalent amine-based compound, a hydrazine derivative-based compound and the like. These compounds may be combined for use.

Examples of the thioether-based compound, the vitamin-based compound, the triazole-based compound, the polyvalent amine-based compound and the hydrazine derivative-based compound are the same compounds as those of the thioether-based compound, the vitamin-based compound, the triazole-based compound, the polyvalent amine-based compound and the hydrazine derivative-based compound usable in the invention [1].

Crystal nucleating agent

The stereocomplex polylactic acid resin composition (Z) of the invention [3], furthermore, may comprise a crystal nucleating agent. As the crystal nucleating agent, it is possible to use a known compound which is usually used to a crystalline resin such as a polylactic acid and an aromatic polyester. Examples thereof may include the same compounds as those of the crystal nucleating agent which may be contained in the polylactic acid resin composition (C) of the invention [2].

Among the compounds used as the crystal nucleating agent, talc has especially high effect and it is preferred to use talc having an average particle diameter of not more than 20 $\mu$m, more preferably not more than 5 $\mu$m.

The addition amount of these crystal nucleating agents is not defined regularly because the amount of capable of exhibiting the effect is different in accordance with the kind and shape of the crystal nucleating agent. For example, based on 100 parts by weight of the stereocomplex polylactic acid resin composition (Z), the addition amount is from 0.01 to 5 parts by weight, preferably 0.05 to 3 parts by weight, more preferably 0.1 to 2 parts by weight. When the addition amount of the crystal nucleating agent is too small, the effect of the crystal nucleating agent is sometimes not exhibited, while when it is too large, the effect of the crystal nucleating agent is not increased and the inverse effect may be caused in mechanical properties and other properties.

The method of blending the crystal nucleating agent used in the invention [3] is not particularly limited. In the case of optionally blending with the other components, it is preferred to employ a method of adding the crystal nucleating agent together with the other components to the stereocomplex polylactic acid resin composition (Z) because the inverse effect of giving to the stereocomplex formation is small.

Inorganic filler

It is possible to add an inorganic filler to the stereocomplex polylactic acid resin composition (Z) of the invention [3]. When the inorganic filler is further added to the stereocomplex polylactic acid resin composition (Z) of the invention [3], a molded article having excellent mechanical properties and dimensional properties can be prepared.

Examples of the inorganic filler may include the same compounds as those of the inorganic filler which may be contained in the polylactic acid resin composition (C) of the invention [2] . The form of the inorganic filler is freely selected from a fibrous form, a flake form, a spherical form and a hollow form. The inorganic filler preferably has a fibrous form or a flake form in order to improve the strength and impact resistance of the resin composition.

Among them, an example is preferably an inorganic filler made from a ground product of a natural mineral, more preferably an inorganic filler made from a ground product of a natural mineral silicate. From the viewpoint of the

form, mica, talc and wollastonite are preferred.

Preferable examples of the mica, talc and wollastonite used as the inorganic filler in the invention [3] may include the same ones as those of the mica, talc and wollastonite which may be contained in the polylactic acid resin composition (C) of the invention [2]. Some of these inorganic fillers function as the crystal nucleating agent. The addition amount is preferably from 0.3 to 200 parts by weight, more preferably 1.0 to 100 parts by weight, most preferably 3 to 50 parts by weight based on 100 parts by weight of the stereocomplex polylactic acid resin composition (Z). When the addition amount is less than 0.3 part by weight, the effect of reinforcing the mechanical properties of the molded article according to the invention [3] is not sufficient, while when it is over 200 parts by weight, the molding processing properties and hue are sometimes worsened.

In the case of using the fibrous inorganic filler or the flake like inorganic filler in the stereocomplex polylactic acid resin composition (Z), a breaking inhibitor can be blended in order to inhibit their breaking. The breaking inhibitor hinders adhesion between the matrix resin and the inorganic filler and thereby decreases the stress which functions on the inorganic filler at the time of melt kneading to inhibit breaking of the inorganic filler. The effects of the breaking inhibitor may include (1) improvement in rigidity (the aspect ratio of the inorganic filler is increased), (2) improvement in toughness, (3) improvement in conductivity (in the case of the conductive inorganic filler) and the like. Specifically, the breaking inhibitor is a compound having a structure such that the affinity with a resin is low, and having a functional group capable of reacting with the surface of the inorganic filler. As described above, it is possible to obtain a compound that the surface of the inorganic filler is directly coated with the compound having a low affinity with a resin.

Examples of the compound having a low affinity with a resin, the compound having a structure that the affinity with a resin is low and having a functional group capable of reacting with the surface of the inorganic filler and the breaking inhibitor may include the same compounds as those used in the invention [2].

Examples of the method of directly coating the surface of the inorganic filler with the compound having low affinity with a resin may include the same methods as those described in the invention [2].

The addition amount of the breaking inhibitor is from 0.01 to 2 parts by weight, more preferably 0.05 to 1.5 parts by weight, furthermore preferably 0.1 to 0.8 part by weight based on 100 parts by weight of the stereocomplex polylactic acid resin composition (Z) of the invention [3].

## Flame retardant

To the stereocomplex polylactic acid resin composition (Z) of the invention [3], a flame retardant can be also blended. Examples of the flame retardant may include the same compounds as those used in the invention [2], and preferable examples are the same flame retardants as those.

In the case of blending the flame retardant in the stereocomplex polylactic acid resin composition (Z) of the invention [3], the addition amount is from 0.05 to 50 parts by weight based on 100 parts by weight of the stereocomplex polylactic acid resin composition (Z). When the addition amount is less than 0.05 part by weight, sufficient flame retardance sometimes cannot be exhibited, while when it is over 50 parts by weight, the strength and heat resistance of a molded article are sometimes damaged.

## Impact modifier

To the stereocomplex polylactic acid resin composition (Z) of the invention [3], an impact modifier can be used. An example of the impact modifier may include an elastic polymer, and examples of the elastic polymer may include the same compounds as those of the elastic polymer used in the invention [2].

The compositional amount of the impact modifier is preferably from 0.2 to 50 parts by weight, more preferably 1 to 30 parts by weight, furthermore preferably 1.5 to 20 parts by weight based on 100 parts by weight of the stereocomplex polylactic acid resin composition (Z). When the impact modifier is added in the above compositional amount, it can give good impact resistance to the composition with inhibiting the decrease of the rigidity.

## End capping agent

Blending an end capping agent to the stereocomplex polylactic acid resin composition (Z) of the invention [3] can prepare a molded article having enhanced resistance to hydrolysis.

The end capping agent seals the chains by reacting a part or all of the carboxyl groups present in the end of the resin which is contained in the stereocomplex polylactic acid resin composition (Z) of the invention [3]. Examples of the end capping agent are a condensation reaction type compound such as an aliphatic alcohol and an amide compound, and an addition reaction type compound such as a carbodiimide compound, an epoxy compound, an oxazoline compound, an oxazine compound and an aziridine compound. It is possible to use the same compounds as those of the end capping agent used in the invention [2].

As the end capping agent can be used in the invention [3], it is also possible to use two or more compounds of the carbodiimide compound, the epoxy compound, the oxazoline compound, the oxazine compound, the aziridine compound and the like.

An example of the method of sealing the ends of the carboxyl groups of the stereocomplex polylactic acid resin composition of the invention [3] may include the same method as that of the method of sealing the carboxyl group in the end of the resin which is contained in the polylactic acid resin composition (C) of the invention [2].

The addition amount of the end capping agent is from 0.01 to 5 parts by weight, preferably 0.05 to 4 parts by weight, more preferably 0.1 to 3 parts by weight based on 100 parts by weight of the stereocomplex polylactic acid resin composition (Z).

Other additives

To the stereocomplex polylactic acid resin composition (Z) of the invention [3], the other additives which may be contained in the polylactic acid resin composition (C) of the invention [2] and the like may be added as long as the effects of the invention [3] are accomplished. These various additives can be used in a known amount in blending them to a thermoplastic resin such as polylactic acid and the like.

Molded article and production thereof

The stereocomplex polylactic acid resin composition (Z) of the invention [3] is a favorable material to which known and normal methods as a method of molding resins and/or compositions are applicable. Particularly non-limiting examples of the obtainable molded articles may include, for example, extrusion molded articles such as films and sheets, monofilaments, multi-filaments such as fibers and non-woven fabrics, injection molded articles, blow molded articles, laminates, foamed articles and thermal molded articles such as vacuum molded articles and the like.

Examples of the method of forming the molded article prepared from the stereocomplex polylactic acid resin composition (Z) of the invention [3] may include the same methods as those of the method of forming the molded articles formed from the polylactic acid resin composition (C) of the invention [2]. Particularly, the injection molding, extrusion molding and melt spinning are preferred because of making the best of using the properties of the stereocomplex polylactic acid resin composition (Z) of the invention [3].

Examples of the molded articles prepared from the stereocomplex polylactic acid resin composition (Z) of the invention [3] may include molded articles prepared by known and normal molding methods and the shape, size, thickness and design of the molded articles are not limited all.

Embodiment of use

The molded articles prepared from the stereocomplex polylactic acid resin composition (Z) of the invention [3] can be used suitably to the same uses as those of the molded articles prepared from the polylactic acid-based resin (I) of the invention [1]

## Example

### Example 1

The invention [1] will be described in more detail with reference to Example 1, but it should be not limited by the following example 1.

The measuring method in Example 1 is shown below.

Weight average molecular weight (Mw)

The weight average molecular weight was determined using a polystyrene standard sample by gel permeation chromatography (GPC, manufactured by Waters, a detector RI: 2414 manufactured by Waters, a column: LF-G, LF-804 manufactured by Shodex), at a column temperature of 40°C, at a flow rate of 1 mL/min with a chloroform solvent.

Melting point (Tm) and Crystallinity

The Melting point (Tm) and crystallinity were determined from DSC (DSC apparatus RDC 220 manufactured by SII). 5 to 6 mg of a sample was weighed and put in a nitrogen-sealed pan, and introduced into a nitrogen-sealed DSC measuring part previously set at 30°C. The temperature was increased to 240°C at a temperature increasing rate of

10°C/min. Thereafter, the temperature was decreased to 10°C rapidly. Furthermore, the temperature was increased to 240°C at a temperature increasing rate of 10°C/min. In melting peaks obtained by the first and second temperature increases, the melting points (Tm) of the peak top and the crystal melt enthalpies (ΔHm) were measured. The crystallinity was determined from the formula [ΔHm) / ($\Delta H_0$)] x 100. In the formula, $\Delta H_0$ is a melt enthalpy of completely ideal crystal, and the numerical value of the stereocomplex polylactic acid of 142 J/g was used.

Retention rate of molecular weight

5 mg of a polylactic acid-based resin was dissolved in 10 mL of a 1% hexafluoroisopropanol-containing chloroform and the resulting mixture was casted in a laboratory dish, and then the solvent was distilled off at 50 °C under reduced pressure to prepare a cast film. A part of the resulting cast film was clipped and Mw thereof was measured by GPC measurement. This value was taken as MX. Furthermore, the resulting cast film was kept in an inert oven heated at a temperature of 190°C or 240°C for 10 min and then Mw was measured by GPC measurement as described above. This value was taken as MY. The retention rate of molecular weight was determined by the following formula.

Retention rate of molecular weight = MY/MX x 100

Carboxyl acid value

To 0.5 g of a polymer for measurement, 20 mL of a 7/3 mixed solvent of chloroform and methanol was added and the polymer was completely dissolved. Two drops of a brome thymol blue and phenol red mixed ethanol solution as an indicator was added to the polymer solution. The resulting mixture indicated yellow. Titration of the mixture was carried out by use of a 0.1 N potassium hydroxide ethanolic solution. The point at which the color thereof was changed from yellow to pale violet was the end point. The carboxyl acid value of the polymer was thus determined.

Proportion of terminal carboxyl group and Number of terminal functional group

A specimen prepared by allowing a polylactic acid to react with anhydrous succinic acid and a polylactic acid specimen prepared from lactic acid and anhydrous succinic acid were subjected to $^1$H-NMR measurement (device: ECA500 manufactured by Nihon electron, internal standard tetramethyl silane: $\delta$= 0 ppm) . In this spectrum,

$\delta$ = 2.61 to 2.72 ppm (multiplet): derived from hydrogen of methylene chain of the succinic acid unit reacted with the polylactic acid end and the succinic acid in the polylactic acid (4H)

$\delta$ = 4.36 ppm J = 6.92 (quartet): derived from methine hydrogen present at a $\alpha$ position of the terminal hydroxyl group of the polylactic-acid chain (1H)

By the two integral values, the proportion of terminal carboxyl group was determined from the number of terminal carboxylic acid group [= the number of carboxyl group in polylactic acid (= the number of unreacted terminal hydroxyl group in polylactic acid) + the number of succinilated terminal carboxyl group}, and the number of terminal hydroxyl group (the number of unreacted terminal hydroxyl group in polylactic acid). Furthermore, the number of terminal functional group was determined from the carboxyl acid value and the proportion of terminal carboxylic acid group.

The proportion of terminal carboxylic acid group (%)

= the number of terminal carboxylic acid group / (the number of terminal carboxylic acid group + the number of terminal hydroxyl group) x 100

The number of terminal functional group (mol/g)

= the carboxyl acid value / (proportion of terminal carboxylic acid group/ 100)

Identification of amide bond of polylactic acid-based resin

The polylactic acid-based resin prepared by allowing a polylactic acid to react with hexamethylene diisocyanate was subjected to $^{13}$C-NMR measurement (device: ECA 500 manufactured by Nihon electron, internal standard chloroform d: $\delta$= 77 ppm). In this spectrum,
$\delta$ = 39 ppm:

derived from carbon present at an $\alpha$ position in hexamethylene unit adjacent to an amide bond

$\delta$ = 69 ppm:

derived from methine carbon of the polylactic acid main chain

The amount of amide bond in the polylactic acid-based resin was determined from proportion between the two integral values, and the number of the amide bond unit per 1 molecule of the polylactic acid-based resin was determined from the above amount and the number average molecular weight of the polylactic acid used as a raw material.

Measurement method for Sn

A specimen was subjected to wet decomposition by sulfuric acid and hydrogen peroxide and then, 1 ml of the resulting decomposed matter was diluted 40 times by hydrochloric acid to prepare a solution for test. The content of heavy metals such as Sn was measured by ICP emission spectrochemical analysis apparatus (ICPS-8100, manufactured by Shimadzu Co., Ltd). The detection limit of the content of heavy metals such as Sn by the measuring method is less than 4 ppm.

Production Example 1-1

To a 1000 ml round-bottom flask equipped with a Dean stark trap, 500 g (5.0 mol) of 90% L-lactic acid (lactic acid containing 99.5 % by mol of L-form) manufactured by Purac Inc. and 1.18 g (0.005 mol) of tin (II) chloride di-hydrate (manufactured by Wako Pure Chemical Industries) as a reagent were introduced. The inside of the flask was purged with nitrogen and the flask was heated to 130°C at ordinary pressure in a nitrogen atmosphere by an oil bath heated at 150°C. The pressure of the flask inside was gradually decreased and the flask was maintained at 50 mmHg for 2 hr. Next, the flask was released to ordinary pressure and thereafter, 40 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 20 hr to prepare a transparent poly(L-lactic acid). The poly(L-lactic acid) had a weight average molecular weight (Mw), as measured by the above measuring method, of 20000. The carboxyl acid value, as determined by the above measuring method, was 1.818 x $10^{-4}$ (mol/g).

Furthermore, to the flask, 6.55 g (0.065 mol) of anhydrous succinic acid was added and the mixture was stirred at an oil bath temperature of 150°C for 2 hr to convert a terminal hydroxyl group of the poly (L-lactic acid) into a carboxyl group. The flask was released to ordinary pressure, and the reaction mixture was diluted by adding 300 g of xylene and then the resulting solution was taken out and xylene was removed by drying in a nitrogen stream. The solid obtained after the air-drying was washed twice with 1.0 L of 2-propanol having a 35 % hydrochloric acid content of 1 % and filtered off. Thereafter, the solid filtered off was washed with methanol several times and dried under reduced pressure at 50°C to prepare 340 g of a white poly(L-lactic acid) [plea(1)]. The PLLA(1) had a weight average molecular weight (Mw), as measured by the above measuring method, of 20000. The proportion of terminal carboxylic acid group in the PLLA(1), as determined by the above measuring method, was 95%. The carboxyl acid value of the PLLA(1), as determined by the above measuring method, was 3.652 x $10^{-4}$ (mol/g). The number average molecular weight Mn determined from the carboxyl acid value and the proportion of terminal carboxylic acid group was 5200. The Sn content in the PLLA(1) was not more than 5 ppm.

Production Example 1-2

To a 1000 ml round-bottom flask equipped with a Dean stark trap, 500 g (5.0 mol) of 90% L-lactic acid (lactic acid containing 99.5 % by mol of L-form) manufactured by Purac Inc. and 1.18 g (0.005 mol) of tin (II) chloride di-hydrate (manufactured by Wako Pure Chemical Industries) as a reagent were introduced. The inside of the flask was purged with nitrogen and the flask was heated to 130°C at ordinary pressure in a nitrogen atmosphere by an oil bath heated at 150°C. The pressure of the flask inside was gradually decreased and the flask was maintained at 50 mmHg for 2 hr.

Next, the flask was released to ordinary pressure and thereafter, 40 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 20 hr to prepare a transparent poly (L-lactic acid). The poly (L-lactic acid) had a weight average molecular weight (Mw), as measured by the above measuring method, of 20000. The carboxyl acid value, as determined by the above measuring method, was 1.820 x $10^{-4}$ (mol/g).

Furthermore, to the flask, 7.15 g (0.072 mol) of anhydrous succinic acid was added and the mixture was stirred at an oil bath temperature of 150°C for 2 hr to convert a terminal hydroxyl group of the poly(L-lactic acid) into a carboxyl group. The flask was released to ordinary pressure, and the reaction mixture was diluted by adding 300 g of xylene and then the resulting solution was taken out and xylene was removed by air-dried in a nitrogen stream. The solid obtained after the air-drying was washed twice with 1.0 L of 2-propanol having a 35 % hydrochloric acid content of 1 % and filtered off. Thereafter, the solid filtered off was washed with methanol several times and dried under reduced pressure at 50°C to prepare 342 g of a white poly (L-lactic acid) [PLLA(2)]. The PLLA (2) had a weight average molecular weight (Mw), as measured by the above measuring method, of 20000. The proportion of terminal carboxylic acid group in the PLLA(2), as determined by the above measuring method, was 98%. The carboxyl acid value of the PLLA(2), as determined by the above measuring method, was 3.638 x $10^{-4}$ (mol/g). The number average molecular weight Mn determined from the carboxyl acid value and the proportion of terminal carboxylic acid group was 5390. The Sn content in the PLLA(2) was not more than 5 ppm.

Production Example 1-3

To a 1000 ml round-bottom flask equipped with a Dean stark trap, 500 g (5.0 mol) of 90% L-lactic acid (lactic acid containing 99.5 % by mol of L-form) manufactured by Purac Inc. and 1.18 g (0.005 mol) of tin(II) chloride di-hydrate (manufactured by Wako Pure Chemical Industries) as a reagent were introduced. The inside of the flask was purged with nitrogen and the flask was heated to 130°C at ordinary pressure in a nitrogen atmosphere by an oil bath heated at 150°C. The pressure of the flask inside was gradually decreased and the flask was maintained at 50 mmHg for 2 hr. Next, the flask was released to ordinary pressure and thereafter, 40 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 30 hr to prepare a transparent poly(L-lactic acid). The poly(L-lactic acid) had a weight average molecular weight (Mw), as measured by the above measuring method, of 32000. The carboxyl acid value, as determined by the above measuring method, was 1.138 x $10^{-4}$ (mol/g).

Furthermore, to the flask, 4.47 g (0.045 mol) of anhydrous succinic acid was added and the mixture was stirred at an oil bath temperature of 150°C for 2 hr to convert a terminal hydroxyl group of the poly(L-lactic acid) into a carboxyl group. The flask was released to ordinary pressure, and the reaction mixture was diluted by adding 300 g of xylene and then the resulting solution was taken out and xylene was removed by drying in a nitrogen stream. The solid obtained after the air-drying was washed twice with 1.0 L of 2-propanol having a 35 % hydrochloric acid content of 1 % and filtered off. Thereafter, the solid filtered off was washed with methanol several times and dried under reduced pressure at 50°C to prepare 344 g of a white poly(L-lactic acid) [PLLA(3)]. The PLLA (3) had a weight average molecular weight (Mw), as measured by the above measuring method, of 32000. The proportion of terminal carboxylic acid group in the PLLA(3), as determined by the above measuring method, was 98%. The carboxyl acid value of the PLLA(3), as determined by the above measuring method, was 2 . 2'76 x $10^{-4}$ (mol/g). The number average molecular weight Mn determined from the carboxyl acid value and the proportion of terminal carboxylic acid group was 8610. The Sn content in the PLLA(3) was not more than 5 ppm.

Production Example 1-4

To a 1000 ml round-bottom flask equipped with a Dean stark trap, 500 g (5.0 mol) of 90% L-lactic acid (lactic acid containing 99.5 % by mol of L-form) manufactured by Purac Inc., 1.18 g (0.005 mol) of tin(II) chloride di-hydrate (manufactured by Wako Pure Chemical Industries) as a reagent and 12.51 g (0.13 mol) of anhydrous succinic acid were introduced. The inside of the flask was purged with nitrogen and the flask was heated to 130°C at ordinary pressure in a nitrogen atmosphere by an oil bath heated at 150°C. The pressure of the flask inside was gradually decreased and the flask was maintained at 50 mmHg for 2 hr. Next, the flask was released to ordinary pressure and thereafter, 40 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 30 hr to prepare a transparent poly(L-lactic acid). The poly(L-lactic acid) had a weight average molecular weight (Mw), as measured by the above measuring method, of 10000. Thereafter, the flask was released to ordinary pressure, and the content in the flask was diluted by adding 300 g of xylene and then the

resulting solution was taken out and xylene was removed by drying in a nitrogen stream. The solid obtained after the air-drying was washed twice with 1.0 L of 2-propanol having a 35 % hydrochloric acid content of 1 % and filtered off. Thereafter, the solid filtered off was washed with methanol several times and dried under reduced pressure at 50 °C to prepare 302 g of a white poly(L-lactic acid) [PLLA(4)]. The PLLA(4) had a weight average molecular weight (Mw), as measured by the above measuring method, of 10000. The proportion of terminal carboxylic acid group in the PLLA(4), as determined by the above measuring method, was 98%. The carboxyl acid value of the PLLA(4), as determined by the above measuring method, was 7.248 x $10^{-4}$ (mol/g). The number average molecular weight Mn determined from the carboxyl acid value and the proportion of terminal carboxylic acid group was 2700. The Sn content in the PLLA(4) was not more than 5 ppm.

Production Example 1-5

To a 1000 ml round-bottom flask equipped with a Dean stark trap, 500 g (5.0 mol) of 90% L-lactic acid (lactic acid containing 99.5 % by mol of L-form) manufactured by Purac Inc. and 1.18 g (0.005 mol) of tin (II) chloride di-hydrate (manufactured by Wako Pure Chemical Industries) as a reagent were introduced. The inside of the flask was purged with nitrogen and the flask was heated to 130°C at ordinary pressure in a nitrogen atmosphere by an oil bath heated at 150°C. The pressure of the flask inside was gradually decreased and the flask was maintained at 50 mmHg for 2 hr. Next, the flask was released to ordinary pressure and thereafter, 40 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 20 hr to prepare a transparent poly(L-lactic acid). Thereafter, the flask was released to ordinary pressure, and the content in the flask was diluted by adding 300 g of xylene and then the resulting solution was taken out and xylene was removed by drying in a nitrogen stream. The solid obtained after the air-drying was washed twice with 1.0 L of 2-propanol having a 35 % hydrochloric acid content of 1 % and filtered off. Thereafter, the solid filtered off was washed with methanol several times and dried under reduced pressure at 50°C to prepare 310 g of a white poly(L-lactic acid) [PLLA(5)]. The PLLA(5) had a weight average molecular weight (Mw), as measured by the above measuring method, of 20000. The proportion of terminal carboxylic acid group in the PLLA(5), as determined by the above measuring method, was 50%. The carboxyl acid value of the PLLA(5), as determined by the above measuring method, was 1.830 x $10^{-4}$ (mol/g) . The number average molecular weight Mn determined from the carboxyl acid value and the proportion of terminal carboxylic acid group was 5460. The Sn content in the PLLA(5) was not more than 5 ppm.

Production Example 1-6

To a 1000 ml round-bottom flask, 500 g (3.47 mol) of L-lactide manufactured by Purac Inc. and 1.50 g (0.023 mol) of ethylene glycol (manufactured by Wako Pure Chemical Industries) were introduced. The inside of the flask was purged with nitrogen and the flask was heated to 130 °C at ordinary pressure in a nitrogen atmosphere by an oil bath heated at 150°C and thereby the mixture was dissolved uniformly. The temperature of the oil bath was increased to 170°C and thereby the temperature of the flask inside was increased to 150°C. 2.0 g of tin 2-ethyl hexanoate was added and polymerization reaction was carried out for 2 hr. Thereafter, the reactant was dissolved in chloroform and precipitated in methanol (10 times the amount of chloroform) while stirring to remove a monomer completely, and thereby a poly(L-lactic acid) was prepared. The resulting polymer was washed twice with 1.0 L of 2-propanol having a 35 % hydrochloric acid content of 1 % and filtered off. Thereafter, the solid filtered off was washed with methanol several times and dried under reduced pressure at 50°C to prepare 483 g of a white poly(L-lactic acid) [PLLA(6)]. The PLLA (6) had a weight average molecular weight (Mw), as measured by the above measuring method, of 20000. The carboxyl acid value of the PLLA(6), as determined by the above measuring method, was not detected. The number average molecular weight determined from NMR was 9800. The Sn content in the PLLA(6) was not more than 5 ppm.

Production Example 1-7

The procedure of Production process 1-1 was repeated except for changing the 90% L-lactic acid to 90% D-lactic acid (obtainable by hydrolysis of D-lactide, lactic acid containing not less than 99.9 % by mole of D-form manufactured by Purac Inc.), to prepare a poly(D-lactic acid) [PDLA(1)]. The PDLA(1) had a weight average molecular weight (Mw), as measured by the above measuring method, of 20000. The proportion of terminal carboxylic acid group in the PDLA(1), as determined by the above measuring method, was 95%. The carboxyl acid value of the PDLA(1), as determined by the above measuring method, was 3.668 x $10^{-4}$ (mol/g). The number average molecular weight Mn determined from the carboxyl acid value and the proportion of terminal carboxylic acid group was 5180. The Sn content in the PDLA(1) was not more than 5 ppm.

Production Example 1-8

The procedure of Production process 1-2 was repeated except for changing the 90% L-lactic acid to 90% D-lactic acid (obtainable by hydrolysis of D-lactide, lactic acid containing not less than 99.9 % by mole of D-form manufactured by Purac Inc.), to prepare a poly(D-lactic acid) [PDLA(2)]. The PDLA(2) had a weight average molecular weight (Mw), as measured by the above measuring method, of 20000. The proportion of terminal carboxylic acid group in the PDLA(2), as determined by the above measuring method, was 98%. The carboxyl acid value of the PLLA(2), as determined by the above measuring method, was 3.64 x $10^{-4}$ (mol/g). The number average molecular weight Mn determined from the carboxyl acid value and the proportion of terminal carboxylic acid group was 5380. The Sn content in the PDLA(2) was not more than 5 ppm.

Production Example 1-9

The procedure of Production process 1-3 was repeated except for changing the 90% L-lactic acid to 90% D-lactic acid (obtainable by hydrolysis of D-lactide, lactic acid containing not less than 99.9 % by mole of D-form manufactured by Purac Inc.), to prepare a poly (D-lactic acid) [PDLA(3)]. The PDLA(3) had a weight average molecular weight (Mw), as measured by the above measuring method, of 32000. The proportion of terminal carboxylic acid group in the PDLA(3), as determined by the above measuring method, was 98%. The carboxyl acid value of the PDLA (3), as determined by the above measuring method, was 2.296 x $10^{-4}$ (mol/g). The number average molecular weight Mn determined from the carboxyl acid value and the proportion of terminal carboxylic acid group was 8530. The Sn content in the PDLA(3) was not more than 5 ppm.

Production Example 1-10

The procedure of Production process 1-4 was repeated except for changing the 90% L-lactic acid to 90% D-lactic acid (obtainable by hydrolysis of D-lactide, lactic acid containing not less than 99.9 % by mole of D-form manufactured by Purac Inc.), to prepare a poly (D-lactic acid) [PDLA(4)]. The PDLA (4) had a weight average molecular weight (Mw), as measured by the above measuring method, of 10000. The proportion of terminal carboxylic acid group in the PDLA (4), as determined by the above measuring method, was 98%. The carboxyl acid value of the PDLA (4), as determined by the above measuring method, was 7.296 x $10^{-4}$ (mol/g). The number average molecular weight Mn determined from the carboxyl acid value and the proportion of terminal carboxylic acid group was 2690. The Sn content in the PDLA(4) was not more than 5 ppm.

Production Example 1-11

The procedure of Production process 1-5 was repeated except for changing the 90% L-lactic acid to 90% D-lactic acid (obtainable by hydrolysis of D-lactide, lactic acid containing not less than 99.9 % by mole of D-form manufactured by Purac Inc.), to prepare a poly (D-lactic acid) [PDLA(5)]. The PDLA(5) had a weight average molecular weight (Mw), as measured by the above measuring method, of 20000. The proportion of terminal carboxylic acid group in the PDLA(5), as determined by the above measuring method, was 50%. The carboxyl acid value of the PDLA(5), as determined by the above measuring method, was 1.865 x $10^{-4}$ (mol/g). The number average molecular weight Mn determined from the carboxyl acid value and the proportion of terminal carboxylic acid group was 5360. The Sn content in the PDLA(5) was not more than 5 ppm.

Production Example 1-12

The procedure of Production process 1-6 was repeated except for changing the L-lactide to D-lactide (manufactured by Purac Inc.), to prepare a poly(D-lactic acid) [PDLA(6)]. The poly (D-lactic acid) had a weight average molecular weight (Mw), as measured by the above measuring method, of 20000. The carboxyl acid value of the PDLA(6), as determined by the above measuring method, was not detected. The number average molecular weight Mn determined from NMR was 9900. The Sn content in the PDLA(6) was not more than 5 ppm.

Production Example 1-13

To a 1000 ml round-bottom flask equipped with a Dean stark trap, 500 g (5.0 mol) of 90% L-lactic acid (lactic acid containing 99.5 % by mol of L-form) manufactured by Purac Inc. and 1.18 g (0.005 mol) of tin II) chloride di-hydrate (manufactured by Wako Pure Chemical Industries) as a reagent were introduced. The inside of the flask was purged with nitrogen and the flask was heated to 130°C at ordinary pressure in a nitrogen atmosphere by an oil bath heated at

150°C. The pressure of the flask inside was decreased gradually and the flask was maintained at 50 mmHg for 2 hr. Next, the flask was released to ordinary pressure and thereafter, 40 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 20 hr to prepare a transparent poly(L-lactic acid). The poly(L-lactic acid) had a weight average molecular weight (Mw), as measured by the above measuring method, of 20000. The carboxyl acid value, as determined by the above measuring method, was 1.818 x $10^{-4}$ (mol/g).

Furthermore, to the flask, 5.90 g (0.059 mol) of anhydrous succinic acid was added and the mixture was stirred at an oil bath temperature of 150°C for 2 hr to convert a terminal hydroxyl group of the poly(L-lactic acid) into carboxyl group. The flask was released to ordinary pressure, and the reaction mixture was diluted by adding 300 g of xylene and then the resulting solution was taken out and xylene was removed by drying in a nitrogen stream. The solid obtained after the air-drying was washed twice with 1.0 L of 2-propanol having a 35 % hydrochloric acid content of 1 % and filtered off. Thereafter, the solid filtered off was washed with methanol several times and dried under reduced pressure at 50°C to prepare 340 g of a white poly(L-lactic acid) [PLLA(7)]. The PLLA(7) had a weight average molecular weight (Mw), as measured by the above measuring method, of 20000. The proportion of terminal carboxylic acid group in the PLLA(7), as determined by the above measuring method, was 85%. The carboxyl acid value of the PLLA(7), as determined by the above measuring method, was 3.208 x $10^{-4}$ (mol/g). The number average molecular weight Mn determined from the carboxyl acid value and the proportion of terminal carboxylic acid group was 5300. The Sn content in the PLLA(7) was not more than 5 ppm.

Production Example 1-14

The procedure of Production process 1-13 was repeated except for changing the 90% L-lactic acid to 90% D-lactic acid (obtainable by hydrolysis of D-lactide, lactic acid containing not less than 99.5 % by mole of D-form manufactured by Purac Inc.), to prepare a poly(D-lactic acid) [PDLA(7)]. The PDLA (7) had a weight average molecular weight (Mw), as measured by the above measuring method, of 20000. The proportion of terminal carboxylic acid group in the PDLA (7), as determined by the above measuring method, was 85%. The carboxyl acid value of the PDLA(7), as determined by the above measuring method, was 3.234 x $10^{-4}$ (mol/g). The number average molecular weight Mn determined from the carboxyl acid value and the proportion of terminal carboxylic acid group was 5300. The Sn content in the PDLA(7) was not more than 5 ppm.

Production Example 1-15

To a 500 ml round-bottom flask equipped with a Dean stark trap, 200 g (2.0 mol) of 90% L-lactic acid (lactic acid containing 99.5 % by mol of L-form) (manufactured by Purac Inc.), 0.78 g (0. 007 mol) of a succinic acid (manufactured by Junsei Chemical Co., Ltd.), and 0.86 g (0.009 mol) of a methane sulfonic acid manufactured by Wako Pure Chemical Industries were introduced. The inside of the flask was purged with nitrogen and the flask was heated to 130 °C at ordinary pressure in a nitrogen atmosphere by an oil bath heated at 140°C. The pressure of the flask inside was gradually decreased and the flask was maintained at 50 mmHg for 2 hr. Next, the flask was released to ordinary pressure and then 16 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 12 hr. Thereafter, the flask was released to ordinary pressure, the reaction solution was diluted by adding 100 mL of xylene, and the diluted solution was taken out. The xylene was removed by air-dried in a nitrogen stream and the solution was dried while heating for 12 hr in a vacuum dryer set at 50°C. Furthermore, the solution was continued to drying at 140°C at ordinary pressure while passing nitrogen, to prepare 135 g of a white poly(L-lactic acid) [PLLA(8)]. The PLLA(8) had a weight average molecular weight (Mw), as measured by the above measuring method, of 50000. The proportion of terminal carboxylic acid group in the PLLA(8), as determined by the above measuring method, was 99.9%. The carboxyl acid value, as determined by the above measuring method, was 1.22 x $10^{-4}$ (mol/g). The number average molecular weight Mn determined from the carboxyl acid value and the proportion of terminal carboxylic acid group was 16400.

Production Example 1-16

The procedure of Production process 1-15 was repeated except for changing the 90% L-lactic acid to 90% D-lactic acid (obtainable by hydrolysis of D-lactide, lactic acid containing not less than 99.5 % by mole of D-form manufactured by Purac Inc.), to prepare a poly (D-lactic acid) [PDLA(8)]. The PDLA (8) had a weight average molecular weight (Mw), as measured by the above measuring method, of 50000. The proportion of terminal carboxylic acid group in the PDLA(8), as determined by the above measuring method, was 99.9%. The carboxyl acid value of the PLLA(8), as

determined by the above measuring method, was 1.22 x $10^{-4}$ (mol/g). The number average molecular weight determined from the carboxyl acid value and the proportion of terminal carboxylic acid group was 16500.

The measurement results of the polylactic acids prepared from Production examples 1-1 to 1-16 are shown in Table 1.

Table 1

| Production Example | Name of Sample | Mw | Proportion of terminal carboxylic acid group | Number of terminal functional group (mol/g) |
|---|---|---|---|---|
| 1-1 | PDLA(1) | 20,000 | 95% | 3.846 x $10^{-4}$ |
| 1-2 | PLLA(2) | 20,000 | 98% | 3.710 x $10^{-4}$ |
| 1-3 | PLLA(3) | 32,000 | 98% | 2.322 x $10^{-4}$ |
| 1-4 | PDLA(4) | 10,000 | 98% | 7.400 x $10^{-4}$ |
| 1-5 | PLLA(5) | 20,000 | 50% | 3.663 x $10^{-4}$ |
| 1-6 | PLLA(6) | 20,000 | 0% | 2.041 x $10^{-4}$ |
| 1-7 | PLLA(1) | 20,000 | 95% | 3.861 x $10^{-4}$ |
| 1-8 | PLLA(2) | 20,000 | 98% | 3.717 x $10^{-4}$ |
| 1-9 | PLLA(3) | 32,000 | 98% | 2.343 x $10^{-4}$ |
| 1-10 | PDLA(4) | 10,000 | 98% | 7.445 x $10^{-4}$ |
| 1-11 | PDLA(5) | 20,000 | 50% | 3.731 x $10^{-4}$ |
| 1-12 | PLLA(6) | 20,000 | 0% | 2.020 x $10^{-4}$ |
| 1-13 | PLLA(7) | 20,ode | 85% | 3.774 x $10^{-4}$ |
| 1-14 | PDLA(7) | 20,000 | 85% | 3.744 x $10^{-4}$ |
| 1-15 | PLLA(8) | 50,000 | >99% | 1.220 x $10^{-4}$ |
| 1-16 | PDLA(8) | 50,000 | >99% | 1.212 x $10^{-4}$ |

Examples 1-1

To a 100 ml round bottom flask, 7.5 g of the PLLA(1) synthesized in Production example 1-1, 7.5 g of the PDLA (1) synthesize in Production example 1-7 and 12 mg (0.02 mmol) of magnesium stearate were introduced. After the flask inside was purged with nitrogen, 15 g of tetralin was introduced into the flask and the temperature was increased to 210°C at ordinary pressure in a nitrogen atmosphere. Next, to the flask, 0.486 g of hexamethylene diisocyanate (2.89 mmol, 1.05 equivalent of isocyanate group to the number of the terminal functional groups of PLLA(1) and PDLA(1)) was added and reacted at 200°C for 1 hr. After 75 mg of PEP-36 (manufactured by Adeka Inc.) and 75 mg of IRGANOX 1010(manufactured by Ciba Specialty Chemical Co., Ltd.,) were added, 100 g of tetralin was added and the solution was cooled. The precipitate was filtered off and dried to prepare 15 g of a white powdery resin (polylactic acid-based resin). The resin had a weight average molecular weight, as measured, of 150000. The polylactic acid-based resin had an average content of amide bond, as determined with $^{13}$C-NMR measurement, of 13 units per 1 molecule of the polylactic acid-based resin. The melting peak was one kind in each of the 1st and 2nd temperature increases. The crystallinity, Tm and retention rate of molecular weight of the resin were measured. The results are shown in Table 2.

Example 1-2

The procedure of Example 1-1 was repeated except for changing PLLA(1) to PLLA(2) and changing PDLA(1) to PDLA(2) to prepare a white powdery resin (polylactic acid-based resin). The resin had a weight average molecular weight, as measured, of 210000. The polylactic acid-based resin had an average content of amide bond, as determined with $^{13}$C-NMR measurement, of 19 units per 1 molecule of the polylactic acid-based resin. The melting peak was one kind in each of the 1st and 2nd temperature increases. The crystallinity, Tm and retention rate of molecular weight of the resin were measured. The results are shown in Table 2.

Example 1-3

The procedure of Example 1-1 was repeated except for using 10.5 g of PLLA(1) synthesized in Production example 1-1 and 4.5 g of PDLA(1) synthesized in Production example 1-7 to prepare 15 g of a white powdery resin (polylactic acid-based resin). The resin had a weight average molecular weight, as measured, of 180000. The polylactic acid-based resin had an average content of amide bond, as determined with $^{13}$C-NMR measurement, of 16 units per 1 molecule of the polylactic acid-based resin. The melting peak was one kind in each of the 1st and 2nd temperature increases. The crystallinity, Tm and retention rate of molecular weight of the resin were measured. The results are shown in Table 2.

Example 1-4

To a 100 ml round bottom flask, 7.5 g of the PLLA(3) synthesized in Production example 1-3, 7.5 g of the PDLA (3) synthesized in Production process 1-9 and 12 mg (0.02 mmol) of magnesium stearate were introduced. After the flask inside was purged with nitrogen, 15 g of tetralin was introduced into the flask and temperature was increased to 210°C at ordinary pressure in a nitrogen atmosphere. Next, to the flask, 0.309 g of hexamethylene diisocyanate (1.84 mmol, 1.05 equivalent to the number of the terminal functional groups) was added and reacted at 200°C for 1 hr. After 75 mg of PEP-36 and 75 mg of IRGANOX 1010 were added, 100 g of tetralin was added and the solution was cooled. The precipitate was filtered off and dried to prepare 15 g of a white powdery resin (polylactic acid-based resign). The resin had a weight average molecular weight, as measured, of 160000. The polylactic acid-based resin had an average content of amide bond, as determined with $^{13}$C-NMR measurement, of 8 units per 1 molecule of the polylactic acid-based resin. The melting peak was one kind in each of the 1st and 2nd temperature increases. The crystallinity, Tm and retention rate of molecular weight of the resin were measured. The results are shown in Table 2.

Examples 1-5

To a 100 ml round bottom flask, 7.5 g of the PLLA(4) synthesized in Production example 1-4, 7.5 g of the PDLA (4) synthesized in Production process 1-10 and 12 mg (0.02 mmol) of magnesium stearate were introduced. After the flask inside was purged with nitrogen, 15 g of tetralin was introduced into the flask and temperature was increased to 210°C at ordinary pressure in a nitrogen atmosphere. Next, to the flask, 0.982 g of hexamethylene diisocyanate (5.84 mmol, 1.05 equivalent to the number of the terminal functional groups) was added and reacted at 200°C for 1 hr. After 75 mg of PEP-36 and 75 mg of IRGANOX 1010 were added, 100 g of tetralin was added and the solution was cooled. The precipitate was filtered off and dried to prepare 15 g of a white powdery resin (polylactic acid-based resin). The resin had a weight average molecular weight, as measured, of 140000. The polylactic acid-based resin had an average content of amide bond, as determined with $^{13}$C-NMR measurement, of 26 units per 1 molecule of the polylactic acid-based resin. The melting peak was one kind in each of the 1st and 2nd temperature increases. The crystallinity, Tm and retention rate of molecular weight of the resin were measured. The results are shown in Table 2.

Example 1-6

The procedure of Example 1-1 was repeated except for changing tetralin to orthodichlorobenzene, to prepare a white powdery resin (polylactic acid-based resin). The resin had a weight average molecular weight, as measured, of 200000. The polylactic acid-based resin has an average content of amide bond, as determined with $^{13}$C-NMR measurement, of 18 units per 1 molecule of the polylactic acid-based resin. The melting peak was one kind in each of the 1st and 2nd temperature increases. The crystallinity, Tm and retention rate of molecular weight of the resin were measured. The results are shown in Table 2.

Example 1-7

The procedure of Example 1-2 was repeated except for changing tetralin to orthodichlorobenzene, to prepare a white powdery resin (polylactic acid-based resin). The resin had a weight average molecular weight, as measured, of 240000. The polylactic acid-based resin has an average content of amide bond, as determined with $^{13}$C-NMR measurement, of 22 units per 1 molecule of the polylactic acid-based resin. The melting peak was one kind in each of the 1st and 2nd temperature increases. The crystallinity, Tm and retention of retention rate of molecular weight of the resin were measured. The results are shown in Table 2.

Example 1-8

The procedure of Example 1-1 was repeated except for changing tetralin to diisopropylbenzene, to prepare a white powdery resin (polylactic acid-based resin). The resin had a weight average molecular weight, as measured, of 130000. The polylactic acid-based resin has an average content of amide bond, as determined with $^{13}$C-NMR measurement, of 11 units per 1 molecule of the polylactic acid-based resin. The melting peak was one kind in each of the 1st and 2nd temperature increases. The crystallinity, Tm and retention rate of molecular weight of the resin were measured. The results are shown in Table 2.

Example 1-9

The procedure of Example 1-1 was repeated except for changing 0.486 g of hexamethylene diisocyanate (2.89 mmol, 1.05 equivalent to the number of the terminal functional groups) to 0.561 g of 1,3-(bisisocyanatomethyl)cyclohexane (2.89 mmol, 1.05 equivalent to the number of the terminal functional groups), to prepare 15 g of a white powdery resin (polylactic acid-based resin). The resin had a weight average molecular weight, as measured, of 140000. The melting peak was one kind in each of the 1st and 2nd temperature increases. The crystallinity, Tm and retention rate of molecular weight of the resin were measured. The results are shown in Table 2.

Example 1-10

The procedure of Example 1-1 was repeated except for changing 0.486 g of hexamethylene diisocyanate (2.89 mmol, 1.05 equivalent to the number of the terminal functional groups) to 0.544 g of xylylene diisocyanate (2.89 mmol, 1.05 equivalent to the number of the terminal functional groups), to prepare 15 g of a white powdery resin. The resin had a weight average molecular weight, as measured, of 180000. The melting peak was one kind in each of the 1st and 2nd temperature increases. The crystallinity, Tm and retention rate of molecular weight of the resin were measured. The results are shown in Table 2.

Example 1-11

The procedure of Example 1-1 was repeated except for changing PLLA(1) to PLLA(7) and changing PDLA(1) to PDLA(7), to prepare a white powdery resin (polylactic acid-based resin). The resin had a weight average molecular weight, as measured, of 130000. The content of amide bond in the polylactic acid-based resin was confirmed by $^{13}$C-NMR measurement. The melting peak was one kind in each of the 1st and 2nd temperature increases. The crystallinity, Tm and retention rate of molecular weight of the resin were measured. The results are shown in Table 2.

Example 1-12

To a 100 ml round bottom flask, 5.0 g of the PLLA(8) synthesized in Production example 1-15, 5.0 g of the PDLA (8) synthesized in Production example 1-16, 8 mg (0.013 mmol) of magnesium stearate, 50 mg of PEP-36 and 50 mg of IRGANOX 1010 were introduced. After the flask inside was purged with nitrogen, 40 g of orthodichlorobenzene was introduced into the flask and temperature was increased to 180°C at ordinary pressure in a nitrogen atmosphere. Next, to the flask, 0.103 g of hexamethylene diisocyanate (0.61 mmol, 1.01 equivalent to the number of the terminal functional groups) was added and reacted at 180°C for 1.5 hr. After 20 g of orthodichlorobenzene and 40 g of xylene were added in this order, and the solution was cooled. The precipitate was filtered off and dried to prepare 10 g of a white powdery resin (polylactic acid-based resin). The resin had a weight average molecular weight, as measured, of 280000. The content of amide bond in the polylactic acid-based resin was confirmed by $^{13}$C NMR measurement. The melting peak was one kind in each of the 1st and 2nd temperature increases. The crystallinity, Tm and retention rate of molecular weight of the resin were measured. The results are shown in Table 2.

Comparative Example 1-1

The procedure of Example 1-1 was repeated except for changing PLLA(1) to PLLA(5) and changing PDLA(1) to PDLA(5), to prepare a white powdery resin. The resin had a weight average molecular weight, as measured, of 90000. The resin had an average content of amide bond, as determined with $^{13}$C-NMR measurement, of 7 units per 1 molecule of the resin. The melting peak was one kind in each of the 1st and 2nd temperature increases. The crystallinity, Tm and retention rate of molecular weight of the resin were measured. The results are shown in Table 2.

Comparative Example 2

To a 100 ml round bottom flask, 7.5 g of the PDLA(6) synthesized in Production example 6, 7.5 g of the PDLA (6) synthesized in Production example 1-12 and 12 mg (0.02 mmol) of magnesium stearate were introduced. After the flask inside was purged with nitrogen, 15 g of tetralin was introduced into the flask and temperature was increased to 210°C at ordinary pressure in a nitrogen atmosphere. Next, to the flask, 0.269 g of hexamethylene diisocyanate (1.60 mmol, 1.05 equivalent to the number of the terminal functional groups) was added and reacted at 160°C for 1 hr. After 75 mg of PEP-36 and 75 mg of IRGANOX 1010 were added, 100 g of tetralin was added and the solution was cooled. The precipitate was filtered off and dried to prepare 15 g of a white powdery resin. The resin had a weight average molecular weight, as measured, of 110000. The resin had an average content of amide bond, as determined with $^{13}C$-NMR measurement, of 0 unit per 1 molecule of the resin. The melting peak was one kind in each of the 1st and 2nd temperature increases. The crystallinity, Tm and retention rate of molecular weight of the resin were measured. The results are shown in Table 2.

Preferential Example 1-1

To a 1000 ml round-bottom flask equipped with a Dean stark trap, 500 g (5.0 mol) of 90% L-lactic acid (lactic acid containing 99.5 % by mol of L-form) manufactured by Purac Inc. and 1.18 g (0.005 mol) of tin(II) chloride di-hydrate (manufactured by Wako Pure Chemical Industries) as a reagent were introduced. The inside of the flask was purged with nitrogen and the flask was heated to 130°C at ordinary pressure in a nitrogen atmosphere by an oil bath heated at 150°C. The pressure of the flask inside was decreased gradually and the flask was maintained at 50 mmHg for 2 hr. Next, the flask was released to ordinary pressure, and 40 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 20 hr to prepare a transparent poly(L-lactic acid). The poly(L-lactic acid) had a weight average molecular weight (Mw), as measured by the above measuring method, of 20000. The carboxyl acid value, as determined by the above measuring method, was $1.820 \times 10^{-4}$ (mol/g).

Furthermore, to the flask, 6.55 g (0.065 mol) of anhydrous succinic acid was added and the mixture was stirred at an oil bath temperature of 150°C for 2 hr to convert a terminal hydroxyl group of the poly(L-lactic acid) into carboxyl group. The flask was released to ordinary pressure, and the reaction mixture was diluted by adding 300 g of xylene and then the resulting solution was taken out and xylene was removed by air-dried in a nitrogen stream. The solid obtained after the air-drying was washed twice with 1.0 L of 2-propanol having a 35 % hydrochloric acid content of 1 % and filtered off. Thereafter, the solid filtered off was washed with methanol several times and dried under reduced pressure at 50°C to prepare 300 g of a poly (L-lactic acid). The poly(L-lactic acid) had a weight average molecular weight (Mw), as measured by the above measuring method, of 20000. The proportion of terminal carboxylic acid group in the poly (L-lactic acid), as determined by the above measuring method, was 98%. The carboxyl acid value of the poly(L-lactic acid), as determined by the above measuring method, was $3.920 \times 10^{-4}$ (mol/g). The number average molecular weight Mn determined from the carboxyl acid value and the proportion of terminal carboxylic acid group was 5000. The Sn content in the poly (L-lactic acid) was not more than 5 ppm.

Moreover, to a 100 ml round bottom flask, 15.0 g of the poly(L-lactic acid) and 12 mg (0.02 mmol) of magnesium stearate were introduced. After the inside of the flask was purged with nitrogen, 15 g of xylene was introduced and the temperature was increased to 160°C at ordinary pressure in a nitrogen atmosphere. Next, to the flask, 0.486 g of hexamethylene diisocyanate (2.89 mmol, 1.05 equivalent of isocyanate group to the number of the terminal functional groups) was added and reacted at 140°C for 1 hr. After 75 mg of PEP-36 and 75 mg of IRGANOX 1010 were added, 100 g of xylene was added and the solution was cooled. The precipitate was filtered off and dried to prepare 15 g of a white powdery resin. The resin had a weight average molecular weight, as measured, of 230000. The resin had an average content of amide bond, as determined with $^{13}C$-NMR measurement, of 21 units per 1 molecule of the resin. The crystallinity, Tm and retention rate of molecular weight of the resin were measured. The results are shown in Table 2.

Table 2

| | Oligomer used | | Mw after reaction | 1st | 2nd | | retention rate of molecular weight | |
|---|---|---|---|---|---|---|---|---|
| | Name of Sample | Proportion wt% | | Tm °C | Tm °C | Crystallinity % | 190°C | 240°C |
| Ex. 1-1 | PLAZA(1) | 50 | 150000 | 207 | 205 | 28 | 98% | 95% |
| | PDLA(1) | 50 | | | | | | |

(continued)

| | Oligomer used | | Mw after reaction | 1st | 2nd | | retention rate of molecular weight | |
|---|---|---|---|---|---|---|---|---|
| | Name of Sample | Proportion wt% | | Tm °C | Tm °C | Crystallinity % | 190°C | 240°C |
| Ex. 1-2 | PLEA(2) | 50 | 210000 | 206 | 203 | 30 | 98% | 96% |
| | PLLA(2) | 50 | | | | | | |
| Ex. 1-3 | PLLA(1) | 70 | 180000 | 207 | 205 | 25 | 99% | 97% |
| | PDLA(1) | 30 | | | | | | |
| Ex. 1-4 | PLLA(3) | 50 | 160000 | 212 | 208 | 25 | 98% | 97% |
| | PDLA(3) | 50 | | | | | | |
| Ex. 1-5 | PDLA(4) | 50 | 140000 | 200 | 195 | 22 | 96% | 92% |
| | PDLA(4) | 50 | | | | | | |
| Ex. 1-6 | PLLA(1) | 50 | 200000 | 207 | 204 | 27 | 96% | 94% |
| | PLLA(1) | 50 | | | | | | |
| Ex. 1-7 | PLLA(2) | 50 | 240000 | 206 | 203 | 30 | 98% | 97% |
| | PDLA(2) | 50 | | | | | | |
| Ex. 1-8 | PLLA(1) | 50 | 130000 | 207 | 204 | 25 | 97% | 96% |
| | PDLA(1) | 50 | | | | | | |
| Ex. 2-9 | PLLA(1) | 50 | 140000 | 208 | 203 | 19 | 97% | 95% |
| | PDLA(1) | 50 | | | | | | |
| Ex. 1-10 | PLLA(1) | 50 | 180000 | 207 | 202 | 32 | 96% | 94% |
| | PDLA(1) | 50 | | | | | | |
| Ex. 1-11 | PDLA(7) | 50 | 130000 | 207 | 202 | 26 | 90% | 82% |
| | PLLA(7) | 50 | | | | | | |
| Ex. 1-12 | PLLA(8) | 50 | 280000 | 206 | 204 | 24 | 100% | 98% |
| | PLLA(8) | 50 | | | | | | |
| Compa. Ex. 1-1 | PLLA(5) | 50 | 90000 | 201 | 206 | 25 | 60% | 38% |
| | PLLA(5) | 50 | | | | | | |
| Compa. Ex. 1-1 | PLLA(6) | 50 | 110000 | 200 | 205 | 25 | 50% | 30% |
| | PLLA(6) | 50 | | | | | | |
| Ref. Ex. 1-1 | PLLA | 100 | 230000 | 168 | 168 | 32 | 98% | 95% |

As described in the Table 2, the polylactic acid-based resin (I) of the invention [1] has a high molecular weight and a high melting point, and low decrease in molecular weight even at a high temperature. Therefore, the polylactic acid-based resin (I) is suitable for uses, which require mechanical properties and heat resistance, such as films, sheets, molded articles and fibers.

Example 2

The invention [2] will be described in more detail with reference to Example 2, but it should be not limited by the following examples.

The production of the polylactic acid resin unit was carried out according to the processes as shown in the following production examples. Respective values in Examples 2 are determined by the following methods.

Weight average molecular weight (Mw)

The weight average molecular weight was determined with respect to the polystyrene standard sample by gel permeation chromatography (GPC, manufactured by Waters, a detector RI: 2414 manufactured by Waters, a column: LF-G, LF-804 manufactured by Shodex), at a column temperature of 40°C, at a flow rate of 1 mL/min with a chloroform solvent.

Melting point (Tm)

The melting point was determined from the DSC (DSC apparatus RDC 220 manufactured by SII) . 5 to 6 mg of a sample was weighed and put in a nitrogen-sealed pan, and introduced into a nitrogen-sealed DSC measuring part previously set at 25°C. The temperature was increased to 250°C at a temperature increasing rate of 10°C/min.

Carboxyl acid value

To 0.5 g of a polymer for measurement, 20 mL of a 7/3 mixed solvent of chloroform and methanol was added and the polymer was completely dissolved. Two drops of a brome thymol blue and phenol red mixed ethanol solution as an indicator was added to the polymer solution. The resulting mixture indicated yellow. Titration of the mixture was carried out by a 0.1 N potassium hydroxide ethanolic solution. The point at which the color thereof was changed from yellow to pale violet was taken as the end point. The carboxyl acid value of the polymer was thus determined.

Proportion of terminal carboxylic acid group and Number of terminal functional group

A polylactic acid resin specimen prepared by allowing a polylactic acid resin to react with anhydrous succinic acid was subjected to $^1$H-NMR measurement (device: ECA 500 manufactured by Nihon electron, internal standard tetramethyl silane: $\delta$= 0 ppm). The following two spectrums were observed.
5= 2.61 to 2.72 ppm (multiplet):

derived from hydrogen of methylene chain of the succinic acid unit reacted with the polylactic acid resin end and the succinic acid in the polylactic acid (4H)

$\delta$= 4.36 ppm J = 6.92 (quartet):

derived from methine hydrogen present at a $\alpha$ position of the terminal hydroxyl group of the polylactic acid resin (1H)

By using the two integral values, the proportion of terminal carboxylic acid group was determined from the number of terminal carboxylic acid group [= the number of carboxyl group in polylactic acid resin (= the number of unreacted terminal hydroxyl group in polylactic acid resin) + the number of succinilated terminal carboxyl group}, and the number of terminal hydroxyl group (the number of unreacted terminal hydroxyl group in polylactic acid resin). Furthermore, the number of terminal functional group was determined from the carboxyl acid value and the proportion of terminal carboxylic acid group.

The proportion of terminal carboxylic acid group (%)

= the number of terminal carboxylic acid group / (the number of terminal carboxylic acid group + the number of terminal hydroxyl group) x 100

The number of terminal functional group (mol/g)

= the carboxyl acid value / (proportion of terminal carboxylic acid group / 100)

Identification of amide bond of polylactic acid-based resin

The polylactic acid-based resin prepared by allowing a polylactic acid resin to react with hexamethylene diisocyanate was subjected to $^{13}$C-NMR measurement (device: ECA 500 manufactured by Nihon electron, internal standard chloroform d: $\delta$= 77 ppm). From the following spectrum, it was determined that the amide bond in the polylactic acid-based resin is present or not.
$\delta$= 39 ppm:

derived from carbon present at an $\alpha$ position in hexamethylene unit adjacent to an amide bond

Method of measuring proportion of melting peak having a temperature of not lower than 195°C

Measurement was carried out using DSC in a nitrogen atmosphere at a temperature increasing rate of 10°C/min. The proportion (%) of a melting peak having a temperature of not lower than 195°C was determined from the area of a melting peak having a high temperature of not lower than 195°C and the area of a melting peak having a low temperature of 140 to 180°C by the following formula.

R not lower than 195 (%)

= A not lower than 195 / (A not lower than 195 + A140-180) x 100

R not lower than 195: the proportion of a melting peak having a temperature of not lower than 195°C.
A not lower than 195: the area of a melting peak having a temperature of not lower than 195°C.
A140-180: the area of a melting peak having a temperature of 140 to 180°C.

Method of measuring tensile strength and tensile plastic modulus

The tensile strength and tensile elastic modulus were measured in accordance with JIS-K7161.

Method of measuring resistance to hydrolysis

The measurement of molecular weight are performed using gel permeation chromatography on the sheet prepared in the following example (molecular weight before the treatment) and the sheet obtained by treating the sheet prepared in the following example in a thermo-hygrostat for 100 hr in the condition that the relative humidity is 95% at 65°C (molecular weight after the treatment). Then, the retention rate of molecular weight (resistance to hydrolysis) was evaluated by the following formula.

The retention rate of molecular weight (%) = the molecular weight after the treatment / the molecular weight before the treatment x 100

Production example 2-1: Production of lactic acid oligomer (a-1)

To a round-bottom flask equipped with a Dean stark trap, 500 g of 90% L-lactic acid (lactic acid containing 99.5 % by mol of L-form) manufactured by Purac Inc. and 1.18 g of tin(II) chloride di-hydrate (manufactured by Wako Pure Chemical Industries) as a reagent were introduced. The inside of the flask was purged with nitrogen and the flask was

heated to 130°C at ordinary pressure in a nitrogen atmosphere by an oil bath heated at 150°C. The pressure of the flask inside was decreased gradually and the flask was maintained at 50 mmHg for 2 hr. Next, the flask was released to ordinary pressure and thereafter, 40 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 20 hr to prepare a transparent L-lactic acid oligomer. The L-lactic acid oligomer had a weight average molecular weight (Mw), as measured, of 20000 and a carboxyl acid value, as measured, of 1.818 x $10^{-4}$ (mol/g).

Furthermore, to the flask, 6. 55 g of anhydrous succinic acid was added and the mixture was stirred at an oil bath temperature of 150°C for 2 hr. Thereafter, the flask was released to ordinary pressure, and the reaction mixture was diluted by adding 300 g of xylene and then the resulting solution was taken out and xylene was removed by drying in a nitrogen stream. The solid obtained after the air-drying was washed twice with 2-propanol having a 35 % hydrochloric acid content of 1 % and filtered off. Thereafter, the solid filtered off was washed with methanol several times and dried under reduced pressure at 50°C to prepare 340 g of a white lactic acid oligomer (a-1). As the results of the measurements, the lactic acid oligomer (a-1) had a weight average molecular weight (Mw) of 20000, a proportion of terminal carboxylic acid group of 95%, a carboxyl acid value of 3.652 x $10^{-4}$ (mol/g) and a melting point (Tm) of 161°C. The number average molecular weight Mn determined from the amount of residual carboxyl group and the proportion of terminal carboxylic acid was 5200.

Production Example 2-2: Production of lactic acid oligomer (a-2)

The procedure of Production example 2-1 was repeated except for changing the 90% Lactic acid to 90% D-lactic acid (obtainable by hydrolysis of D-lactide, lactic acid containing not less than 99.5 % by mole of D-form manufactured by Purac Inc.), to prepare a lactic acid oligomer (a-2). As the results of the measurements, the lactic acid oligomer (a-2) had a weight average molecular weight (Mw) of 20000, a proportion of terminal carboxylic acid group of 95%, a carboxyl acid value of 3.668 x $10^{-4}$ (mol/g) and a melting point (Tm) of 160°C. The number average molecular weight Mn determined from the carboxyl acid value and the proportion of terminal carboxylic acid group was 5180.

Production example 2-3: Production of polylactic acid resin (B-a-1)

To a round-bottom flask, 150 g of the lactic acid oligomer (a-1) synthesized in Production example 2-1 and 0. 12 g of magnesium stearate were introduced. After the inside of the flask was purged with nitrogen, 150 g of tetralin was introduced and the flask was heated to 210°C at ordinary pressure in a nitrogen atmosphere. Next, 4.86 g of hexamethylene diisocyanate (1.05 equivalent of isocyanate group to the number of terminal functional group) was added to the flask and reacted at 200°C for 1 hr. After adding 0.750 g of PEP-36 (manufactured by ADEKA Inc.) and 0.750 g of IRGANOX 1010 (manufactured by Ciba Specialty Chemical Inc.), 100 g of tetralin was added and the solution was cooled. The precipitate was filtered off and dried to prepare 150 g of a white powdery polylactic acid resin (B-a-1). As the results of the measurements, the resin had a weight average molecular weight of 150000. It was confirmed that the polylactic acid resin had an amide bond through $^{13}C$-NMR measurement.

Production example 2-4: Production of polylactic acid resin (B-a-2)

The procedure of Production example 2-3 was repeated except for changing 150 g of the lactic acid oligomer (a-1) synthesized Production example 2-1 to 150 g of the lactic acid oligomer (a-2) synthesized Production example 2-2, to prepare a polylactic acid resin (B-a-2). As the results of the measurements, the resin had a weight average molecular weight (Mw) of 140000. It was confirmed that the polylactic acid resin had an amide bond through $^{13}C$-NMR measurement.

Production example 2-5: Production of poly(L-lactic acid) (A-1)

To a polymerization vessel, 48.75 g of L-lactide (manufactured by Purac Inc.) and 1.25 g of D-lactide (manufactured by Purac Inc.) were added and the inside of the system was purged with nitrogen. Thereafter, 0.03 g of stearyl alcohol and 25 x $10^{-3}$ g of tin octylate as a catalyst were added and polymerization was performed at 190°C for 2 hr to prepare a polymer. This polymer was washed with 2-propanol having a 35 % hydrochloric acid content of 1 % to remove the catalyst, and thereby a poly(L-lactic acid) (A-1) was prepared. The resulting poly(L-lactic acid) had a weight average molecular weight of 160000 and a melting point (Tm) of 159°C.

Production example 2-6: Production of poly(D-lactic acid) (A-2)

To a polymerization vessel, 1.25 g of L-lactide (manufactured by Purac Inc.) and 48.75 g of D-lactide (manufactured by Purac Inc.) were added and the inside of the system was purged with nitrogen. Thereafter, 0.03 g of stearyl alcohol and 25 x $10^{-3}$ g of tin 2-ethyl hexanoate as a catalyst were added and polymerization was performed at 190 °C for 2 hr to prepare a polymer. This polymer was washed with 2-propanol having a 35 % hydrochloric acid content of 1 % to remove the catalyst, and thereby a poly(D-lactic acid) (A-2) was prepared. The resulting poly(D-lactic acid) had a weight average molecular weight of 180000 and a melting point (Tm) of 156°C.

Production example 2-7: Production of lactic acid oligomer (a-1')

To a round-bottom flask equipped with a Dean stark trap, 500 g of 90% L-lactic acid (lactic acid containing 99.5% by mol of L-form) manufactured by Purac Inc. and 1.18 g of tin(II) chloride di-hydrate (manufactured by Wako Pure Chemical Industries) as a reagent were introduced. The inside of the flask was purged with nitrogen and the flask was heated to 130°C at ordinary pressure in a nitrogen atmosphere by an oil bath heated at 150°C. The pressure of the flask inside was decreased gradually and the flask was maintained at 50 mmHg for 2 hr. Next, the flask was released to ordinary pressure and thereafter, 40 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 30 hr to prepare a transparent L-lactic acid oligomer. The L-lactic acid oligomer had a weight average molecular weight (Mw), as measured, of 30000 and a carboxyl acid value, as measured, of 1.218 x $10^{-4}$ (mol/g).

Furthermore, to the flask, 3.35 g of anhydrous succinic acid was added and the mixture was stirred at an oil bath temperature of 150°C for 2 hr. Thereafter, the flask was released to ordinary pressure, and the reaction mixture was diluted by adding 300 g of xylene and then the resulting solution was taken out and xylene was removed by drying in a nitrogen stream. The solid obtained after the air-drying was washed twice with 2-propanol having a 35 % hydrochloric acid content of 1 % and filtered off. Thereafter, the solid filtered off was washed with methanol several times and dried under reduced pressure at 50°C to prepare 340 g of a white lactic acid oligomer (a-1'). As the results of the measurements, the lactic acid oligomer (a-1') had a weight average molecular weight (Mw) of 30000, a proportion of terminal carboxylic acid group of 95%, a carboxyl acid value of 2.432 x $10^{-4}$ (mol/g) and a melting point (Tm) of 164°C. The number average molecular weight Mn determined from the carboxyl acid value and the proportion of terminal carboxylic acid group was 7800.

Production Example 2-8 : Production of lactic acid oligomer (a-2')

The procedure of Production example 2-7 was repeated except for changing the 90% L-lactic acid to 90% D-lactic acid (obtainable by hydrolysis of D-lactide, lactic acid containing not less than 99.5 % by mole of D-form manufactured by Purac Inc.), to prepare a lactic acid oligomer (a-2'). As the results of the measurements, the lactic acid oligomer (a-2') had a weight average molecular weight (Mw) of 30000, a proportion of terminal carboxylic acid group of 95%, a carboxyl acid value of 2.428 x $10^{-4}$ (mol/g) and a melting point (Tm) of 162°C. The number average molecular weight Mn determined from the carboxyl acid value and the proportion of terminal carboxylic acid group was 7820.

Production example 2-9: Production of polylactic acid resin (B-a-1')

To a round-bottom flask, 150 g of the lactic acid oligomer (a-1') synthesized in Production example 2-7 and 0.12 g of magnesium stearate were introduced. After the inside of the flask was purged with nitrogen, 150 g of tetralin was introduced and the flask was heated to 210°C at ordinary pressure in a nitrogen atmosphere. Next, 3.24 g of hexamethylene diisocyanate (1.05 equivalent of isocyanate group to the number of terminal functional group) was added to the flask and reacted at 200°C for 1 hr. After adding 0.750 g of PEP-36 (manufactured by ADEKA Inc.) and 0.75 g of IRGANOX 1010 (manufactured by Ciba Specialty Chemical Inc.), 100 g of tetralin was added and the solution was cooled. The precipitate was filtered off and dried to prepare 150 g of a white powdery polylactic acid resin (B-a-1').
As the results of the measurements, the resin had a weight average molecular weight (Mw) of 140000. It was confirmed that the polylactic acid resin had an amide bond through $^{13}$C-NMR measurement.

Production example 2-10: Production of polylactic acid resin (B-a-2')

The procedure of Production example 2-9 was repeated except for changing 150 g of the lactic acid oligomer (a-1') synthesized Production example 2-7 to 150 g of the lactic acid oligomer (a-2') synthesized Production example 2-8, to prepare a polylactic acid resin (B-a-2'). As the results of the measurements, the polylactic acid resin (B-a-2') had a weight average molecular weight (Mw) of 130000. It was confirmed that the polylactic acid resin had an amide bond through $^{13}$C-NMR measurement.

Example 2-1: Production of polylactic acid resin composition 1

100 parts by weight of the polylactic acid resin (B-a-1) prepared in production example 2-3 and 100 parts by weight of the polylactic acid resin (B-a-2) prepared in production example 2-4 were fed to a 30 mmø diameter vented twin extruder [TEX30XSST manufactured by Japan Steel Works Ltd.] and melt extruded at a cylinder temperature of 230°C, at a screw rotation number of 150 rpm, at an output amount of 10 Kg/h and at a vent reduced pressure of 3 kPa and thereby pelletized, to prepare a polylactic acid resin composition 1. The polylactic acid resin composition 1 was dried at 90°C for 5 hr. The polylactic acid resin composition 1 was pre-heated at 230°C for 5 min. Thereafter, the composition was hot pressed at 10 MPa for 5 min and quickly cooled to prepare a sheet having a thickness of 0.2 mm. The properties of the sheet were measured. The measurement results are shown in Table 3.
The melting point was 202°C.

Example 2-2: Production of polylactic acid resin composition 2

100 parts by weight of the poly(L-lactic acid) prepared in production example 2-5 and 100 parts by weight of the polylactic acid resin (B-a-2) prepared in production example 2-4 were fed to a 30 mmø diameter vented twin extruder [TEX30XSST manufactured by Japan Steel Works Ltd.] and melt extruded at a cylinder temperature of 230°C, at a screw rotation number of 150 rpm, at an output amount of 10 Kg/h and at a vent reduced pressure of 3 kPa and thereby pelletized, to prepare a polylactic acid resin composition 2. The polylactic acid resin composition 2 was dried at 90°C for 5 hr. The polylactic acid resin composition 2 was pre-heated at 230°C for 5 min. Thereafter, the composition was hot pressed at 10 MPa for 5 min and quickly cooled to prepare a sheet having a thickness of 0.2 mm. The properties of the sheet were measured. The measurement results are shown in Table 3.
The melting point was 204°C.

Example 2-3: Production of polylactic acid resin composition 3

100 parts by weight of the polylactic acid resin (B-a-1) prepared in production example 2-3 and 100 parts by weight of the poly(D-lactic acid) prepared in production example 2-6 were fed to a 30 mmø diameter vented twin extruder [TEX30XSST manufactured by Japan Steel Works Ltd.] and melt extruded at a cylinder temperature of 230°C, at a screw rotation number of 150 rpm, at an output amount of 10 Kg/h and at a vent reduced pressure of 3 kPa and thereby pelletized, to prepare a polylactic acid resin composition 3. The polylactic acid resin composition 3 was dried at 90°C for 5 hr. The polylactic acid resin composition 3 was pre-heated at 230°C for 5 min. Thereafter, the composition was hot pressed at 10 MPa for 5 min and quickly cooled to prepare a sheet having a thickness of 0.2 mm. The properties of the sheet were measured. The measurement results are shown in Table 3.
The melting point was 204°C.

Example 2-4: Production of polylactic acid resin composition 4

140 parts by weight of the polylactic acid resin (B-a-1) prepared in production example 2-3 and 60 parts by weight of the polylactic acid resin (B-a-2) prepared in production example 2-4 were fed to a 30 mmø diameter vented twin extruder [TEX30XSST manufactured by Japan Steel Works Ltd.] and melt extruded at a cylinder temperature of 230°C, at a screw rotation number of 150 rpm, at an output amount of 10 Kg/h and at a vent reduced pressure of 3 kPa and thereby pelletized, to prepare a polylactic acid resin composition 4. The polylactic acid resin composition 4 was dried at 90°C for 5 hr. The polylactic acid resin composition 4 was pre-heated at 230°C for 5 min. Thereafter, the composition was hot pressed at 10 MPa for 5 min and quickly cooled to prepare a sheet having a thickness of 0.2 mm. The properties of the sheet were measured. The measurement results are shown in Table 3.
The melting point was 204°C.

Example 2-5: Production of polylactic acid resin composition 5

60 parts by weight of the polylactic acid resin (B-a-1) prepared in production example 2-3 and 140 parts by weight of the polylactic acid resin (B-a-2) prepared in production example 2-4 were fed to a 30 mmø diameter vented twin extruder [TEX30XSST manufactured by Japan Steel Works Ltd.] and melt extruded at a cylinder temperature of 230°C, at a screw rotation number of 150 rpm, at an output amount of 10 Kg/h and at a vent reduced pressure of 3 kPa and thereby pelletized, to prepare a polylactic acid resin composition 5. The polylactic acid resin composition 5 was dried at 90°C for 5 hr. The polylactic acid resin composition 5 was pre-heated at 230°C for 5 min. Thereafter, the composition was hot pressed with heat at 10 MPa for 5 min and quickly cooled to prepare a sheet having a thickness of 0.2 mm. The properties of the sheet were measured. The measurement results are shown in Table 3.

The melting point was 204°C.

Example 2-6: Production of polylactic acid resin composition 6

100 parts by weight of the polylactic acid resin (B-a-1) prepared in production example 2-3 and 100 parts by weight of the polylactic acid resin (B-a-2') prepared in production example 2-10 were fed to a 30 mmø diameter vented twin extruder [TEX30XSST manufactured by Japan Steel Works Ltd.] and melt extruded at a cylinder temperature of 230°C, at a screw rotation number of 150 rpm, at an output amount of 10 Kg/h and at a vent reduced pressure of 3 kPa and thereby pelletized, to prepare a polylactic acid resin composition 6. The polylactic acid resin composition 6 was dried at 90°C for 5 hr. The polylactic acid resin composition 6 was pre-heated at 230°C for 5 min. Thereafter, the composition was hot pressed at 10 MPa for 5 min and quickly cooled to prepare a sheet having a thickness of 0.2 mm. The properties of the sheet were measured. The measurement results are shown in Table 3.
The melting point was 205°C.

Example 2-7: Production of polylactic acid resin composition 7

100 parts by weight of the polylactic acid resin (B-a-1') prepared in production example 2-9 and 100 parts by weight of the polylactic acid resin (B-a-2) prepared in production example 2-4 were fed to a 30 mmø diameter vented twin extruder [TEX30XSST manufactured by Japan Steel Works Ltd.] and melt extruded at a cylinder temperature of 230°C, at a screw rotation number of 150 rpm, at an output amount of 10 Kg/h and at a vent reduced pressure of 3 kPa and thereby pelletized, to prepare a polylactic acid resin composition 7. The polylactic acid resin composition 7 was dried at 90°C for 5 hr. The polylactic acid resin composition 7 was pre-heated at 230°C for 5 min. Thereafter, the composition was hot pressed at 10 MPa for 5 min and quickly cooled to prepare a sheet having a thickness of 0.2 mm. The properties of the sheet were measured. The measurement results are shown in Table 3.
The melting point was 205°C.

Example 2-8: Production of polylactic acid resin composition 8

100 parts by weight of the polylactic acid resin (B-a-1') prepared in production example 2-9 and 100 parts by weight of the polylactic acid resin (B-a-2') prepared in production example 2-10 were fed to a 30 mmø diameter vented twin extruder [TEX30XSST manufactured by Japan Steel Works Ltd.] and melt extruded at a cylinder temperature of 230°C, at a screw rotation number of 150 rpm, at an output amount of 10 Kg/h and at a vent reduced pressure of 3 kPa and thereby pelletized, to prepare a polylactic acid resin composition 8. The polylactic acid resin composition 8 was dried at 90°C for 5 hr. The polylactic acid resin composition 8 was pre-heated at 230°C for 5 min. Thereafter, the composition was hot pressed at 10 MPa for 5 min and quickly cooled to prepare a sheet having a thickness of 0.2 mm. The properties of the sheet were measured. The measurement results are shown in Table 3.
The melting point was 207°C.

Comparative Example 2-1: Production of polylactic acid resin composition 9

100 parts by weight of the poly(L-lactic acid) prepared in production example 2-5 and 100 parts by weight of the poly (D-lactic acid) prepared in production 2-6 were fed to a 30 mmø diameter vented twin extruder [TEX30XSST manufactured by Japan Steel Works Ltd.] and melt extruded at a cylinder temperature of 230°C, at a screw rotation number of 150 rpm, at an output amount of 10 Kg/h and at a vent reduced pressure of 3 kPa and thereby pelletized, to prepare a polylactic acid resin composition 9. The polylactic acid resin composition 9 was dried at 90°C for 5 hr. The polylactic acid resin composition 9 was pre-heated at 230°C for 5 min. Thereafter, the composition was pressed with heat at 10 MPa for 5 min and quickly cooled to prepare a sheet having a thickness of 0.2 mm. The properties of the sheet were measured. The results are shown in Table 3.

Comparative Example 2-2

The evaluation using the poly(L-lactic acid) prepared in Production example 2-5 was carried out. The results are shown in Table 3.

Table 3-1

| | | Ex. 2-1 | Ex. 2-2 | Ex. 2-3 | Ex. 2-4 | Ex. 2-5 |
|---|---|---|---|---|---|---|
| Polylactic acid resin composttion (C) | Polylactic acid resin Composition 1 | 100 | | | | |
| | Polylactic acid resin Composition 2 | | 100 | | | |
| | Polylactic acid resin composition 3 | | | 100 | | |
| | Polylactic acid resin composition 4 | | | | 100 | |
| | Polylactic acid resin composition 5 | | | | | 100 |
| | Polylactic acid resin composition 6 | | | | | |
| | Polylactic acid resin composition 7 | | | | | |
| | Polylactic acid resin composition 8 | | | | | |
| | Polylactic acid resin composition 9 | | | | | |
| | Poly (L-lactic acid) | | | | | |
| | Composition pellets R 195 or more (%) | 95 | 95 | 95 | 95 | 95 |
| Properties of Press molded article | Molded article R 195 or more (%) | 95 | 96 | 96 | 95 | 95 |
| | Tensile strength (MPa) | 72 | 72 | 72 | 72 | 72 |
| | Tensile elasticity (MPa) | 2900 | 2700 | 2700 | 2800 | 2700 |
| | Hydrolysis properties (retention rate of molecular weight) (%) | 87 | 93 | 90 | 92 | 93 |

Table 3-2

| | | Ex. 2-6 | Ex. 2-7 | Ex. 2-8 | Compar. Ex. 2-1 | Compar. Ex. 2-2 |
|---|---|---|---|---|---|---|
| Polylactic acid resin composition (C) | Polylactic acid resin composition 1 | | | | | |
| | Polylactic acid resin composition 2 | | | | | |
| | Polylactic acid resin composition 3 | | | | | |
| | Polylactic acid resin composition 4 | | | | | |
| | Polylactic acid resin composition 5 | | | | | |
| | Polylactic acid resin composition 6 | 100 | | | | |
| | Polylactic acid resin composition 7 | | 100 | | | |
| | Polylactic acid resin composition 8 | | | 100 | | |
| | Polylactic acid resin composition 9 | | | | 100 | |
| | Poly (L-lac-tic acid) | | | | | 100 |
| | Composition pellets R 195 or more (%) | 95 | 95 | 95 | 55 | 0 |
| Properties of Press molded article | Molded article R 195 or more (%) | 96 | 95 | 96 | 55 | 0 |
| | Tensile strength (MPa) | 72 | 72 | 72 | 72 | 70 |
| | Tensile elasticity (MPa) | 2700 | 2800 | 2700 | 2800 | 2700 |
| | Hydrolysis properties (retention rate of molecular weight) (%) | 90 | 90 | 93 | 75 | 55 |

As is clear from the results of Table 3, the polylactic acid resin composition (C) comprises the polylactic acid

resin (A-1) containing L-lactic acid as a main component and the polylactic acid resin (A-2) containing D-lactic acid as a main component and at least one of the polylactic acid resins (A-1) and (A-2) has an amide bond formed using polyisocyanate with the lactic acid oligomer, and the composition (C) therefore has high stereocomplex formation ability. The molded articles prepared by using the composition (C) have not only the same mechanical properties as those of poly(L-lactic acid) but also excellent heat resistance and resistance to hydrolysis. These show that the properties are largely improved.

Example 3

The invention [3] will be described in more detail with reference to Examples 3, but it should be not limited by Examples 3. The values in Examples 3 are determined by the following methods.

Weight average molecular weight (Mw)

The weight average molecular weight was determined using a polystyrene standard sample by gel permeation chromatography (GPC, manufactured by Shimadzu Co., Ltd., a column: LF-G, LF-804 manufactured by Shodex), at a column temperature of 40°C, at a flow rate of 1 mL/min with a chloroform solvent.

Carboxyl acid value

To 0.5 g of an oligomer for measurement, 20 mL of a 7/3 mixed solvent of chloroform and methanol was added and the polymer was completely dissolved. Two drops of a brome thymol blue and phenol red mixed ethanol solution as an indicator was added to the polymer solution. The resulting mixture indicated yellow. Titration of the polymer solution was carried out by a 0.1 N potassium hydroxide ethanolic solution. The point at which the color thereof was changed from yellow to pale violet was taken as the end point. The carboxyl acid value of the oligomer was thus determined.

Proportion of terminal carboxylic acid group and Number of terminal functional group

A specimen prepared by allowing a lactic acid oligomer to react with anhydrous succinic acid and a lactic acid oligomer specimen prepared from lactic acid and anhydrous succinic acid were subjected to $^1$H-NMR measurement (device: ECA500 manufactured by Nihon electron, internal standard tetramethyl silane: $\delta$= 0 ppm). The following two spectrums were observed.
$\delta$= 2.61 to 2.72 ppm (multiplet):

derived from hydrogen of methylene chain of the succinic acid unit reacted with the polylactic acid oligomer end and the succinic acid in the lactic acid oligomer (4H)

$\delta$= 4.36 ppm J = 6.92 (quartet):

derived from methine hydrogen present at a $\alpha$ position of the terminal hydroxyl group of the lactic acid oligomer chain (1H)

By using the two integral values, the proportion of terminal carboxylic acid group was determined from the number of terminal carboxylic acid group [= the number of carboxyl group in lactic acid oligomer (= the number of unreacted terminal hydroxyl group in lactic acid oligomer) + the number of succinilated terminal carboxyl group}, and the number of terminal hydroxyl group (the number of unreacted terminal hydroxyl group in polylactic acid). Furthermore, the number of terminal functional group was determined from the carboxyl acid value and the proportion of terminal carboxylic acid group.

The proportion of terminal carboxylic acid group (%)

= the number of terminal carboxylic acid group / (the number of terminal carboxylic acid group + the number of terminal hydroxyl group) x 100

$$\text{The number of terminal functional group (mol/g)} = \text{the carboxyl acid value} / (\text{proportion of terminal carboxylic acid group} / 100)$$

Identification of amide bond

The polylactic acid resin prepared by allowing a lactic acid oligomer to react with hexamethylene diisocyanate was subjected to $^{13}$C-NMR measurement (device: ECA 500 manufactured by Nihon electron, internal standard chloroform d: $\delta$= 77 ppm). Form the following spectrum, it was confirmed that amide bond is present or not in the stereocomplex polylactic acid resin composition (Z).
$\delta$ = 39 ppm:

derived from carbon present at an $\alpha$ position in hexamethylene unit adjacent to an amide bond

Degree of stereo crystallization ratio(Cr)

The degree of stereo crystallization ratio (Cr) was determined from the following formula and diffraction profiles of stereocomplex crystals and homogeneous crystals in measurement with a wide-angle X ray diffraction transmission method (apparatus: RINT2500 manufactured by Rigaku Co. , Ltd., attachment device: rotational specimen carrier, X ray source: CuK$\alpha$, Output: 50kV, 300 mA, detector: scintillation counter).

$$\text{Stereo crystallization ratio (Cr) [\%]} = \{\Sigma I_{sci} / (\Sigma I_{sci} + I_{HM})\} \times 100$$

$\Sigma I_{sci}$ is the total sum ($I_{sc1}$ + $I_{sc2}$ + $I_{sc3}$) of integral intensities of diffraction peaks derived from stereocomplex crystals, and $I_{sci}$ (i= 1 to 3) are integral intensities of diffraction peaks at near $2\theta$ = 12.0°, 20.7° and 24.0°, respectively.
$I_{HM}$ is an integral intensity of a diffraction peak derived from the homogeneous crystal.

Melting point (Tm)

The melting point (Tm) was determined from a differential scanning calorimeter (DSC apparatus RDC 220 manufactured by SII). 5 to 6 mg of a sample was weighed and put in a nitrogen-sealed pan, and introduced into a nitrogen-sealed DSC measuring part previously set at 25°C. The temperature was increased to 240°C at a temperature increasing rate of 10°C/min(first heating process). Successively, the temperature was maintained at 240°C 1 min or 5 min. Thereafter, the temperature was decreased to 0°C at a temperature decreasing rate of 99.90°C/min and maintained for 5 min. Successively, the temperature was again increased from 0°C to 240°C at a temperature increasing rate of 10°C/min (second heating process), and then the temperature was decreased to 25°C at a temperature decreasing rate of 99.90°C/min. Then, the measurement was terminated.

Stereo crystal rate (S)

The stereo crystal rate (S) was determined from the following formula and the heat quantity of each melting peak obtained by the above differential scanning calorimeter (DSC) measurement.

$$\text{Stereo crystal rate (S) [\%]} = \{\Delta Hms / (\Delta Hmh + \Delta Hms)\} \times 100$$

In the formula:

$\Delta$ Hms is a heat quantity (J/g) of a melting peak of the stereocomplex crystals which the peak having a temperature

of not lower than 190°C, and
Δ Hmh is a heat quantity (J/g) of a melting peak of the homogenous crystal which the peak having a temperature of not higher than 190°C.

Weight average molecular weight (Mw) retention

The weight average retention rate of molecular weight (Mw) was determined by the following formula.

$$\text{Mw retention (\%)} = (Mw_{DSC}\ \text{after measurement} / Mw_{DSC}\ \text{before measurement}) \times 100$$

In the formula:

$Mw_{DSC}$ before measurement: The weight average molecular weight of the stereocomplex polylactic acid resin composition (Z) before DSC measurement.
$Mw_{DSC}$ after measurement: The weight average molecular weight of the stereocomplex polylactic acid resin composition (Z) after DSC measurement.

The production of an oligomer unit was carried out in the following methods as described in the production examples.

Production Example 3-1: Production of L-lactic acid oligomer

To a round-bottom flask equipped with a Dean stark trap, 400 g of 90% L-lactic acid (lactic acid containing 99.5 % by mol of L-form) manufactured by Purac Inc. and 1.3 g of tin (II) oxide manufactured by Wako Pure Chemical Industries as a reagent were introduced. The inside of the flask was purged with nitrogen and the flask was heated to 130°C at ordinary pressure in a nitrogen atmosphere by an oil bath heated at 150°C. The pressure of the flask inside was decreased gradually and the flask was maintained at 50 mmHg for 2 hr. Next, the flask was released to ordinary pressure and thereafter, 30 g of xylene was added to the flask. Next, the Dean stark trap was changed to a Dean stark trap filled with xylene. The temperature of the oil bath was increased to 180°C, the pressure of the flask inside was reduced to 500 mmHg and the reaction solution was maintained at 150°C for 3 hr to prepare a transparent L-lactic acid oligomer. The L-lactic acid oligomer had a weight average molecular weight (Mw), as measured by the above measuring method, of 10000. The carboxyl acid value, as determined by the above measuring method, was $1.818 \times 10^{-4}$ (mol/g).

Furthermore, to the flask, 6. 5 g of anhydrous succinic acid was added and stirred at an oil bath temperature of 150°C for 1 hr. The flask was released to ordinary pressure, and the reaction mixture was diluted by adding 300 g of xylene and then the resulting solution was taken out and xylene was removed by drying in a nitrogen stream. The solid obtained after the air-drying was washed twice with 2-propanol having a 35 % hydrochloric acid content of 1 % and filtered off. Thereafter, the solid filtered off was washed with methanol several times and dried under reduced pressure at 50°C to prepare 275 parts by weight of a white L-lactic acid oligomer (x'1). As the results of the measurements, the oligomer had a weight average molecular weight (Mw) of 10000, a proportion of terminal carboxylic acid group of 95%, a carboxyl acid value of $3.652 \times 10^{-4}$ (mol/g) and a melting point (Tm) of 163°C.

Production Example 3-2: Production of L-lactic acid oligomer

The procedure of Production example 3-1 was repeated except for changing the retention time at a reaction solution temperature of 150°C to 4 hr and changing the addition amount of anhydrous succinic acid to 4.5 g, to prepare a L-lactic acid oligomer (x' 1) . As the results of the measurements, the oligomer had a weight average molecular weight (Mw) of 19000, a proportion of terminal carboxylic acid group of 95% and a melting point (Tm) of 163°C.

Production Example 3-3: Production of L-lactic acid oligomer

The procedure of Production example 3-1 was repeated except for changing the retention time at a reaction solution temperature of 150°C to 8 hr and changing the addition amount of anhydrous succinic acid to 2.6 parts by weight, to prepare a L-lactic acid oligomer (x'1). As the results of the measurements, the oligomer had a weight average molecular weight (Mw) of 40000, a proportion of terminal carboxylic acid group of 95% and a melting point (Tm) of 163°C.

Production Example 3-4

Production of L-lactic acid oligomer

The procedure of Production example 3-1 was repeated except for changing the retention time at a reaction solution temperature of 150°C to 4 hr and changing the addition amount of anhydrous succinic acid to 4.2 g, to prepare a L-lactic acid oligomer (x' 1) . As the results of the measurements, the oligomer had a weight average molecular weight (Mw) of 19000, a proportion of terminal carboxylic acid group of 90% and a melting point (Tm) of 163°C.

Production Example 3-5: Production of L-lactic acid oligomer

The procedure of Production example 3-1 was repeated except for not carrying out a reaction with anhydrous succinic acid, to prepare a L-lactic acid oligomer. As the results of the measurements, the oligomer had a weight average molecular weight (Mw) of 19000, a proportion of terminal carboxylic acid group of 50% and a melting point (Tm) of 163°C.

Production Example 3-6: Production of L-lactic acid oligomer

To a round-bottom flask, 500 g of L-lactide manufactured by Purac Inc. and 1.5 g of ethylene glycol (manufactured by Wako Pure Chemical Industries) were introduced. The inside of the flask was purged with nitrogen and the flask was heated to 130°C at ordinary pressure in a nitrogen atmosphere by an oil bath heated at 150°C and thereby the mixture was dissolved uniformly. Next, the temperature of the oil bath was increased to 170°C. 2.0 g of tin 2-ethyl hexanoate was added and polymerization reaction was carried out for 2 hr. Thereafter, the reactant was dissolved in chloroform and precipitated in methanol (10 times the amount of chloroform) while stirring, and thereby a L-lactic acid oligomer was prepared. The resulting oligomer was washed twice with 790 g of 2-propanol having a 35 % hydrochloric acid content of 1 % and filtered off. Thereafter, the solid filtered off was washed with methanol several times and dried under reduced pressure at 50°C to prepare a white L-lactic acid oligomer. The oligomer had a weight average molecular weight (Mw), as measured, of 20000. The carboxyl acid value was not detected.

Production Example 3-7: Production of D-lactic acid oligomer

The procedure of Production example 3-1 was repeated except for changing 90% L-lactic acid to 90% D-lactic acid (obtainable by hydrolysis of D-lactide, lactic acid containing not less than 99.5 % by mole of D-form manufactured by Purac Inc.), changing the retention time at a reaction solution temperature of 150°C to 3.5 hr and changing the addition amount of anhydrous succinic acid to 6.2 g, to prepare a D-lactic acid oligomer (y'1). As the results of the measurements, the oligomer had a weight average molecular weight (Mw) of 10500, a proportion of terminal carboxylic acid group of 95% and a melting point (Tm) of 161°C.

Production Example 3-8: Production of D-lactic acid oligomer

The procedure of Production example 3-7 was repeated except for changing the retention time at a reaction solution temperature of 150°C to 4.5 hr and changing the addition amount of anhydrous succinic acid to 4.3 g, to prepare a D-lactic acid oligomer (y'1). As the results of the measurements, the oligomer had a weight average molecular weight (Mw) of 20000, a proportion of terminal carboxylic acid group of 95% and a melting point (Tm) of 161°C.

Production Example 3-9: Production of D-lactic acid oligomer

The procedure of Production example 3-7 was repeated except for changing the retention time at a reaction solution temperature of 150°C to 9 hr and changing the addition amount of anhydrous succinic acid to 2.7 g, to prepare a D-lactic acid oligomer (y'1) . As the results of the measurements, the oligomer had a weight average molecular weight (Mw) of 39000, a proportion of terminal carboxylic acid group of 95% and a melting point (Tm) of 161°C.

Production Example 3-10: Production of D-lactic acid oligomer

The procedure of Production example 3-7 was repeated except for changing the addition amount of anhydrous succinic acid to 4.1 g, to prepare a D-lactic acid oligomer (y'1). As the results of the measurements, the oligomer had a weight average molecular weight (Mw) of 20000, a proportion of terminal carboxylic acid group of 90% and a melting point (Tm) of 161°C.

Production Example 3-11: Production of D-lactic acid oligomer

The procedure of Production example 3-7 was repeated except for not carrying out reaction with anhydrous succinic acid in Production example 3-7, to prepare a D-lactic acid oligomer. As the results of the measurements, the oligomer had a weight average molecular weight (Mw) of 20000, a proportion of terminal carboxylic acid group of 50% and a melting point (Tm) of 161°C.

Production Example 3-12: Production of D-lactic acid oligomer

The procedure of Production example 3-6 was repeated except for changing L-lactide to D-lactide (manufactured by Purac Inc., to prepare a D-lactic acid oligomer. As the results of the measurements, the oligomer had a weight average molecular weight (Mw) of 20000. The carboxyl acid value was not detected.

The stereocomplex polylactic acid resin composition (Z) was produced by the following methods as described in examples.

Example 3-1: Production of stereocomplex polylactic acid resin composition (Z)

To a round bottom flask, 30 g of the L-lactic acid oligomer (x'1) synthesized in Production example 3-1, 100 g of a D-lactic acid polymer (manufactured by Purac Inc., PDLA High IV, Lot No.0701001661, weight average molecular weight (Mw) 229000) and magnesium stearate in an amount of 30 ppm in terms of magnesium per the weight of the L-lactic acid oligomer were introduced. The inside of the flask was purged with nitrogen. Thereafter, o-dichlorobenzene was introduced in the same amount as the total amount of the L-lactic acid oligomer (x'1) and the D-lactic acid polymer, and the flask was heated to 190°C at ordinary pressure in a nitrogen atmosphere to dissolve the L-lactic acid oligomer and the D-lactic acid polymer. Next, hexamethylene diisocyanate (hereinafter referred to as HDI) was fed in an amount of 1.1 times mol per the number of terminal functional group of the L-lactic acid oligomer to the flask and the reaction was carried out at 190°C for 40 min. After the completion of the reaction, the reaction mixture was mixed with o-dichlorobenzene in an amount of 4 times the total weight of the L-lactic acid oligomer and the D-lactic acid polymer. The mixture was cooled, and then mixed with xylene in an amount of 4 times the total weight as the same as described above to perform crystallization. The resulting mixture was subjected to filtration with suction. The resulting powder was dried at room temperature in a nitrogen stream for 15 hr to prepare 130 g of a powdery stereocomplex polylactic acid resin composition (Z). It was confirmed by $^{13}$C-NMR measurement that the resin composition had an amide bond.

Examples 3-2 to 3-9: Production of stereocomplex olylactic acid resin composition (Z)

In respective examples, the procedure of Example 3-1 was repeated except for changing the addition amount of the L-lactic acid oligomer synthesized in Production example 3-1 to 50 g (Example 3-2), 60 g (Example 3-3), 80 g (Example 3-4), 95 g (Example 3-5), 120 g (Example 3-6), 140 g (Example 3-7), 200 g (Example 3-8) and 300 g (Example 3-9), to prepare respective stereocomplex polylactic acid resin compositions (Z). It was confirmed by $^{13}$C-NMR measurement that the respective resin composition had an amide bond.

Examples 3-10 to 3-18: Production of stereocomplex polylactic acid resin composition (Z)

The respective procedures in Example 3-1 to Example 3-9 were repeated except for changing the L-lactic acid oligomer synthesized in Production example 3-1 to the L-lactic acid oligomer synthesized in Production example 3-2, to prepare respective stereocomplex polylactic acid resin compositions (Z). It was confirmed by $^{13}$C-NMR measurement that the respective resin compositions had an amide bond.

Examples 3-19 to 3-27: Production of stereocomplex polylactic acid resin composition (Z)

The respective procedures in Example 3-1 to Example 3-9 were repeated except for changing the L-lactic acid oligomer synthesized in Production example 3-1 to the L-lactic acid oligomer synthesized in Production example 3-3, to prepare respective stereocomplex polylactic acid resin compositions (Z). It was confirmed by $^{13}$C-NMR measurement that the respective resin compositions had an amide bond.

Examples 3-28 to 3-36: Production of stereocomplex polylactic acid resin composition (Z)

The respective procedures in Example 3-1 to Example 3-9 were repeated except for changing the L-lactic acid oligomer synthesized in Production example 3-1 to the L-lactic acid oligomer synthesized in Production example 3-4, to

prepare respective stereocomplex polylactic acid resin compositions (Z). It was confirmed by $^{13}$C-NMR measurement that the respective resin compositions had an amide bond.

Examples 3-37 to 3-45: Production of stereocomplex polylactic acid resin composition (Z)

The respective procedures in Example 3-10 to Example 3-18 were repeated except for changing hexamethylene diisocyanate to 1,3-(bisisocyanatomethyl)cyclohexane, to prepare respective stereocomplex polylactic acid resin compositions (Z). It was confirmed by $^{13}$C-NMR measurement that the respective resin compositions had an amide bond.

Examples 3-45 to 3-54: Production of stereocomplex polylactic acid resin composition (Z)

The procedures in Example 3-1 to Example 3-9 were repeated except for changing the L-lactic acid oligomer synthesized in Production example 3-1 to the D-lactic acid oligomer synthesized in Production example 3-7, changing the D-lactic acid oligomer (manufactured by Purac Inc., PDLA High IV, Lot No.0701001661, weight average molecular weight (Mw) 229000) to a L-lactic acid polymer (manufactured by Mitsui Chemicals Inc., LACEA H400, Lot No.060313, weight average molecular weight (Mw) 223000) and changing the reaction at 190°C for 40 min to the reaction at 190°C for 30 min, to prepare respective stereocomplex polylactic acid resin compositions (Z). It was confirmed by $^{13}$C-NMR measurement that the respective resin compositions had an amide bond.

Examples 3-55 to 3-63: Production of stereocomplex polylactic acid resin composition (Z)

The respective procedures in Example 3-4 to Example 3-54 were repeated except for changing the D-lactic acid oligomer synthesized in Production example 3-7 to the D-lactic acid oligomer synthesized in Production example 3-8, to prepare respective stereocomplex polylactic acid resin compositions (Z). It was confirmed by $^{13}$C-NMR measurement that the respective resin compositions had an amide bond.

Examples 3-64 to 3-72: Production of stereocomplex polylactic acid resin composition (Z)

The respective procedures in Example 3-46 to Example 3-54 were repeated except for changing the D-lactic acid oligomer synthesized in Production example 3-7 to the D-lactic acid oligomer synthesized in Production example 3-9, to prepare respective stereocomplex polylactic acid resin compositions (Z). It was confirmed by $^{13}$C-NMR measurement that the respective resin compositions had an amide bond.

Examples 3-73 to 3-81: Production of stereocomplex polylactic acid resin composition (Z)

The respective procedures in Example 3-46 to Example 3-54 were repeated except for changing the D-lactic acid oligomer synthesized in Production example 3-7 to the D-lactic acid oligomer synthesized in Production example 3-10, to prepare respective stereocomplex polylactic acid resin compositions (Z). It was confirmed by $^{13}$C-NMR measurement that the respective resin compositions had an amide bond.

Examples 3-82 to 3-90: Production of stereocomplex polylactic acid resin composition (Z)

The respective procedures in Example 3-55 to Example 3-63 were repeated except for changing hexamethylene diisocyanate to 1,3-(bisisocyanatomethyl)cyclohexane, to prepare respective stereocomplex polylactic acid resin compositions (Z). It was confirmed by $^{13}$C-NMR measurement that the respective resin compositions had an amide bond.

Comparative Examples 3-1 to 3-2: Production of stereocomplex polylactic acid resin composition (Z)

In respective examples, the procedure of Example 3-1 was repeated except for changing the addition amount of the L-lactic acid oligomer synthesized in Production example 3-1 to 25 g (Comparative Example 3-1) and 400 g (Comparative Example 3-2) respectively, to prepare respective stereocomplex polylactic acid resin compositions (Z). It was confirmed by $^{13}$C-NMR measurement that the respective resin compositions had an amide bond.

Comparative Examples 3-3 to 3-4: Production of stereocomplex polylactic acid resin composition (Z)

The respective procedures in Comparative Examples 3-1 and 3-2 were repeated except for changing the L-lactic acid oligomer synthesized in Production example 3-1 to the L-lactic acid oligomer synthesized in Production example 3-2, to prepare respective stereocomplex polylactic acid resin compositions (Z). It was confirmed by $^{13}$C-NMR

measurement that the respective resin compositions had an amide bond.

Comparative Examples 3-5 to 3-6: Production of stereocomplex polylactic acid resin composition (Z)

The respective procedures in Comparative Examples 3-1 and 3-2 were repeated except for changing the L-lactic acid oligomer synthesized in Production example 3-1 to the L-lactic acid oligomer synthesized in Production example 3-3, to prepare respective stereocomplex polylactic acid resin compositions (Z). It was confirmed by $^{13}$C-NMR measurement that the respective resin compositions had an amide bond.

Comparative Examples 3-7 to 3-8: Production of stereocomplex polylactic acid resin composition (Z)

The respective procedures in Comparative Examples 3-1 and 3-2 were repeated except for changing the L-lactic acid oligomer synthesized in Production example 3-1 to the L-lactic acid oligomer synthesized in Production example 3-4, to prepare respective stereocomplex polylactic acid resin compositions (Z). It was confirmed by $^{13}$C-NMR measurement that the respective resin compositions had an amide bond.

Comparative Example 3-9: Production of stereocomplex polylactic acid resin composition (Z)

The procedure of Examples 3-1 was repeated except for changing the L-lactic acid oligomer synthesized in Production example 3-1 to 95 g of the L-lactic acid oligomer synthesized in Production example 3-5, to prepare a stereocomplex polylactic acid resin composition (Z). It was confirmed by $^{13}$C-NMR measurement that the resin composition had an amide bond.

Comparative Example 3-10: Production of stereocomplex Polylactic acid resin composition (Z)

The procedure of Examples 3-1 was repeated except for changing the L-lactic acid oligomer synthesized in Production example 3-1 to 95 g of the L-lactic acid oligomer synthesized in Production example 3-6, to prepare a stereocomplex polylactic acid resin composition (Z). It was confirmed by $^{13}$C-NMR measurement that the resin composition had an amide bond.

Comparative Examples 3-11 to 3-12: Production of stereocomplex polylactic acid resin composition (Z)

The respective procedures in Comparative Examples 3-1 to 3-2 were repeated except for changing the L-lactic acid oligomer synthesized in Production example 3-1 to the D-lactic acid oligomer synthesized in Production example 3-7, and the D-lactic acid polymer (manufactured by Purac Inc., PDLA High IV, Lot No.0701001661, weight average molecular weight (Mw) 229000) to a L-lactic acid polymer (manufactured by Mitsui Chemicals Inc., LACEA H400, Lot No.060313, weight average molecular weight (Mw) 223000), to prepare respective stereocomplex polylactic acid resin compositions (Z). It was confirmed by $^{13}$C-NMR measurement that the respective resin compositions had an amide bond.

Comparative Examples 3-13 to 3-14: Production of stereocomplex polylactic acid resin composition (Z)

The respective procedures in Comparative Examples 3-11 and 3-12 were repeated except for changing the D-lactic acid oligomer synthesized in Production example 3-7 to the D-lactic acid oligomer synthesized in Production example 3-8, to prepare respective stereocomplex polylactic acid resin compositions (Z). It was confirmed by $^{13}$C-NMR measurement that the respective resin compositions had an amide bond.

Comparative Examples 3-15 to 3-16: Production of stereocomplex polylactic acid resin composition (Z)

The respective procedures in Comparative Examples 3-11 and 3-12 were repeated except for changing the D-lactic acid oligomer synthesized in Production example 3-7 to the D-lactic acid oligomer synthesized in Production example 3-9, to prepare respective stereocomplex polylactic acid resin compositions (Z) respectively. It was confirmed by $^{13}$C-NMR measurement that the respective resin compositions had an amide bond.

Comparative Examples 3-17 to 3-18: Production of stereocomplex polylactic acid resin composition (Z)

The respective procedures in Comparative Examples 3-11 and 3-12 were repeated except for changing the D-lactic acid oligomer synthesized in Production example 3-7 to the D-lactic acid oligomer synthesized in Production example 3-10, to prepare respective stereocomplex polylactic acid resin compositions (Z). It was confirmed by $^{13}$C-NMR

measurement that the respective resin compositions had an amide bond.

Comparative Example 3-19: Production of stereocomplex polylactic acid resin composition (Z)

The procedure of Examples 3-50 was repeated except for changing the D-lactic acid oligomer synthesized in Production example 3-7 to the D-lactic acid oligomer synthesized in Production example 3-11, to prepare a stereocomplex polylactic acid resin composition (Z). It was confirmed by $^{13}$C-NMR measurement that the resin composition had an amide bond.

Comparative Example 3-20: Production of stereocomplex polylactic acid resin composition (Z)

The procedure of Examples 3-50 was repeated except for changing the D-lactic acid oligomer synthesized in Production example 3-7 to the D-lactic acid oligomer synthesized in Production example 3-12, to prepare a stereocomplex polylactic acid resin composition (Z). It was confirmed by $^{13}$C-NMR measurement that the resin composition had an amide bond.

Tables 4 to 11 shows the weight average molecular weight (Mw), the proportion of stereo crystallization ratio (Cr) [%], the melting point (Tm) [°C], the stereo crystal rate (S) [%] and the Mw retention [%], which were determined by the above measuring method, of each of the stereocomplex polylactic acid resin compositions (Z) prepared in the examples and the comparative examples.

Figures 1 and 2 shows: changes with time described by GPC chromatography in the production of the stereocomplex polylactic acid resin compositions (Z) synthesized in Examples 3-14 and Examples 3-59; and GPC chromatograms of the oligomers (Production examples 3-2 and 3-8) and the polymers.

Table 4

| Stereocomplex polylactic acid resin composition (Z) produced from L-lactic acid oligomer (x'1) and D-lactic acid oligomer(y1) DSC measurement: Retention temperature 240°C, Retention time 1 min | | | | | | | |
|---|---|---|---|---|---|---|---|
| Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-1 | 204000 | 63 | 211,175,162 | 204,168 | 65 | 91 | 97 |
| 3-2 | 206000 | 76 | 211,175,162 | 203,174 | 83 | 92 | 92 |
| 3-3 | 210000 | 82 | 210,174,163 | 203 | 94 | 100 | 91 |
| 3-4 | 210000 | 86 | 209,175,163 | 203 | 96 | 100 | 92 |
| 3-5 | 207000 | 87 | 209,175,162,145 | 203 | 98 | 100 | 93 |
| 3-6 | 208000 | 88 | 210,174,161,147 | 203 | 98 | 100 | 93 |
| 3-7 | 209000 | 84 | 210,175,161,145 | 203 | 95 | 100 | 90 |
| 3-8 | 206000 | 75 | 210,161,145 | 204 | 85 | 100 | 80 |
| 3-9 | 206000 | 57 | 210,151 | 204,151 | 70 | 98 | 78 |
| 3-10 | 210000 | 59 | 212,175,162 | 205,168 | 61 | 90 | 99 |
| 3-11 | 209000 | 73 | 211,174,163 | 205,174 | 79 | 91 | 92 |
| 3-12 | 211000 | 79 | 211,174,163 | 204 | 91 | 100 | 92 |
| 3-13 | 210000 | 82 | 210,175,162 | 204 | 93 | 100 | 91 |
| 3-14 | 209000 | 83 | 210,174,161,145 | 204 | 96 | 100 | 90 |
| 3-15 | 209000 | 84 | 211,174,161,147 | 204 | 97 | 100 | 90 |
| 3-16 | 210000 | 81 | 211,174,161,146 | 204 | 92 | 100 | 90 |
| 3-17 | 207000 | 71 | 211,161,145 | 204 | 79 | 100 | 82 |

(continued)

| Stereocomplex polylactic acid resin composition (Z) produced from L-lactic acid oligomer (x'1) and D-lactic acid oligomer(y1) DSC measurement: Retention temperature 240°C, Retention time 1 min | | | | | | | |
|---|---|---|---|---|---|---|---|
| Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-18 | 207000 | 54 | 211,151 | 205,151 | 65 | 98 | 79 |
| 3-19 | 208000 | 57 | 214,175,163 | 207,163 | 60 | 90 | 100 |
| 3-20 | 207000 | 71 | 213,175,163 | 206,175 | 77 | 91 | 100 |
| 3-21 | 210000 | 77 | 213,174,162 | 206 | 90 | 100 | 100 |
| 3-22 | 211000 | 80 | 212,175,163 | 206 | 92 | 100 | 100 |
| 3-23 | 211000 | 81 | 212,174,161,145 | 206 | 94 | 100 | 100 |
| 3-24 | 208000 | 82 | 213,174,162,145 | 206 | 95 | 100 | 100 |
| 3-25 | 209000 | 79 | 213,174,161,146 | 206 | 91 | 100 | 100 |
| 3-26 | 208000 | 68 | 213,162,145 | 206 | 77 | 100 | 100 |
| 3-27 | 207000 | 51 | 213,153 | 206,153 | 62 | 98 | 97 |
| 3-28 | 209000 | 58 | 209,174,162 | 202,168 | 60 | 88 | 98 |
| 3-29 | 209000 | 72 | 208,175,162 | 203,174 | 77 | 89 | 91 |
| 3-30 | 210000 | 77 | 208,174,163 | 202 | 90 | 100 | 91 |
| 3-31 | 210000 | 81 | 208,174,162 | 202 | 91 | 100 | 91 |
| 3-32 | 209000 | 82 | 207,174,162,145 | 202 | 94 | 100 | 90 |
| 3-33 | 209000 | 83 | 208,174,161,146 | 202 | 95 | 100 | 90 |
| 3-34 | 208000 | 80 | 208,174,161,146 | 202 | 91 | 100 | 90 |
| 3-35 | 206000 | 70 | 207,162,45 | 201 | 77 | 100 | 80 |
| 3-36 | 205000 | 52 | 207,162,151 | 201,151 | 63 | 97 | 77 |
| 3-37 | 209000 | 57 | 213,174,162 | 206,168 | 60 | 89 | 98 |
| 3-38 | 206000 | 72 | 212,174,163 | 205,175 | 77 | 90 | 92 |
| 3-39 | 209000 | 77 | 212,174,162 | 205 | 90 | 100 | 91 |
| 3-40 | 209000 | 81 | 211,174,162 | 204 | 92 | 100 | 91 |
| 3-41 | 210000 | 83 | 210,175,161,145 | 204 | 94 | 100 | 90 |
| 3-42 | 208000 | 84 | 212,174,161,146 | 204 | 95 | 100 | 90 |
| 3-43 | 207000 | 80 | 211,174,161,146 | 204 | 91 | 100 | 90 |
| 3-44 | 208000 | 70 | 210,162,145 | 204 | 77 | 100 | 81 |
| 3-45 | 205000 | 52 | 211,151 | 205,151 | 63 | 96 | 79 |

Table 5

| Stereocomplex polylactic acid resin composition (Z) produced from D-lactic acid oligomer (y'1) and L-lactic acid oligomer(x1) DSC measurement: Retention temperature 240°C, Retention time 1 min | | | | | | | |
|---|---|---|---|---|---|---|---|
| Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-46 | 210000 | 63 | 207,152 | 204,151 | 69 | 95 | 99 |
| 3-47 | 210000 | 76 | 207,153 | 204,153 | 84 | 96 | 98 |
| 3-48 | 208000 | 82 | 206,152 | 203 | 93 | 100 | 96 |
| 3-49 | 210000 | 86 | 206,153 | 203 | 96 | 100 | 95 |
| 3-50 | 211000 | 87 | 204,153 | 202 | 96 | 100 | 93 |
| 3-51 | 208000 | 88 | 206,155 | 204 | 98 | 100 | 94 |
| 3-52 | 210000 | 84 | 206,155 | 203 | 92 | 100 | 93 |
| 3-53 | 223000 | 75 | 203,149 | 201 | 82 | 100 | 81 |
| 3-54 | 235000 | 57 | 204,149 | 201,149 | 66 | 99 | 79 |
| 3-55 | 214000 | 59 | 208,153 | 205,153 | 64 | 93 | 99 |
| 3-56 | 216000 | 73 | 208,153 | 205,153 | 80 | 94 | 99 |
| 3-57 | 216000 | 79 | 207,153 | 204 | 89 | 100 | 98 |
| 3-58 | 218000 | 82 | 207,153 | 204 | 93 | 100 | 97 |
| 3-59 | 215000 | 83 | 205,154 | 203 | 93 | 100 | 95 |
| 3-60 | 211000 | 84 | 207,156 | 205 | 96 | 100 | 96 |
| 3-61 | 212000 | 81 | 207,156 | 205 | 88 | 100 | 95 |
| 3-62 | 226000 | 71 | 204,150 | 202 | 78 | 100 | 84 |
| 3-63 | 242000 | 54 | 204,150 | 202,150 | 62 | 98 | 82 |
| 3-64 | 210000 | 57 | 209,155,149 | 206,155 | 61 | 93 | 100 |
| 3-65 | 208000 | 71 | 209,155,148 | 206,155 | 78 | 94 | 100 |
| 3-66 | 208000 | 77 | 208,155,149 | 205 | 92 | 100 | 100 |
| 3-67 | 204000 | 80 | 208,155,148 | 204 | 93 | 100 | 100 |
| 3-68 | 202000 | 81 | 208,155,149 | 204 | 95 | 100 | 100 |
| 3-69 | 209000 | 82 | 208,155,148 | 204 | 97 | 100 | 100 |
| 3-70 | 210000 | 79 | 207,156,148 | 204 | 93 | 100 | 100 |
| 3-71 | 221000 | 68 | 205,151 | 203 | 78 | 100 | 100 |
| 3-72 | 236000 | 51 | 205,151 | 203,151 | 64 | 98 | 97 |
| 3-73 | 214000 | 58 | 206,153 | 202,153 | 62 | 92 | 98 |
| 3-74 | 214000 | 71 | 206,153 | 202,153 | 80 | 93 | 98 |
| 3-75 | 213000 | 77 | 205,153 | 201 | 88 | 100 | 96 |
| 3-76 | 218000 | 81 | 205,153 | 201 | 92 | 100 | 95 |
| 3-77 | 216000 | 83 | 202,154 | 200 | 93 | 100 | 92 |
| 3-78 | 211000 | 83 | 205,155 | 203 | 94 | 100 | 94 |

(continued)

| Stereocomplex polylactic acid resin composition (Z) produced from D-lactic acid oligomer (y'1) and L-lactic acid oligomer(x1) DSC measurement: Retention temperature 240°C, Retention time 1 min | | | | | | | |
|---|---|---|---|---|---|---|---|
| Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-79 | 211000 | 81 | 204,155 | 202 | 88 | 100 | 94 |
| 3-80 | 230000 | 71 | 202,151 | 200 | 77 | 100 | 81 |
| 3-81 | 243000 | 53 | 202,151 | 200,150 | 61 | 96 | 80 |
| 3-82 | 214000 | 59 | 209,153 | 206,153 | 64 | 93 | 97 |
| 3-83 | 216000 | 73 | 208,152 | 205,154 | 80 | 93 | 97 |
| 3-84 | 216000 | 79 | 208,153 | 205 | 88 | 100 | 96 |
| 3-85 | 218000 | 82 | 207,153 | 204 | 93 | 100 | 96 |
| 3-86 | 215000 | 83 | 205,155 | 203 | 93 | 100 | 94 |
| 3-87 | 211000 | 84 | 205,156 | 203 | 95 | 100 | 96 |
| 3-88 | 212000 | 81 | 205,156 | 202 | 88 | 100 | 94 |
| 3-89 | 226000 | 71 | 204,150 | 202 | 77 | 100 | 82 |
| 3-90 | 242000 | 54 | 204,150 | 202, 150 | 61 | 97 | 80 |

Table 6

| Stereocomplex polylactic acid resin composition (Z) produced from L-lactic acid oligomer (x'1) and D-lactic acid polymer (Y1) DSC measurement: Retention temperature 240°C, Retention time 5 min | | | | | | | |
|---|---|---|---|---|---|---|---|
| Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-1 | 204000 | 63 | 211,175,163 | 204 | 65 | 100 | 90 |
| 3-2 | 206000 | 76 | 211,175,162 | 203 | 83 | 100 | 84 |
| 3-3 | 210000 | 82 | 210,173,163 | 203 | 94 | 100 | 83 |
| 3-4 | 210000 | 86 | 210,175,163 | 203 | 96 | 100 | 81 |
| 3-5 | 207000 | 87 | 209,175,162,145 | 203 | 98 | 100 | 81 |
| 3-6 | 208000 | 88 | 210,174,162,147 | 203 | 98 | 100 | 80 |
| 3-7 | 209000 | 84 | 210,175,261,145 | 203 | 95 | 100 | 75 |
| 3-8 | 206000 | 75 | 210,161,146 | 204 | 85 | 100 | 73 |
| 3-9 | 206000 | 57 | 210,151 | 204 | 70 | 100 | 70 |
| 3-10 | 210000 | 59 | 212,175,162 | 205 | 61 | 100 | 92 |
| 3-12 | 209000 | 73 | 212,174,163 | 204 | 79 | 100 | 85 |
| 3-12 | 211000 | 79 | 211,175,163 | 204 | 91 | 100 | 85 |
| 3-13 | 210000 | 82 | 210,175,162 | 204 | 93 | 100 | 83 |

(continued)

| Stereocomplex polylactic acid resin composition (Z) produced from L-lactic acid oligomer (x'1) and D-lactic acid polymer (Y1) DSC measurement: Retention temperature 240°C, Retention time 5 min | | | | | | | |
|---|---|---|---|---|---|---|---|
| Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-14 | 209000 | 83 | 210,174,161,145 | 204 | 96 | 100 | 82 |
| 3-15 | 209000 | 84 | 210,174,162,147 | 204 | 97 | 100 | 81 |
| 3-16 | 210000 | 81 | 211,174,161,146 | 204 | 92 | 100 | 79 |
| 3-17 | 207000 | 71 | 211,161,144 | 204 | 79 | 100 | 75 |
| 3-18 | 207000 | 54 | 211,151 | 205 | 65 | 100 | 72 |
| 3-19 | 208000 | 57 | 214,175,163 | 207 | 60 | 100 | 100 |
| 3-20 | 207000 | 71 | 214,176,163 | 206 | 77 | 100 | 100 |
| 3-21 | 210000 | 77 | 213,174,163 | 206 | 90 | 100 | 100 |
| 3-22 | 211000 | 80 | 212,175,163 | 206 | 92 | 100 | 100 |
| 3-23 | 208000 | 81 | 212,174,161,145 | 206 | 94 | 100 | 100 |
| 3-24 | 208000 | 82 | 212,174,161,145 | 206 | 95 | 100 | 100 |
| 3-25 | 209000 | 79 | 213,175,161,146 | 206 | 91 | 100 | 100 |
| 3-26 | 208000 | 68 | 213,162,144 | 206 | 77 | 100 | 90 |
| 3-27 | 207000 | 51 | 213,153 | 206 | 62 | 100 | 84 |
| 3-28 | 209000 | 58 | 209,174,163 | 203 | 61 | 100 | 91 |
| 3-29 | 209000 | 72 | 209,175,162 | 203 | 79 | 100 | 85 |
| 3-30 | 210000 | 77 | 208,174,163 | 202 | 91 | 100 | 85 |
| 3-31 | 210000 | 81 | 208,174,163 | 202 | 93 | 100 | 82 |
| 3-32 | 209000 | 82 | 207,175,162,145 | 202 | 96 | 100 | 81 |
| 3-33 | 209000 | 83 | 208,174,162,146 | 202 | 97 | 100 | 80 |
| 3-34 | 208000 | 80 | 207,174,161,146 | 202 | 91 | 100 | 78 |
| 3-35 | 206000 | 70 | 207,162,145 | 202 | 79 | 100 | 75 |
| 3-36 | 205000 | 52 | 207,162,151 | 202 | 65 | 100 | 71 |
| 3-37 | 209000 | 57 | 212,174,162 | 205,168 | 60 | 100 | 97 |
| 3-38 | 206000 | 72 | 212,174,162 | 205,175 | 75 | 100 | 92 |
| 3-39 | 209000 | 77 | 212,174,162 | 205 | 90 | 100 | 90 |
| 3-40 | 209000 | 81 | 211,174,162 | 204 | 91 | 100 | 91 |
| 3-41 | 210000 | 83 | 210,174,161,145 | 204 | 94 | 100 | 90 |
| 3-42 | 208000 | 84 | 211,174,161,146 | 204 | 95 | 100 | 90 |
| 3-43 | 207000 | 80 | 211,174,161,145 | 204 | 91 | 100 | 91 |
| 3-44 | 208000 | 70 | 210,162,145 | 203 | 75 | 100 | 81 |
| 3-45 | 205000 | 52 | 211,151 | 205,151 | 62 | 100 | 77 |

Table 7

| Stereocomplex polylactic acid resin composition (Z) produced from D-lactic acid oligomer (y'1) and L-lactic acid polymer(x1) DSC measurement: Retention temperature 240°C, Retention time 5 min | | | | | | | |
|---|---|---|---|---|---|---|---|
| Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-46 | 210000 | 63 | 207,152 | 204 | 69 | 100 | 90 |
| 3-47 | 210000 | 76 | 207,153 | 204 | 84 | 100 | 89 |
| 3-48 | 208000 | 82 | 206,152 | 203 | 93 | 100 | 87 |
| 3-49 | 210000 | 86 | 206,152 | 203 | 96 | 100 | 86 |
| 3-50 | 211000 | 87 | 205,153 | 202 | 96 | 100 | 84 |
| 3-51 | 208000 | 88 | 206,155 | 204 | 98 | 100 | 85 |
| 3-52 | 210000 | 84 | 206,155 | 203 | 92 | 100 | 85 |
| 3-53 | 223000 | 75 | 203,150 | 201 | 82 | 100 | 73 |
| 3-54 | 235000 | 57 | 204,149 | 201 | 66 | 100 | 71 |
| 3-55 | 214000 | 59 | 208,153 | 205 | 64 | 100 | 90 |
| 3-56 | 216000 | 73 | 207,153 | 205 | 80 | 100 | 90 |
| 3-57 | 216000 | 79 | 207,153 | 204 | 89 | 100 | 89 |
| 3-58 | 218000 | 82 | 207,153 | 204 | 93 | 100 | 88 |
| 3-59 | 215000 | 83 | 205,154 | 203 | 93 | 100 | 86 |
| 3-60 | 211000 | 84 | 207,156 | 205 | 96 | 100 | 87 |
| 3-61 | 212000 | 81 | 207,155 | 205 | 88 | 100 | 87 |
| 3-62 | 226000 | 71 | 205,150 | 202 | 78 | 100 | 76 |
| 3-63 | 242000 | 54 | 204,150 | 202 | 62 | 100 | 71 |
| 3-64 | 210000 | 57 | 209,154,149 | 206 | 61 | 100 | 100 |
| 3-65 | 208000 | 71 | 209,155,148 | 206 | 78 | 100 | 100 |
| 3-66 | 208000 | 77 | 208,155,149 | 205 | 92 | 100 | 100 |
| 3-67 | 204000 | 80 | 208,156,148 | 204 | 93 | 100 | 100 |
| 3-68 | 202000 | 81 | 208,155,149 | 204 | 95 | 100 | 100 |
| 3-69 | 209000 | 82 | 208,155,149 | 204 | 97 | 100 | 100 |
| 3-70 | 210000 | 79 | 208,156,148 | 204 | 93 | 100 | 100 |
| 3-71 | 221000 | 68 | 205,151 | 203 | 78 | 100 | 90 |
| 3-72 | 236000 | 51 | 205,151 | 203 | 64 | 100 | 84 |
| 3-73 | 214000 | 58 | 206,154 | 202,152 | 62 | 100 | 89 |
| 3-74 | 214000 | 71 | 206,153 | 201,153 | 80 | 100 | 88 |
| 3-75 | 213000 | 77 | 205,153 | 201 | 88 | 100 | 88 |
| 3-76 | 218000 | 81 | 205,153 | 201 | 92 | 100 | 88 |
| 3-77 | 216000 | 83 | 203,154 | 200 | 93 | 100 | 85 |
| 3-78 | 211000 | 83 | 205, 155 | 201 | 94 | 100 | 86 |

(continued)

| Stereocomplex polylactic acid resin composition (Z) produced from D-lactic acid oligomer (y'1) and L-lactic acid polymer(x1) DSC measurement: Retention temperature 240°C, Retention time 5 min | | | | | | | |
|---|---|---|---|---|---|---|---|
| Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-79 | 211000 | 81 | 204,154 | 201 | 88 | 100 | 87 |
| 3-80 | 230000 | 71 | 202,151 | 200 | 77 | 100 | 75 |
| 3-81 | 243000 | 53 | 202,151 | 200,151 | 61 | 100 | 70 |
| 3-82 | 214000 | 59 | 209,153 | 205,253 | 64 | 100 | 89 |
| 3-83 | 216000 | 73 | 208,153 | 205,154 | 80 | 100 | 88 |
| 3-84 | 216000 | 79 | 208,153 | 204 | 88 | 100 | 88 |
| 3-85 | 218000 | 82 | 208,153 | 204 | 93 | 100 | 86 |
| 3-86 | 215000 | 83 | 205,155 | 202 | 93 | 100 | 86 |
| 3-87 | 211000 | 84 | 205,156 | 202 | 95 | 100 | 85 |
| 3-88 | 212000 | 81 | 205,156 | 202 | 88 | 100 | 86 |
| 3-89 | 226000 | 71 | 204,150 | 202 | 77 | 100 | 74 |
| 3-90 | 242000 | 54 | 204,151 | 201,150 | 61 | 100 | 71 |

Table 8

| Stereocomplex polylactic acid resin composition (Z) produced from L-lactic acid oligomer and D-lactic acid polymer (Y1) DSC measurement: Retention temperature 240°C, Retention time 1 min | | | | | | | |
|---|---|---|---|---|---|---|---|
| Compar. Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-1 | 204000 | 55 | 211,175,161 | 204,167 | 55 | 66 | 81 |
| 3-2 | 191000 | 45 | 210,151 | 204,175,153 | 51 | 90 | 83 |
| 3-3 | 209000 | 51 | 212,175,161 | 205,167 | 51 | 62 | 84 |
| 3-4 | 198000 | 42 | 211,151 | 205,175,153 | 50 | 90 | 81 |
| 3-5 | 207000 | 49 | 214,175,162 | 207,169 | 51 | 60 | 97 |
| 3-6 | 196000 | 40 | 213,153 | 206,175,153 | 48 | 90 | 91 |
| 3-7 | 208000 | 49 | 210,175,160 | 204,167 | 50 | 61 | 81 |
| 3-8 | 195000 | 41 | 208,151 | 203,174,153 | 49 | 88 | 78 |
| 3-9 | 132000 | 61 | 201,175,162,144 | 196,152 | 73 | 95 | 35 |
| 3-10 | 143000 | 60 | 200,174,162,145 | 195,155 | 71 | 94 | 30 |

Table 9

| Stereocomplex polylactic acid resin composition (Z) produced from D-lactic acid oligomer and L-lactic acid polymer (X1) DSC measurement: Retention temperature 240°C, Retention time 1 min | | | | | | | |
|---|---|---|---|---|---|---|---|
| Compar. Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-11 | 209000 | 55 | 207,152 | 204,151 | 53 | 62 | 80 |
| 3-12 | 238000 | 45 | 204,149 | 201,151 | 50 | 95 | 77 |
| 3-13 | 214000 | 51 | 208,153 | 205, 151 | 50 | 58 | 81 |
| 3-14 | 269000 | 42 | 203,152 | 202,150 | 47 | 94 | 80 |
| 3-15 | 209000 | 49 | 209,155,149 | 206,151 | 48 | 58 | 92 |
| 3-16 | 240000 | 40 | 204,151 | 202,151 | 44 | 91 | 92 |
| 3-17 | 210000 | 50 | 206,152 | 203, 151 | 49 | 58 | 80 |
| 3-18 | 256000 | 41 | 202,152 | 201,151 | 45 | 93 | 78 |
| 3-19 | 125000 | 61 | 196,154 | 194,153 | 71 | 94 | 34 |
| 3-20 | 136000 | 63 | 195,154 | 199,153 | 72 | 94 | 32 |

Table 10

| Stereocomplex polylactic acid resin composition (Z) produced from L-lactic acid oligomer and D-lactic acid polymer (Y1) DSC measurement: Retention temperature 240°C, Retention time 5 min | | | | | | | |
|---|---|---|---|---|---|---|---|
| Compar. EX. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-1 | 204000 | 55 | 211,175,161 | 204,167 | 55 | 96 | 77 |
| 3-2 | 191000 | 45 | 210,151 | 204 | 51 | 100 | 70 |
| 3-3 | 209000 | 51 | 212,175,160 | 205,167 | 51 | 95 | 80 |
| 3-4 | 198000 | 42 | 211,151 | 205 | 50 | 100 | 68 |
| 3-5 | 207000 | 49 | 214,175,162 | 207,169 | 51 | 93 | 89 |
| 3-6 | 196000 | 40 | 213,154 | 206 | 48 | 100 | 80 |
| 3-7 | 208000 | 49 | 210,174,160 | 204,167 | 50 | 93 | 78 |
| 3-8 | 195000 | 40 | 208,151 | 203 | 48 | 100 | 65 |
| 3-9 | 132000 | 61 | 201,174,161,146 | 195 | 73 | 100 | 29 |
| 3-10 | 143000 | 60 | 200,173,162,145 | 193 | 71 | 100 | 25 |

Table 11

| Stereocomplex polylactic acid resin composition (Z) produced from D-lactic acid oligomer and L-lactic acid polymer (X1) DSC measurement: Retention temperature 240°C, Retention time 5 min | | | | | | | |
|---|---|---|---|---|---|---|---|
| Compar. Ex. | Weight average molecular weight (Mw) | Stereo Crystallization ratio (Cr) [%] | Melting point (Tm) °C | | Stereo crystal rate (S) % | | Mw retention [%] |
| | | | 1st heating process | 2nd heating process | 1st heating process | 2nd heating process | |
| 3-11 | 209000 | 55 | 207,152 | 204,151 | 53 | 94 | 75 |
| 3-12 | 238000 | 45 | 204,150 | 201 | 50 | 92 | 63 |
| 3-13 | 214000 | 51 | 208,153 | 205,151 | 50 | 92 | 78 |
| 3-14 | 269000 | 42 | 203,152 | 202,150 | 47 | 94 | 66 |
| 3-15 | 209000 | 49 | 209,156,150 | 206,151 | 48 | 90 | 88 |
| 3-16 | 240000 | 40 | 204,151 | 202,151 | 44 | 91 | 78 |
| 3-17 | 210000 | 50 | 206,153 | 203,151 | 48 | 90 | 76 |
| 3-18 | 256000 | 40 | 201,152 | 200,151 | 45 | 91 | 63 |
| 3-19 | 125000 | 61 | 197,154 | 194 | 71 | 100 | 27 |
| 3-20 | 136000 | 63 | 195,153 | 193 | 72 | 100 | 25 |

As is clear from Tables 4 to 11, the stereocomplex polylactic acid resin composition (Z) of the invention [3] satisfies a high stereo crystal rate (S) and high heat stability (Mw retention) simultaneously.

In the stereocomplex polylactic acid resin composition (Z) of the invention [3], as is clear from Figures 1 and 2, the polymer (X1) or (Y1) retains the molecular weight distribution thereof. Further, the oligomer (x'1 ) or (y'1) forms an amide bond together with the polyisocyanate compound to gain a high molecular weight, thereby producing a polylactic acid-based resin having the almost same weight average molecular weight as that of the polymer (X1) or (Y1). As a result, the stereocomplex polylactic acid resin composition (Z) having the almost same molecular weight as that of the polymer (X1) or (Y1) is formed. The stereocomplex polylactic acid resin composition (Z) of the invention [3] can be produced at a relatively low temperature for a short period of time.

## Claims

1. A polylactic acid-based resin (I) which is obtainable by allowing a polyisocyanate compound to react with a mixture of a poly(L-lactic acid) in which the percentage of the terminal functional group which is a carboxyl group exceeds 50% and a poly(D-lactic acid) in which the percentage of the terminal functional group which is a carboxyl group exceeds 50% , and which comprises a constituting unit represented by the following formula (1).

[Chemical formula 1]

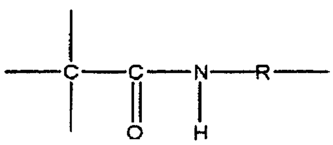

(1)

(in the formula (1), R is a polyisocyanate residue and represents an aliphatic hydrocarbon group having 1 to 20 carbon atoms, a hydrocarbon group having an alicyclic structure and 3 to 20 carbon atoms or a hydrocarbon group having an aromatic ring and 6 to 20 carbon atoms.)

2. The polylactic acid-based resin (I) according to claim 1 wherein in each of the poly (L-lactic acid) and poly (D-lactic acid), the percentage of the terminal functional group which is a carboxyl group is 85% or more.

3. The polylactic acid-based resin (I) according to claim 1 or 2 wherein the polyisocyanate compound is an aliphatic diisocyanate compound.

4. A process for producing the polylactic acid-based resin (I) as claimed in claim 1 which process comprises a step of allowing a polyisocyanate compound to react with a mixture at least comprising a poly (L-lactic acid) in which the percentage of the terminal functional group which is a carboxyl group exceeds 50% and a poly (D-lactic acid) in which the percentage of the terminal functional group which is a carboxyl group exceeds 50%.

5. The process for producing the polylactic acid-based resin (I) according to claim 4 wherein the polyisocyanate compound is an aliphatic diisocyanate compound.

6. The process for producing the polylactic acid-based resin (I) according to claim 4 or 5 which process comprises a step of allowing the polyisocyanate compound to react with the mixture in the presence of an amidation catalyst.

7. The process for producing the polylactic acid-based resin (I) according to claim 6 wherein the amidation catalyst comprises at least one metal selected from the group consisting of metals in Groups 1, 2 and 3 in the Periodic Table.

8. The process for producing the polylactic acid-based resin (I) according to claim 6 wherein the amidation catalyst comprises magnesium or calcium.

9. A polylactic acid resin composition (C) comprising a polylactic acid resin (A-1) comprising a L-lactic acid as a main component and a polylactic acid resin (A-2) comprising a D-lactic acid as a main component wherein at least one of the polylactic acid resins (A-1) and (A-2) is a polylactic acid resin (B) which has an amide bond and is obtainable by allowing a polyisocyanate to react with a lactic acid oligomer (a-1) comprising a L-lactic acid as a main component or a lactic acid oligomer (a-2) comprising a D-lactic acid as a main component.

10. The polylactic acid resin composition (C) according to claim 9 wherein the polylactic acid resin (A-1) comprising a L-lactic acid as a main component and the polylactic acid resin (A-2) comprising a D-lactic acid as a main component each have a weight average molecular weight of 70,000 to 500,000.

11. The polylactic acid resin composition (C) according to claim 9 or 10 wherein the lactic acid oligomer (a-1) and the lactic acid oligomer (a-2) each have a weight average molecular weight of 5,000 to 100,000.

12. The polylactic acid resin composition (C) according to any one of claims 9 to 11 wherein the polyisocyanate is an aliphatic diisocyanate.

13. The polylactic acid resin composition (C) according to any one of claims 9 to 12 wherein the proportion of a melting peak having a temperature of not lower than 195°C derived from the polylactic acid resin is not less than 70 % in a heating process in measurement by a differential scanning calorimeter (DSC).

14. A stereocomplex polylactic acid resin composition (Z) having a weight average molecular weight of 70, 000 to 500,000 and satisfying following properties (i) to (iv):

(i) the stereo crystallization ratio is not less than 51%, in measuring at a retention temperature of 240°C and a retention time of 1 minute by a differential scanning calorimeter (DSC),
(ii) the stereo crystal rate (S) in the first heating process is not less than 60%,
(iii) the stereo crystal rate (S) in the second heating process is not less than 88% and
(iv) the retention rate of the weight average molecular weight (Mw) after the second heating process is not less than 77%.

15. A stereocomplex polylactic acid resin composition (Z) having a weight average molecular weight of 70, 000 to 500, 000 and satisfying following properties (i') to (iv'):

(i') the stereo crystallization ratio is not less than 51%, in measuring at a retention temperature of 240°C and a retention time of 5 minute by a differential scanning calorimeter (DSC),
(ii') the stereo crystal rate (S) in the first heating process is not less than 60%,
(iii') the stereo crystal rate (S) in the second heating process is not less than 95% and
(iv') the retention rate of the weight average molecular weight (Mw) after the second heating process is not less

than 70%.

16. The stereocomplex polylactic acid resin composition (Z) according to claim 14 or 15 obtainable by allowing a polyisocyanate compound to react with
a mixture which comprises an oligomer (x'1) in which the main repeating unit is a L-lactic acid and in which the percentage of the terminal functional group which is a carboxyl group exceeds 50% and a polymer (Y1) having a D-lactic acid as a main repeating unit and having a molecular weight higher than that of the oligomer (x'1), or
a mixture which comprises an oligomer (y'1) in which the main repeating unit is a D-lactic acid and in which the percentage of the terminal functional group which is a carboxyl group exceeds 50% and a polymer (X1) having a L-lactic acid as a main repeating unit and having a molecular weight higher than that of the oligomer (y'1).

17. A process for producing a stereocomplex polylactic acid resin composition which process comprises a step of allowing a polyisocyanate compound to react with
a mixture which comprises 30 to 300 parts by weight of an oligomer (x'1) in which the main repeating unit is a L-lactic acid and in which the percentage of the terminal functional group which is a carboxyl group exceeds 50% and 100 parts by weight of a polymer (Y1) having a D-lactic acid as a main repeating unit and having a molecular weight higher than that of the oligomer (x'1), or
a mixture which comprises 30 to 300 parts by weight of an oligomer (y'1) in which the main repeating unit is a D-lactic acid and in which the percentage of the terminal functional group which is a carboxyl group exceeds 50% and 100 parts by weight of a polymer (X1) having a L-lactic acid as a main repeating unit and having a molecular weight higher than that of the oligomer (y'1).

18. A molded article comprising at least one selected from the group of consisting of the polylactic acid-based resin (I) as claimed in any one of claims 1 to 3, the polylactic acid resin composition (C) as claimed in any one of claims 9 to 13 and the stereocomplex polylactic acid resin composition (Z) as claimed in any one of claims 14 to 16.

**Patentansprüche**

1. Polymilchsäure-basiertes Harz (I), das erhältlich ist, indem eine Polyisocyanatverbindung mit einer Mischung aus einer Poly(L-milchsäure), in welcher der Prozentsatz der terminalen funktionellen Gruppe, die eine Carboxylgruppe ist, 50 % übersteigt, und einer Poly(D-milchsäure), in welcher der Prozentsatz der terminalen funktionellen Gruppe, die eine Carboxylgruppe ist, 50 % übersteigt, zur Reaktion gebracht wird und das eine konstituierende Einheit der nachstehenden Formel (1) umfasst:

[Chemische Formel 1]

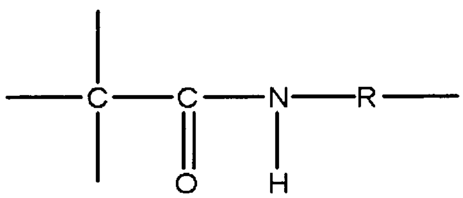

(1)

(in der Formel (1) ist R ein Polyisocyanatrest und stellt eine aliphatische Kohlenwasserstoffgruppe mit 1 bis 20 Kohlenstoffatomen, eine Kohlenwasserstoffgruppe mit einer alicyclischen Struktur und 3 bis 20 Kohlenstoffatomen oder eine Kohlenwasserstoffgruppe mit einem aromatischen Ring und 6 bis 20 Kohlenstoffatomen dar).

2. Polymilchsäure-basiertes Harz (I) gemäss Anspruch 1, wobei in der Poly(L-milchsäure) und der Poly(D-milchsäure), der Prozentsatz der terminalen funktionellen Gruppe, die eine Carboxylgruppe ist, jeweils 85 % oder mehr beträgt.

3. Polymilchsäure-basiertes Harz (I) gemäss Anspruch 1 oder 2, wobei die Polyisocyanatverbindung eine aliphatische Diisocyanatverbindung ist.

4. Verfahren zur Herstellung von Polymilchsäure-basiertem Harz (I) gemäss Anspruch 1, wobei das Verfahren einen Schritt umfasst, in dem eine Polyisocyanatverbindung mit einer Mischung zur Reaktion gebracht wird, die zumindest eine Poly(L-milchsäure), in welcher der Prozentsatz der terminalen funktionellen Gruppe, die eine Carboxylgruppe

ist, 50 % übersteigt, und eine Poly(D-milchsäure), in welcher der Prozentsatz der terminalen funktionellen Gruppe, die eine Carboxylgruppe ist, 50 % übersteigt, umfasst.

**5.** Verfahren zur Herstellung von Polymilchsäure-basiertem Harz (I) gemäss Anspruch 4, wobei die Polyisocyanatverbindung eine aliphatische Diisocyanatverbindung ist.

**6.** Verfahren zur Herstellung von Polymilchsäure-basiertem Harz (I) gemäss Anspruch 4 oder 5, wobei das Verfahren einen Schritt umfasst, in dem die Polyisocyanatverbindung mit der Mischung in Gegenwart eines Amidierungskatalysators zur Reaktion gebracht wird.

**7.** Verfahren zur Herstellung von Polymilchsäure-basiertem Harz (I) gemäss Anspruch 6, wobei der Amidierungskatalysator zumindest ein Metall, ausgewählt aus der Gruppe bestehend aus Metallen der Gruppen 1, 2 und 3 des Periodensystems, umfasst.

**8.** Verfahren zur Herstellung von Polymilchsäure-basiertem Harz (I) gemäss Anspruch 6, wobei der Amidierungskatalysator Magnesium oder Calcium umfasst.

**9.** Polymilchsäureharz-Zusammensetzung (C), umfassend ein Polymilchsäureharz (A-1), das eine L-Milchsäure als Hauptkomponente umfasst, und ein Polymilchsäureharz (A-2), das eine D-Milchsäure als Hauptkomponente umfasst, wobei zumindest eines der Polymilchsäureharze (A-1) und (A-2) ein Polymilchsäureharz (B) ist, das eine Amidbindung aufweist und erhältlich ist, indem ein Polyisocyanat mit einem Milchsäureoligomer (a-1), das eine L-Milchsäure als Hauptkomponente umfasst, oder einem Milchsäureoligomer (a-2), das eine D-Milchsäure als Hauptkomponente umfasst, zur Reaktion gebracht wird.

**10.** Polymilchsäureharz-Zusammensetzung (C) gemäss Anspruch 9, wobei das Polymilchsäureharz (A-1), das eine L-Milchsäure als Hauptkomponente umfasst, und das Polymilchsäureharz (A-2), das eine D-Milchsäure als Hauptkomponente umfasst, jeweils ein gewichtsgemitteltes Molekulargewicht von 70.000 bis 500.000 aufweisen.

**11.** Polymilchsäureharz-Zusammensetzung (C) gemäss Anspruch 9 oder 10, wobei das Milchsäureoligomer (a-1) und das Milchsäureoligomer (a-2) jeweils ein gewichtsgemitteltes Molekulargewicht von 5.000 bis 100.000 aufweisen.

**12.** Polymilchsäureharz-Zusammensetzung (C) gemäss irgendeinem der Ansprüche 9 bis 11, wobei das Polyisocyanat ein aliphatisches Diisocyanat ist.

**13.** Polymilchsäureharz-Zusammensetzung (C) gemäss irgendeinem der Ansprüche 9 bis 12, wobei der Anteil des Schmelzpeaks mit einer Temperatur von nicht weniger als 195°C, der von dem Polymilchsäureharz abgeleitet ist, in einem Erwärmungsverfahren bei einer Messung mit einem Differentialscanningkalorimeter (DSC) nicht weniger als 70 % beträgt.

**14.** Stereokomplex-Polymilchsäureharz-Zusammensetzung (Z), die ein gewichtsgemitteltes Molekulargewicht von 70.000 bis 500.000 aufweist und die nachstehenden Eigenschaften (i) bis (iv) erfüllt:

(i) das Stereokristallisationsverhältnis beträgt nicht weniger als 51 %, gemessen bei einer Retentionstemperatur von 240°C und einer Retentionszeit von 1 Minute durch ein Differentialscanningkalorimeter (DSC),
(ii) der Stereokristallanteil (S) im ersten Erwärmungsverfahren beträgt nicht weniger als 60 %,
(iii) der Stereokristallanteil (S) im zweiten Erwärmungsverfahren beträgt nicht weniger als 88 % und
(iv) der Erhaltungsanteil des gewichtsgemittelten Molekulargewichts (Mw) nach dem zweiten Erwärmungsprozess beträgt nicht weniger als 77 %.

**15.** Stereokomplex-Polymilchsäureharz-Zusammensetzung (Z), die ein gewichtsgemitteltes Molekulargewicht von 70.000 bis 500.000 aufweist und die nachstehenden Eigenschaften (i') bis (iv') erfüllt:

(i') das Stereokristallisationsverhältnis beträgt nicht weniger als 51 %, gemessen bei einer Retentionstemperatur von 240°C und einer Retentionszeit von 5 Minuten durch ein Differentialscanningkalorimeter (DSC),
(ii') der Stereokristallanteil (S) im ersten Erwärmungsverfahren beträgt nicht weniger als 60 %,
(iii') der Stereokristallanteil (S) im zweiten Erwärmungsverfahren beträgt nicht weniger als 95 % und
(iv') der Erhaltungsanteil des gewichtsgemittelten Molekulargewichts (Mw) nach dem zweiten Erwärmungsverfahren beträgt nicht weniger als 70 %.

16. Stereokomplex-Polymilchsäureharz-Zusammensetzung (Z) gemäss Anspruch 14 oder 15, die erhältlich ist, indem eine Polyisocyanatverbindung mit
einer Mischung, die ein Oligomer (x'1), in welchem die Hauptwiederholungseinheit eine L-Milchsäure ist und in welchem der Prozentsatz der terminalen funktionellen Gruppe, die eine Carboxylgruppe ist, 50 % übersteigt, und ein Polymer (Y1) umfasst, das eine D-Milchsäure als Hauptwiederholungseinheit und ein Molekulargewicht aufweist, das höher ist als das des Oligomers (x'1), , oder
einer Mischung, die ein Oligomer (y'1) in welchem die Hauptwiederholungseinheit eine D-Milchsäure ist und in welchem der Prozentsatz der terminalen funktionellen Gruppe, die eine Carboxylgruppe ist, 50 % übersteigt, und ein Polymer (X1) umfasst, das eine L-Milchsäure als Hauptwiederholungseinheit und ein Molekulargewicht aufweist, das höher ist als das des Oligomers (y'1),
zur Reaktion gebracht wird.

17. Verfahren zur Herstellung einer Stereokomplex-Polymilchsäureharz-Zusammensetzung, wobei das Verfahren einen Schritt umfasst, in dem eine Polyisocyanatverbindung mit
einer Mischung, die 30 bis 300 Gew.-Teile des Oligomers (x'1) in welchem die Hauptwiederholungseinheit eine L-Milchsäure ist und in welchem der Prozentsatz der terminalen funktionellen Gruppe, die eine Carboxylgruppe ist, 50 % übersteigt, und 100 Gew.-Teile des Polymers (Y1) umfasst, das eine D-Milchsäure als Hauptwiederholungseinheit und ein Molekulargewicht aufweist, das höher ist als das des Oligomers (x'1), oder
einer Mischung, die 30 bis 300 Gew.-Teile des Oligomers (y'1), in welchem die Hauptwiederholungseinheit eine D-Milchsäure ist und in welchem der Prozentsatz der terminalen funktionellen Gruppe, die eine Carboxylgruppe ist, 50 % übersteigt, und 100 Gew.-Teile des Polymers (X1) umfasst, das eine L-Milchsäure als Hauptwiederholungseinheit und ein Molekulargewicht aufweist, das höher ist als das des Oligomers (y'1),
zur Reaktion gebracht wird.

18. Geformter Gegenstand, umfassend zumindest eines, ausgewählt aus der Gruppe bestehend aus einem Polymilchsäure-basierten Harz (I) gemäss irgendeinem der Ansprüche 1 bis 3, einer Polymilchsäureharz-Zusammensetzung (C) gemäss irgendeinem der Ansprüche 9 bis 13 und der Stereokomplex-Polymilchsäureharz-Zusammensetzung (Z) gemäss irgendeinem der Ansprüche 14 bis 16.

## Revendications

1. Résine à base d'acide polylactique (I) qui peut être obtenue en laissant un composé polyisocyanate réagir avec un mélange d'un acide poly(L-lactique) dans lequel le pourcentage du groupe fonctionnel terminal qui est un groupe carboxyle dépasse 50 % et d'un acide poly(D-lactique) dans lequel le pourcentage du groupe fonctionnel terminal qui est un groupe carboxyle dépasse 50 %, et qui comprend un motif constitutif représenté par la formule (1) suivante :

[Formule chimique 1]

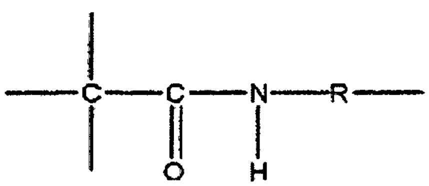

(1)

[dans la formule (1), R est un résidu polyisocyanate et représente un groupe hydrocarbure aliphatique ayant 1 à 20 atomes de carbone, un groupe hydrocarbure ayant une structure alicyclique et 3 à 20 atomes de carbone, ou un groupe hydrocarbure ayant un cycle aromatique et 6 à 20 atomes de carbone.)

2. Résine à base d'acide polylactique (I) selon la revendication 1, dans laquelle pour chacun de l'acide poly(L-lactique) et l'acide poly(D-lactique), le pourcentage du groupe fonctionnel terminal qui est un groupe carboxyle est de 85 % ou plus.

3. Résine à base d'acide polylactique (I) selon la revendication 1 ou 2, dans laquelle le composé polyisocyanate est un composé diisocyanate aliphatique.

4. Procédé de production de la résine à base d'acide polylactique (I) selon la revendication 1, ledit procédé comprenant

une étape consistant à laisser un composé polyisocyanate réagir avec un mélange comprenant au moins un acide poly(L-lactique) dans lequel le pourcentage du groupe fonctionnel terminal qui est un groupe carboxyle dépasse 50 % et un acide poly(D-lactique) dans lequel le pourcentage du groupe fonctionnel terminal qui est un groupe carboxyle dépasse 50%.

**5.** Procédé de production de la résine à base d'acide polylactique (I) selon la revendication 4, dans lequel le composé polyisocyanate est un composé diisocyanate aliphatique.

**6.** Procédé de production de la résine à base d'acide polylactique (I) selon la revendication 4 ou 5, ledit procédé comprenant une étape consistant à laisser le composé polyisocyanate réagir avec le mélange en présence d'un catalyseur d'amidation.

**7.** Procédé de production de la résine à base d'acide polylactique (I) selon la revendication 6, dans lequel le catalyseur d'amidation comprend au moins un métal choisi dans le groupe constitué de métaux des groupes 1, 2 et 3 dans le tableau périodique.

**8.** Procédé de production de la résine à base d'acide polylactique (I) selon la revendication 6, dans lequel le catalyseur d'amidation comprend du magnésium ou du calcium.

**9.** Composition de résine d'acide polylactique (C) comprenant une résine d'acide polylactique (A-1) comprenant un acide L-lactique comme composant principal et une résine d'acide polylactique (A-2) comprenant un acide D-lactique comme composant principal, dans laquelle au moins l'une des résines d'acide polylactique (A-1) et (A-2) est une résine d'acide polylactique (B) qui a une liaison amide et peut être obtenue en laissant un polyisocyanate réagir avec un oligomère d'acide lactique (a-1) comprenant un acide L-lactique comme composant principal ou un oligomère d'acide lactique (a-2) comprenant un acide D-lactique comme composant principal.

**10.** Composition de résine d'acide polylactique (C) selon la revendication 9, dans laquelle la résine d'acide polylactique (A-1) comprenant un acide L-lactique comme composant principal et la résine d'acide polylactique (A-2) comprenant un acide D-lactique comme composant principal ont chacune un poids moléculaire moyen en poids de 70 000 à 500 000.

**11.** Composition de résine d'acide polylactique (C) selon la revendication 9 ou 10, dans laquelle l'oligomère d'acide lactique (a-1) et l'oligomère d'acide lactique (a-2) ont chacun un poids moléculaire moyen en poids de 5000 à 100 000.

**12.** Composition de résine d'acide polylactique (C) selon l'une quelconque des revendications 9 à 11, dans laquelle le polyisocyanate est un diisocyanate, aliphatique.

**13.** Composition de résine d'acide polylactique (C) selon l'une quelconque des revendications 9 à 12, dans laquelle la proportion d'un pic de fusion ayant une température non inférieure à 195 °C dérivée de la résine d'acide polylactique n'est pas inférieure à 70 % dans un processus de chauffage lors d'une mesure par un calorimètre à balayage différentiel (DSC).

**14.** Composition de résine d'acide polylactique stéréocomplexe (Z) ayant un poids moléculaire moyen en poids de 70 000 à 500 000 et satisfaisant aux propriétés (i) à (iv) suivantes :

(i) le rapport de stéréo-cristallisation n'est pas inférieur à 51 % lors d'une mesure à une température de maintien de 240 °C et un temps de maintien de 1 minute par un calorimètre à balayage différentiel (DSC),
(ii) le taux de stéréo-cristal (S) dans le premier processus de chauffage n'est pas inférieur à 60 %,
(iii) le taux de stéréo-cristal (S) dans le deuxième processus de chauffage n'est pas inférieur à 88 %, et
(iv) le taux de maintien du poids moléculaire moyen en poids (Mw) après le deuxième processus de chauffage n'est pas inférieur à 77 %.

**15.** Composition de résine d'acide polylactique stéréocomplexe (Z) ayant un poids moléculaire moyen en poids de 70 000 à 500 000 et satisfaisant aux propriétés (i') à (iv') suivantes :

(i') le rapport de stéréo-cristallisation n'est pas inférieur à 51 %, lors d'une mesure à une température de maintien de 240 °C et un temps de maintien de 5 minutes par un calorimètre à balayage différentiel (DSC),
(ii') le taux de stéréo-cristal (S) dans le premier processus de chauffage n'est pas inférieur à 60 %,

(iii') le taux de stéréo-cristal (S) dans le deuxième processus de chauffage n'est pas inférieur à 95 %, et
(iv') le taux de maintien du poids moléculaire moyen en poids (Mw) après le deuxième processus de chauffage n'est pas inférieur à 70 %.

**16.** Composition de résine d'acide polylactique stéréocomplexe (Z) selon la revendication 14 ou 15 pouvant être obtenue en laissant un composé polyisocyanate réagir avec
un mélange qui comprend un oligomère (x'1) dans lequel le motif répétitif principal est un acide L-lactique et dans lequel le pourcentage du groupe fonctionnel terminal qui est un groupe carboxyle dépasse 50 %, et un polymère (Y1) ayant un acide D-lactique comme motif répétitif principal et ayant un poids moléculaire supérieur à celui de l'oligomère (x'1), ou
un mélange qui comprend un oligomère (y'1) dans lequel le motif répétitif principal est un acide D-lactique et dans lequel le pourcentage du groupe fonctionnel terminal qui est un groupe carboxyle dépasse 50 %, et un polymère (X1) ayant un acide L-lactique comme motif répétitif principal et ayant un poids moléculaire supérieur à celui de l'oligomère (y'1).

**17.** Procédé de production d'une composition de résine d'acide polylactique stéréocomplexe, ledit procédé comprenant une étape consistant à laisser un composé polyisocyanate réagir avec
un mélange qui comprend 30 à 300 parties en poids d'un oligomère (x'1) dans lequel le motif répétitif principal est un acide L-lactique et dans lequel le pourcentage du groupe fonctionnel terminal qui est un groupe carboxyle dépasse 50 %, et 100 parties en poids d'un polymère (Y1) ayant un acide D-lactique comme motif répétitif principal et ayant un poids moléculaire supérieur à celui de l'oligomère (x'1), ou
un mélange qui comprend 30 à 300 parties en poids d'un oligomère (y'1) dans lequel le motif répétitif principal est un acide D-lactique et dans lequel le pourcentage du groupe fonctionnel terminal qui est un groupe carboxyle dépasse 50 %, et 100 parties en poids d'un polymère (X1) ayant un acide L-lactique comme motif répétitif principal et ayant un poids moléculaire supérieur à celui de l'oligomère (y'1).

**18.** Article moulé comprenant au moins l'une choisi dans le groupe constitué de la résine à base d'acide polylactique (I) selon l'une quelconque des revendications 1 à 3, la composition de résine d'acide polylactique (C) selon l'une quelconque des revendications 9 à 13 et la composition de résine d'acide polylactique stéréocomplexe (Z) selon l'une quelconque des revendications 14 à 16.

[Fig. 1]

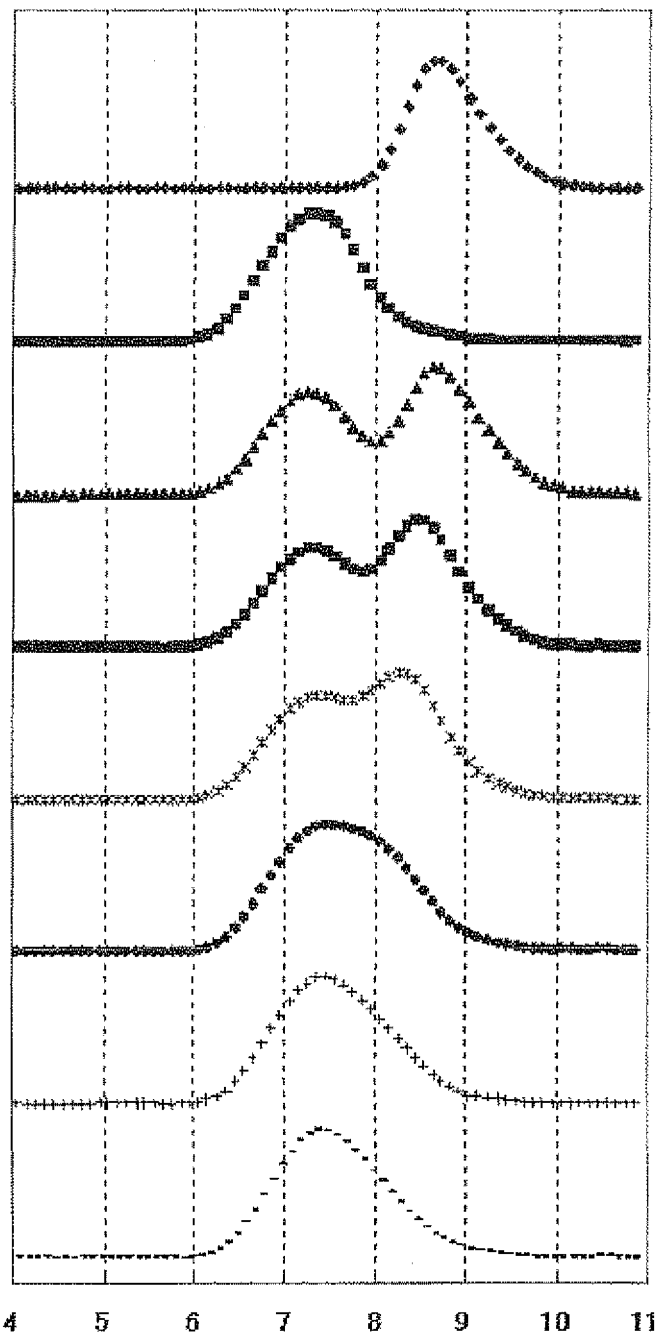


◆ L-lactic acid oligomer (Production example 3-2)
▪ D-lactic acid polymer (manufactured by Purac Inc.)
▲ 0 min before HDI addition
■ 5 min after HDI addition
＊ 10 min after HDI addition
✦ 20 min after HDI addition
\+ 30 min after HDI addition
. 40 min after HDI addition

[Fig.2]

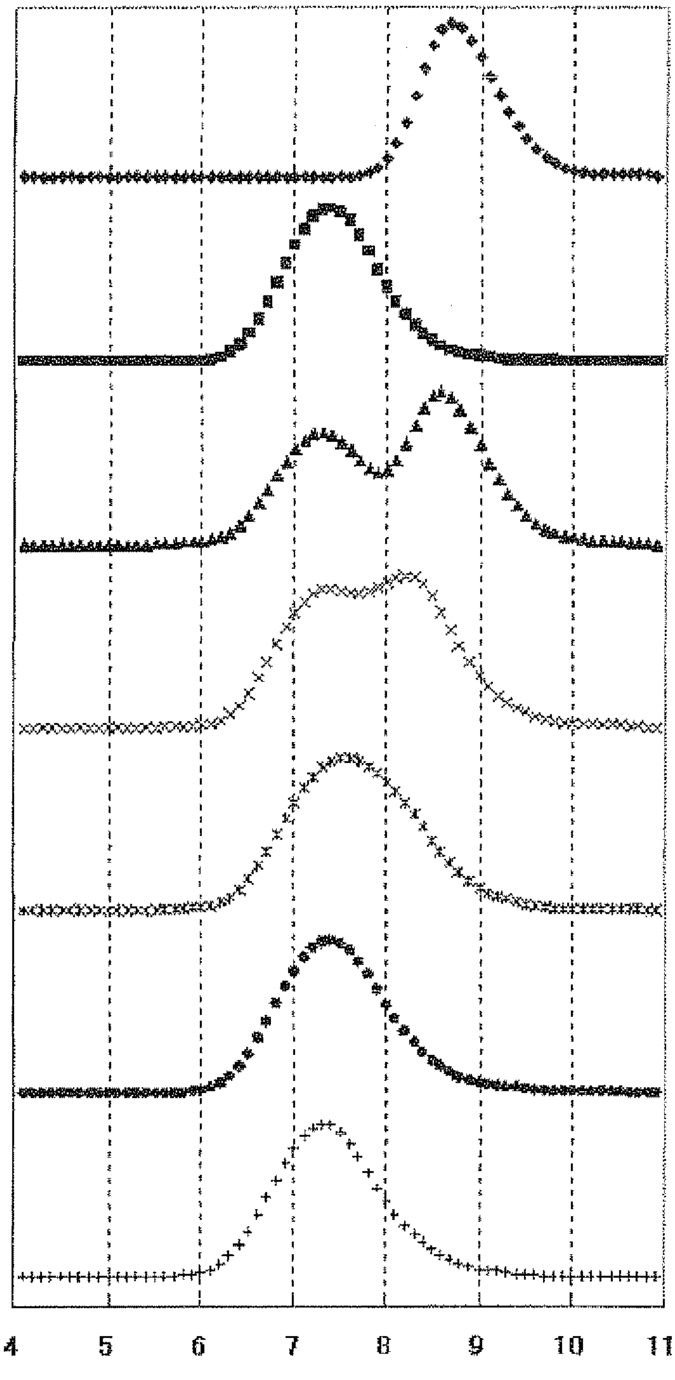


◆ D-lactic acid oligomer (Production example 3-8)
■ L-lactic acid polymer (manufactured by Mitsui Chemicals, Inc.)
▲ 0 min before HDI addition
x 5 min after HDI addition
* 10 min after HDI addition
. 20 min after HDI addition
+ 30 min after HDI addition

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S61198636321 A
- JP S631988241024 A
- JP 2000017163 A
- JP 2003238672 A
- JP 2006028336 A
- JP 2002356543 A
- JP 2007191548 A
- JP 2009040997 A
- JP 2008248022 A
- JP 2003192884 A
- JP 2007191630 A
- JP 2009249518 A
- JP 2006265486 A
- JP 3410075 B
- WO 200911047 A
- JP 2000302852 A
- JP 2001122954 A
- US 2941956 A
- JP S47197233279 B


### Non-patent literature cited in the description


- *Macromolecules,* 1991, vol. 24, 5651
- *Makromol. Chem.,* 1990, vol. 191, 481
- *J. Org. Chem.,* 1963, vol. 28, 2069-2075
- *Chemical Review,* 1981, vol. 81 (4), 619-621